# EUROPEAN PATENT SPECIFICATION

(11) **EP 1 646 681 B1**
(45) Date of publication and mention of the grant of the patent: **29.11.2006**
(21) Application number: 04766175.6
(22) Date of filing: 09.07.2004
(51) Int. Cl.: C08K 5/00

(54) **FLAME RETARDANT POLYLACTIC ACID**
FLAMMWIDRIGE POLYMILCHSÄURE
ACIDE POLYLACTIQUE NON INFLAMMABLE

(30) Priority: 18.07.2003 US 488340 P
(43) Date of publication of application: 19.04.2006
(73) Proprietor: Ciba Specialty Chemicals Holding Inc., 4057 Basel (CH)
(72) Inventor: CHIN, Hui, Katonah, NY 10536 (US)
(86) International application number: PCT/EP2004/051436
(87) International publication number: WO 2005/014706

(56) References cited:
- EP-A- 0 677 561
- EP-A- 1 304 352
- WO-A-99/00450
- PATENT ABSTRACTS OF JAPAN vol. 2000, no. 23, 10 February 2001 (2001-02-10) -& JP 2001 164463 A (NICCA CHEMICAL CO LTD; KANEBO LTD), 19 June 2001 (2001-06-19)

## Description

The instant invention pertains to a novel method of flame retarding polylactic acid by adding thereto a synergistic mixture of at least one sterically hindered amine stabilizer and at least one conventional flame retardant. The instant invention also pertains to polylactic acid fibers, films, molded articles and foamed articles that are stabilized against light, heat and oxygen and made flame retardant with the incorporation therein of at least one sterically hindered amine stabilizer and at least one conventional flame retardant.

### Background of the Invention

U.S. Pat. No. 5,096,950 discloses the co-use of certain NOR (N-alkoxy) hindered amines with a brominated Sb₂O₃-containing flame retardant in polypropylene.

U.S. Pat. No. 5,393,812 discloses polyolefin compositions which are made flame retardant by a combination of a halogenated hydrocarbyl phosphate or phosphonate ester flame retardant in combination with a alkoxyamine functional hindered amine.

U.S. Pat. No. 5,844,026 discloses polyolefin compositions comprising certain NOR hindered amines and certain traditional flame retardants.

U.S. Pat. No. 6,117,995 discloses that certain N-alkoxy hindered amines may be used as flame retardants for organic polymers.

U.S. Pat. No. 6,271,377 discloses polyolefin compositions that comprise N-hydroxyalkoxy hindered amines and a halogenated flame retardant.

U.S. Pat. No. 6,309,987 and equivalent WO 99/54530 teach polyolefin non-woven flame retardant fabrics that comprise N-alkoxyamines.

U.S. Pat. No. 6,262,161 discloses random interpolymers, for example polymers of ethylene and/or one or more α-olefin monomers with one or more vinyl aromatic monomers, with improved ignition resistance that comprises a filler and at least one other component which may be a hindered amine stabilizer.

A Revolutionary UV Stable Flame Retardant System for Polyolefins - R. Srinivasan, A. Gupta and D. Horsey, *Int. Conf. Addit. Polyolefins* **1998**, 69-83, teaches polyolefins comprising certain NOR hindered amines with halogen and phosphorus containing traditional flame retardants.

Advances in a Revolutionary Flame Retardant System for Polyolefins - R. Srinivasan, B. Rotzinger, *Polyolefins 2000, Int. Conf. Polyolefins* **2000,** 571-581, teaches polyolefins comprising certain NOR hindered amines with brominated and phosphorus containing flame retardants.

EP 0792911 A2, discloses polyolefin compositions that comprise alkoxyamine functional hindered amines and tris(trihalogenopentyl) phosphate flame retardants.

U.S. Pat. No. 6,472,456 and copending U.S. application No. 09/714,717, filed Nov. 16, 2000, disclose the use of certain N-alkoxy hindered amines as flame retardants.

EP 1038912 discloses specific hydrocarbyloxy hindered amine compounds as flame retardants.

Research Disclosure, Sept. 2000, No. 437087, June 2000, No. 434095 and Dec. 2000, No. 440128 also disclose the efficacy of certain hydrocarbyloxy hindered amine compounds as flame retardants.

The flame retardant (FR) market today is comprised of products which function to interfere with the combustion process by chemical and/or physical means. Mechanistically these FRs have been proposed to function during combustion of an article in either the gas phase, the condensed phase or both. The organohalogens are proposed to generate halogen species (e.g. HX) which interferes in the gas phase with free radical organic "fuel" from the polymer substrate. Synergists are proposed to react with HX to form additional chemical species which interfere with combustion in the gas phase, such as reaction of antimony oxide with HX to form antimony halide and water vapor. Antimony compounds such as antimony trioxide also act as a radical scavenger forming antimony halides. Thus, it can inhibit the propagation of the fire.

Although antimony compounds are efficient in terms of cost performance, it recently raised a lot of concern because of the toxicity of the byproducts which are formed during combustion in the presence of a halogenated flame retardant. Antimony oxides often contain trace amounts of arsenic compounds which are suspected carcinogens. Because of these ecological concerns, there is a motion to replace antimony trioxide in the present commercial flame retardant applications. However, it is very difficult to find an effective synergist which is both enviromentally friendly and efficient as far as the cost performance is concerned.

Another reason to add flame retardant additives is to prevent dripping during the application of the fire. Dripping during combustion is the process of the separation of parts of the polymer from the matrix in the shape of droplets. Most often, the droplets are flaming and are imposing tremendous danger for fire spread. It is a common measure to add fillers such as talc in large amounts to the polymer, with some negative consequences on the mechanical properties. Fillers sometimes used include calcium carbonate, magnesium carbonate, zinc borate, silicates, silicones, glass fibres, glass bulbs, asbestos, kaolin, mica, barium sulfate, calcium sulfate, metal oxides, hydrates and hydroxides such as zinc oxide, magnesium hydroxide, alumina trihydrate, silica, calcium silicate and magnesium silicate.

It has been found that polylactic acid polymers with good flame retardant properties are prepared when a sterically hindered amine stabilizer is added thereto together with a conventional organohalogen flame retardant, phosphorus containing flame retardant, isocyanurate flame retardant or melamine based flame retardant. With this combination, flame-retardant fillers or conventional fillers may be largely reduced or replaced. As the instant hindered amine compounds are active as stabilizers, the polymer compositions of the invention are efficiently protected from the deleterious effects of light, oxygen and/or heat.

### Detailed Disclosure

The instant invention pertains to a flame retardant polylactic acid polymer composition which comprises
a polylactic acid polymer substrate and a synergistic mixture of
(i) at least one sterically hindered amine stabilizer and
(ii) at least one conventional flame retardant selected from the group consisting of the organohalogen, phosphorus containing, isocyanurate and melamine based flame retardants.

Flame-retardant fillers are not required in order to improve the flame retardant properties and achieve a higher rating, e.g. in the UL-94 burning test (*infra*). Consequently, the compositions of the present invention may contain only minor amounts of flame-retardant fillers, e.g. less than 3%, for instance less than 1%, for example less than 0.1% by weight of the polylactic acid polymer component; for example, the present compositions are essentially free of flame-retardant fillers.

Flame-retardant fillers are known in the art and are selected from the group consisting of magnesium hydroxide, alumina trihydrate and zinc borate. Flame-retardant fillers are inorganic compounds employed for flame-retardant properties, and at high enough levels to be considered "filler".

If conventional fillers such as talc, calcium carbonate and the like are normally employed for instance for flow properties in order to reduce the spread of flaming droplets (not flame-retardant per se), such conventional fillers may also be reduced with the use of the present compositions. For instance, the present compositions may contain only minor amounts of conventional fillers, for example less than 3%, for instance less than 1%, for example less than 0.1% by weight of the polylactic acid polymer component; for example, the present compositions are essentially free of conventional fillers.

Further, the present invention allows for conventional fillers to take the place of more expensive flame-retardant fillers.

The present compositions meet flame retardant specifications while containing only minor amounts of antimony compounds such as Sb₂O₃, e.g. less than 1%, for instance less than 0.1% by weight of the polylactic acid component; for example, the present compositions are essentially free of antimony.

### Polylactic acid

Polylactic acids are polymers and copolymers as disclosed in U.S. Pat. Nos. 5,447,962, 5,484,881, 6,114,495 and 6,214,967, the relevant disclosures of which are hereby incorporated by reference.

Polylactic acid or a copolymer of lactic acid and hydroxycarboxylic acid for use in the invention is prepared by using lactic acid or lactide, namely a cyclic dimers of lactic acid, and hydroxycarboxylic acid as raw materials.

Exemplary hydroxycarboxylic adds include glycolic acid, hydroxybutyric acid, hydroxyvaleric acid, hydroxypentanoic acid, hydroxycaproic acid and hydroxyheptanoic acid. Specially, glycolic acid, 3-hydroxylactic acid, 4-hydroxylactic acid, 3-hydroxyvaleric acid or 6-hydroxy caproic acid is used preferably. In certain cases, other monomers can be suitably used as a mixture.

The lactic acid polymer may be prepared directly from lactic acid by dehydrating polycondensation or may be prepared by ring-opening polymerization of lactide.

When a low molecular weight polymer is permitted, the polymer is obtained by dehydrating condensation of lactic acid. When a high molecular weight polymer is required, the polymer is preferably obtained by ring-opening polymerization of lactide.

Lactides which can be used for the ring-opening polymerization are L-lactide, D-lactide, meso-lactide and a mixture of these lactides. A mixture of D- or L-lactide with a lactide having opposite optical activity is preferred. Mixing ratios, D- or L-lactide/optical antipode are between for example 95/5 to 50/50.

By polymerizing the pure optical isomers or different blends, polymers may be obtained which have different stereochemical structures, affecting their resilience and crystallinity and also their mechanical and thermal properties.

The polymerization degree of lactic acid-base polymer is for example in the range of from 150 to 20,000.

Polymerization can be carried out in the presence or absence of a solvent. In view of solvent recovery problem, bulk polymerization without solvent is preferred in industry.

A process for preparing lactic acid-based polymer by ring-opening polymerization of lactide and glycolide will be exemplified hereinafter.

The ring-opening polymerization is carried out in the presence of a catalyst. Catalysts which can be used are generally chloride or carboxylate of zinc or tin and include, for example, stannous octoate, tin tetrachloride, zinc chloride, titanium tetrachloride, iron chloride, boron trifluoride ether complex, aluminium chloride, antimony trifluoride, lead oxide and other polyvalent metal containing compounds. No particular restriction is imposed upon the polyvalent metals. Tin compounds and zinc compounds are preferably used. However, in the case of using the foam for biocompatible materials and food products, these metals must be selected in view of toxicity.

The amount of the catalyst used is for example in the range of from 0.001 to 0.1% by weight for lactide or for the total weight of lactide and glycolide.

Known chain extenders can be used for the polymerization. Preferred chain extenders are higher alcohols such as lauryl alcohol and hydroxy acids such as lactic acid and glycolic acid. The polymerization rate increases in the presence of a chain extender and the polymer can be obtained within a short time. The molecular weight of the polymer can also be controlled by varying the amount of the chain extender. However, too much of the chain extender tends to decrease the molecular weight of polymer formed. Hence, the amount of the chain extender is preferably 0.1 % by weight or less for lactide or for the total weight of lactide and glycolide.

Polymerization or copolymerization can be carried out in the presence or absence of a solvent. Bulk polymerization in a molten state of lactide or glycolide is preferably carried out in order to obtain high molecular weight polymer.

In the case of molten polymerization, the polymerization temperature may be generally above the melting point (around 90°C) of the monomer, lactide or lactide and glycolide. In the case of solution polymerization which uses solvents such as chloroform, polymerization can be carried out at temperatures below the melting point of lactide or lactide and glycolide. In any case, polymerization temperatures above 250°C are unfavorable because decomposition of the formed polymer may develop.

### Sterically Hindered Amine Stabilizers of Component (i)

The present hindered amines are for example monomeric compounds or are oligomeric or polymeric compounds.

The present sterically hindered amine stabilizers of component (i) are known in the art, and are for example of the formula 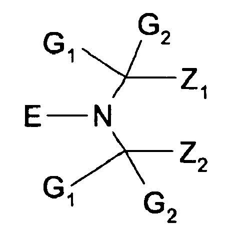 where
G₁ and G₂ are independently alkyl of 1 to 8 carbon atoms or are together pentamethylene,
Z₁ and Z₂ are each methyl, or Z₁ and Z₂ together form a linking moiety which may additionally be substituted by an ester, ether, amide, amino, carboxy or urethane group, and
E is oxyl, hydroxyl, alkoxy, cycloalkoxy, aralkoxy, aryloxy, -O-CO-OZ₃, -O-Si(Z₄)₃, -O-PO(OZ₅)₂ or -O-CH₂-OZ₆ where Z₃, Z₄, Z₅ and Z₆ are selected from the group consisting of hydrogen, an aliphatic, araliphatic and aromatic moiety; or E is -O-T-(OH)_{b},
T is a straight or branched chain alkylene of 1 to 18 carbon atoms, cycloalkylene of 5 to 18 carbon atoms, cycloalkenylene of 5 to 18 carbon atoms, a straight or branched chain alkylene of 1 to 4 carbon atoms substituted by phenyl or by phenyl substituted by one or two alkyl groups of 1 to 4 carbon atoms;
b is 1, 2 or 3 with the proviso that b cannot exceed the number of carbon atoms in T, and when b is 2 or 3, each hydroxyl group is attached to a different carbon atoms of T.
E is for example oxyl, hydroxyl, alkoxy, cycloalkoxy or aralkoxy. For instance, E is methoxy, propoxy, cyclohexyloxy or octyloxy.

The present sterically hindered amine stabilizers of component (i) are for example of the formula A-R 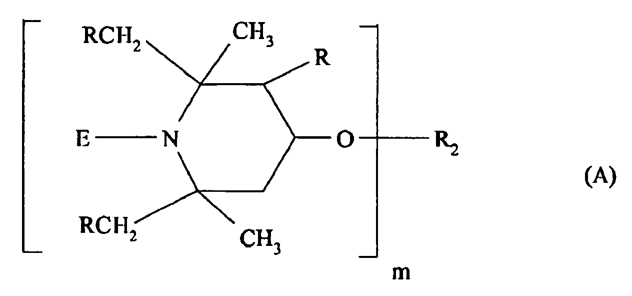 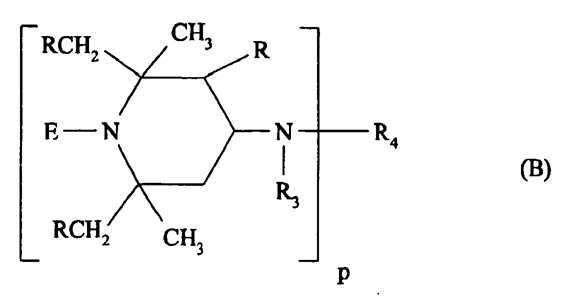 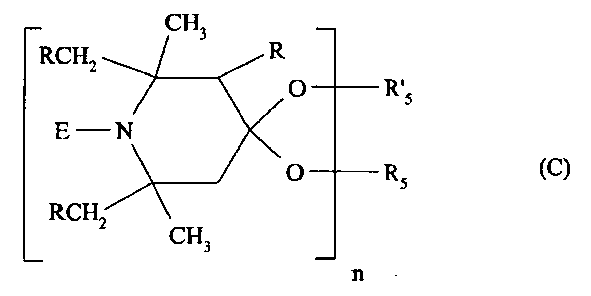 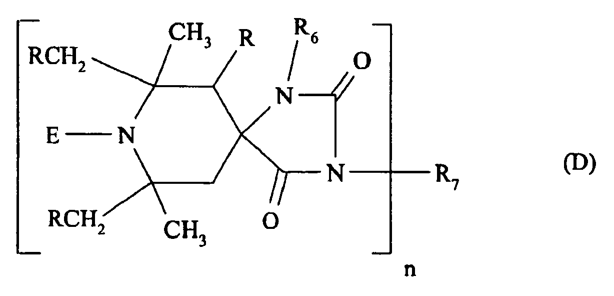 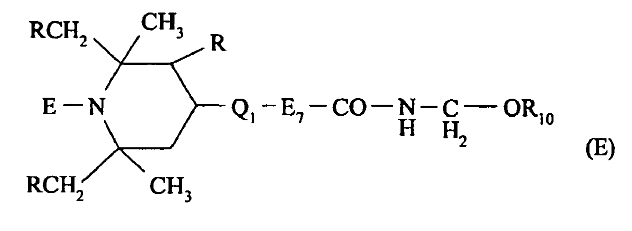 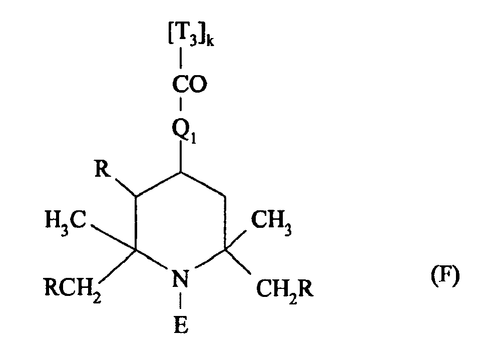 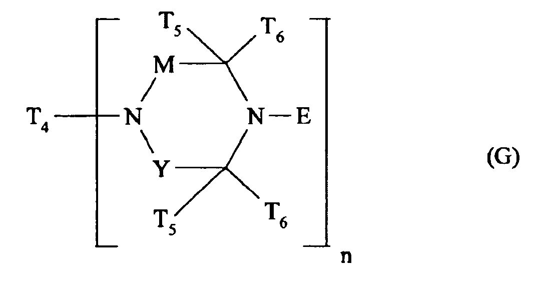 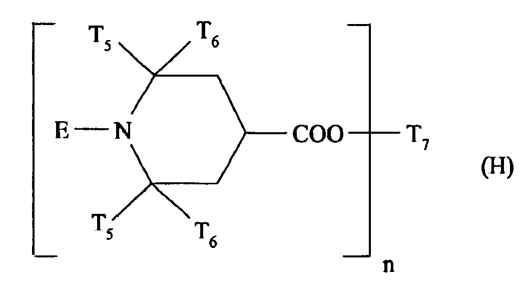 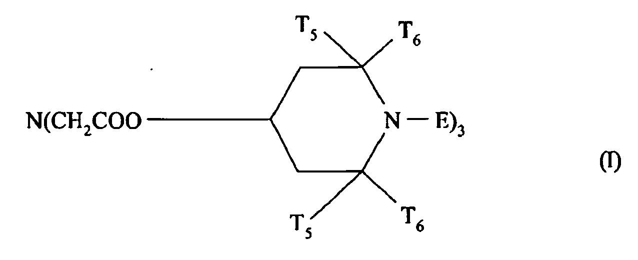 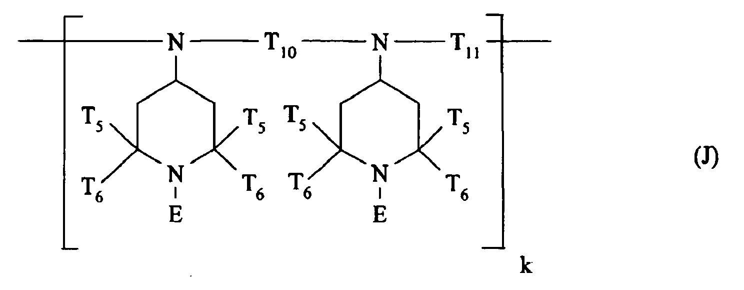 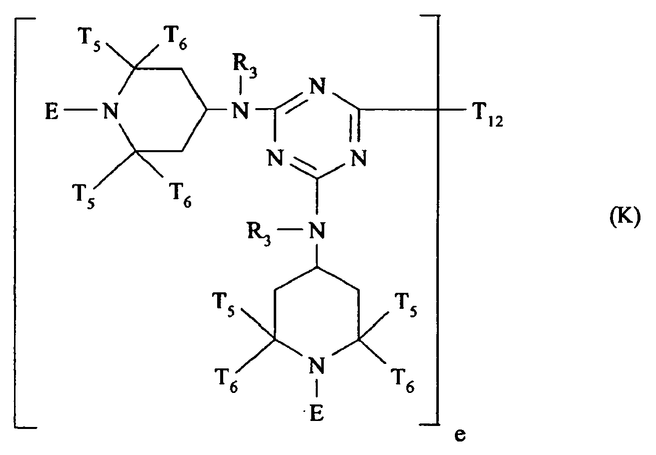 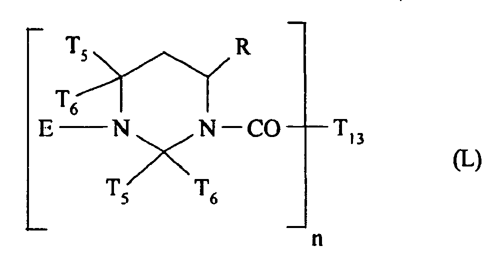 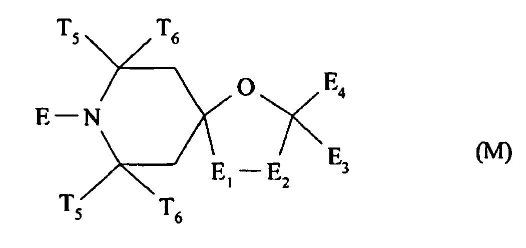 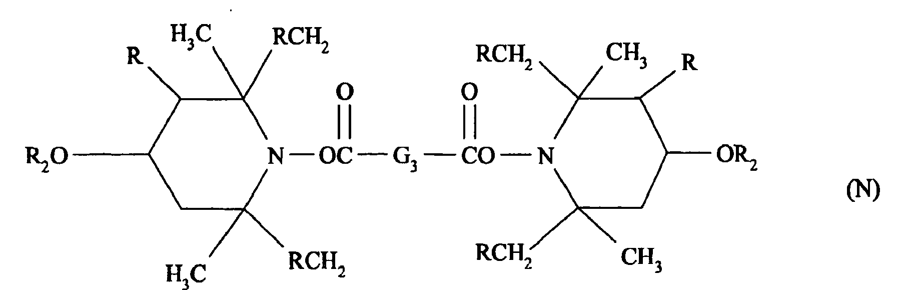 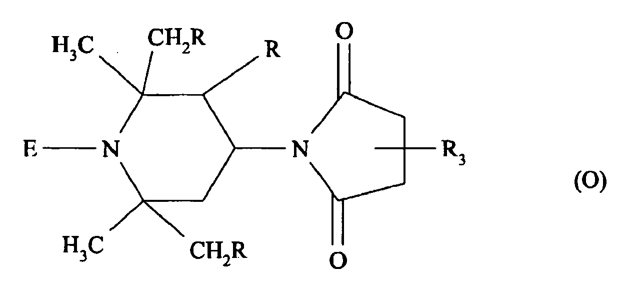 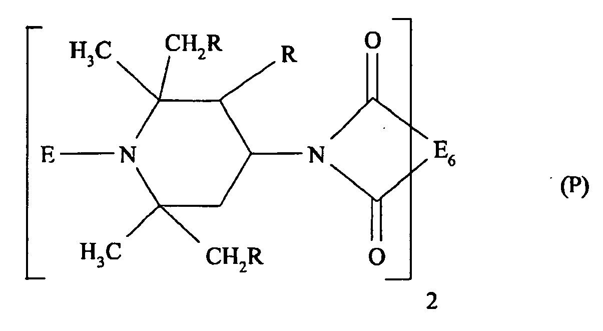 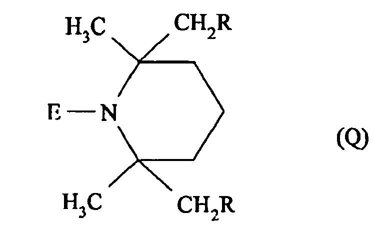 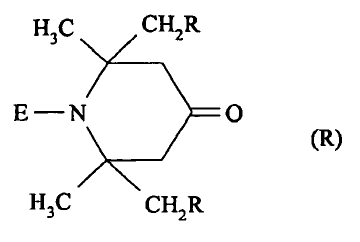 wherein
E is oxyl, hydroxyl, alkoxy of 1 to 18 carbon atoms, cycloalkoxy of 5 to 12 carbon atoms or aralkoxy of 7 to 15 carbon atoms, or E is -O-T-(OH)_{b},
T is a straight or branched chain alkylene of 1 to 18 carbon atoms, cycloalkylene of 5 to 18 carbon atoms, cycloalkenylene of 5 to 18 carbon atoms, a straight or branched chain alkylene of 1 to 4 carbon atoms substituted by phenyl or by phenyl substituted by one or two alkyl groups of 1 to 4 carbon atoms;
b is 1, 2 or 3 with the proviso that b cannot exceed the number of carbon atoms in T, and when b is 2 or 3, each hydroxyl group is attached to a different carbon atoms of T;
R is hydrogen or methyl,
m is 1 to 4,
when m is 1,
R₂ is hydrogen, C₁-C₁₈alkyl or said alkyl optionally interrupted by one or more oxygen atoms, C₂-C₁₂alkenyl, C₆-C₁₀aryl, C₇-C₁₈aralkyl, glycidyl, a monovalent acyl radical of an aliphatic,cycloaliphatic or aromatic carboxylic acid, or a carbamic acid, for example an acyl radical of an aliphatic carboxylic acid having 2-18 C atoms, of a cycloaliphatic carboxylic acid having 5-12 C atoms or of an aromatic carboxylic acid having 7-15 C atoms, or 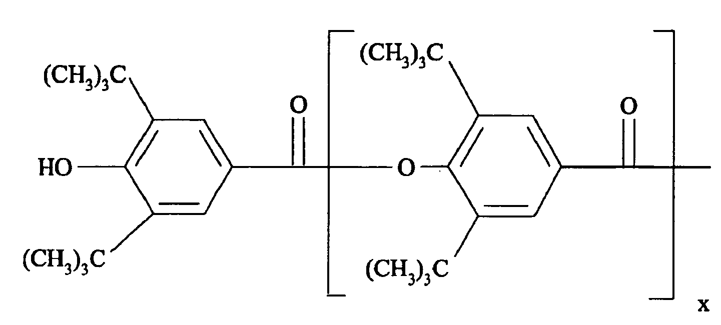
wherein x is 0 or 1, 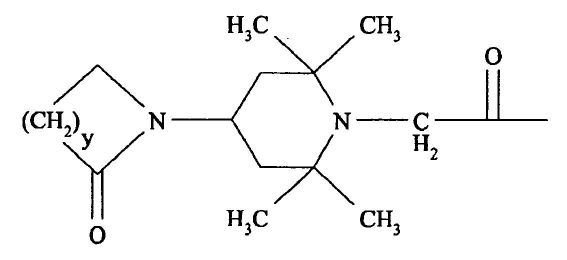 wherein y is 2-4;
when m is 2,
R₂ is C₁-C₁₂alkylene, C₄-C₁₂alkenylene, xylylene, a divalent acyl radical of an aliphatic, cycloaliphatic, araliphatic or aromatic dicarboxylic acid or of a dicarbamic acid, for example an acyl radical of an aliphatic dicarboxylic acid having 2-18 C atoms, of a cycloaliphatic or aromatic dicarboxylic acid having 8-14 C atoms, or of an aliphatic, cycloaliphatic or aromatic dicarbamic acid having 8-14 C atoms; 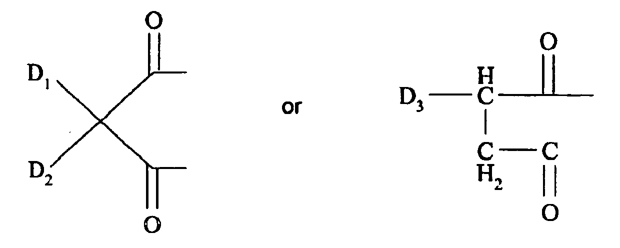 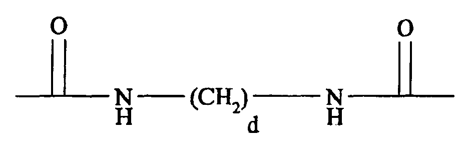 wherein D₁ and D₂ are independently hydrogen, an alkyl radical containing up to 8 carbon atoms, an aryl or aralkyl radical including 3,5-di-t-butyl-4.-hydroxybenzyl radical, D₃ is hydrogen, or an alkyl or alkenyl radical containing up to 18 carbon atoms, and d is 0-20;
when m is 3, R₂ is a trivalent acyl radical of an aliphatic, unsaturated aliphatic, cycloaliphatic, or aromatic tricarboxylic acid;
when m is 4, R₂ is a tetravalent acyl radical of a saturated or unsaturated aliphatic or aromatic tetracarboxylic acid including 1,2,3,4-butanetetracarboxylic acid, 1,2,3,4-but-2-ene-tetracarboxylic , and 1,2,3,5- and 1,2,4,5-pentanetetracarboxylic acid;
p is 1, 2 or 3,
R₃ is hydrogen, C₁-C₁₂alkyl, C₅-C₇cycloalkyl, C₇-C₉aralkyl, C₂-C₁₈alkanoyl, C₃₋C₅alkenoyl or benzoyl;
when p is 1,
R₄ is hydrogen, C₁-C₁₈alkyl, C₅-C₇cycloalkyl, C₂-C₈alkenyl, unsubstituted or substituted by a cyano, carbonyl or carbamide group, aryl, aralkyl, or it is glycidyl, a group of the formula -CH₂-CH(OH)-Z or of the formula -CO-Z or -CONH-Z wherein Z is hydrogen, methyl or phenyl; or a group of the formulae 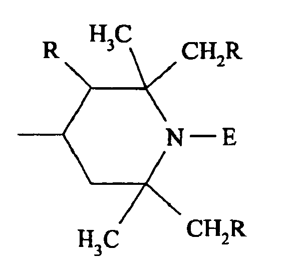 or 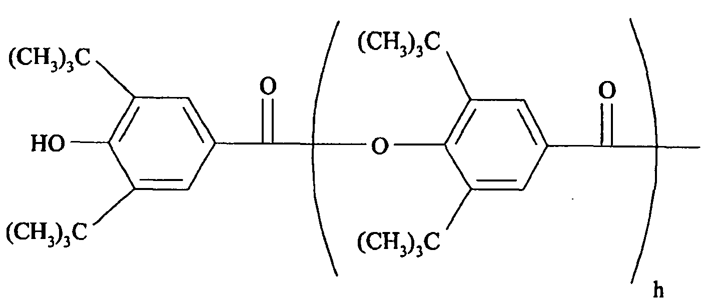 where h is 0 or 1,
R₃ and R₄ together, when p is 1, can be alkylene of 4 to 6 carbon atoms or 2-oxo-polyalkylene the cyclic acyl radical of an aliphatic or aromatic 1,2- or 1,3-dicarboxylic acid,
when p is 2,
R₄ is a direct bond or is C₁-C₁₂alkylene, C₆-C₁₂arylene, xylylene, a -CH₂CH(OH)-CH₂ group or a group -CH₂CH(OH)-CH₂-O-X-O-CH₂-CH(OH)-CH₂- wherein X is C₂-C₁₀alkylene, C₆-C₁₅arylene or C₆-C₁₂cycloalkylene; or, provided that R₃ is not alkanoyl, alkenoyl or benzoyl, R₄ can also be a divalent acyl radical of an aliphatic, cycloaliphatic or aromatic dicarboxylic acid or dicarbamic acid, or can be the group -CO-; or
R₄ is 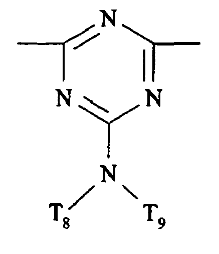
where T₈ and T₉ are independently hydrogen, alkyl of 1 to 18 carbon atoms, or T₈ and T₉ together are alkylene of 4 to 6 carbon atoms or 3-oxapentamethylene, for instance T₈ and T₉ together are 3-oxapentamethylene;
when p is 3,
R₄ is 2,4,6-triazinyl,
n is 1 or 2,
when n is 1,
R₅ and R'₅ are independently C₁-C₁₂ alkyl, C₂-C₁₂ alkenyl, C₇-C₁₂ aralkyl, or R₅ is also hydrogen, or R₅ and R'₅ together are C₂-C₈alkytene or hydroxyalkylene or C₄₋C₂₂acyloxyalkylene;
when n is 2,
R₅ and R'₅ together are (-CH₂)₂C(CH₂-)₂:
R₆ is hydrogen, C₁-C₁₂alkyl, allyl, benzyl, glycidyl or C₂-C₆alkoxyalkyl;
when n is 1,
R₇ is hydrogen, C₁-C₁₂alkyl, C₃-C₅alkenyl, C₇-C₉aralkyl, C₅-C₇cydoalkyl, C₂₋C₄hydroxyalkyl, C₂-C₆alkoxyalkyl, C₆-C₁₀aryl, glycidyl, a group of the formula -(CH₂)ₜ-COO-Q or of the formula -(CH₂)ₜ-O-CO-Q wherein t is 1 or 2, and Q is C₁-C₄alkyl or phenyl; or
when n is 2,
R₇ is C₂-C₁₂alkylene, C₆-C₁₂arylene, a group -CH₂CH(OH)-CH₂-O-X-O-CH₂-CH(OH)-CH₂- wherein X is C₂-C₁₀alkylene, C₆-C₁₅arylene or C₆-C₁₂cycloalkylene, or a group - CH₂CH(OZ')CH₂-(OCH₂-CH(OZ')CH₂)₂- wherein Z' is hydrogen, C₁-C₁₈alkyl, allyl, benzyl, C₂₋C₁₂alkanoyl or benzoyl;
Q₁ is -N(R₈)- or -O-; E₇ is C₁-C₃ alkylene, the group -CH₂-CH(R₉)-O- wherein R₉ is hydrogen, methyl or phenyl, the group -(CH₂)₃-NH- or a direct bond;
R₁₀ is hydrogen or C₁-C₁₈ alkyl, R₈ is hydrogen, C₁-C₁₈alkyl, C₅-C₇cycloalkyl, C₇₋C₁₂aralkyl, cyanoethyl, C₆-C₁₀aryl, the group -CH₂-CH(R₉)-OH wherein R₉ has the meaning defined above; a group of the formula 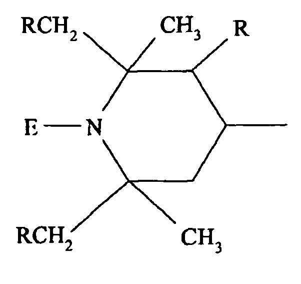 or a group of the formula 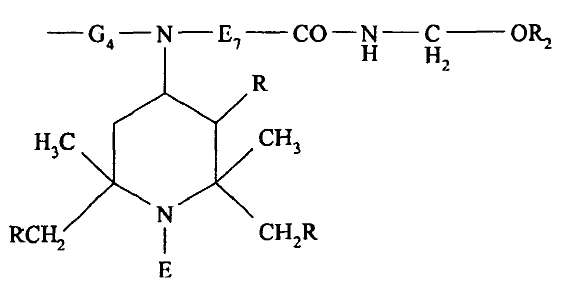
wherein G₄ is C₂-C₆alkylene or C₆-C₁₂arylene; or R₈ is a group -E₇-CO-NH-CH₂-OR₁₀;

Formula F denotes a recurring structural unit of a polymer where T₃ is ethylene or 1,2-propylene, is the repeating structural unit derived from an alpha-olefin copolymer with an alkyl acrylate or methacrylate; for example a copolymer of ethylene and ethyl acrylate, and where k is 2 to 100;
T₄ has the same meaning as R₄ when p is 1 or 2,
T₅ is methyl,
T₆ is methyl or ethyl, or T₅ and T₆ together are tetramethylene or pentamethylene, for instance T₅ and T₆ are each methyl,
M and Y are independently methylene or carbonyl, and T₄ is ethylene where n is 2;
T₇ is the same as R₇, and T₇ is for example octamethylene where n is 2,
T₁₀ and T₁₁ are independently alkylene of 2 to 12 carbon atoms, or T₁₁ is 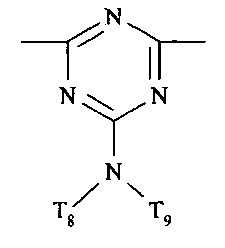
T₁₂ is piperazinyl,
   -NR₁₁-(CH₂)_{d}-NR₁₁- or 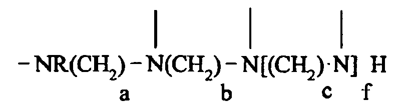
where R₁₁ is the same as R₃ or is also 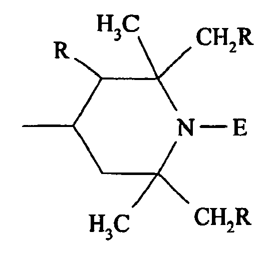
a, b and c are independently 2 or 3, and f is 0 or 1, for instance a and c are each 3, b is 2 and f is 1; and
e is 2, 3 or 4, for example 4;
T₁₃ is the same as R₂ with the proviso that T₁₃ cannot be hydrogen when n is 1;
E₁ and E₂, being different, each are -CO- or -N(E₅)- where E₅ is hydrogen, C₁-C₁₂ alkyl or C₄-C₂₂ alkoxycarbonylalkyl, for instance E₁ is -CO- and E₂ is -N(E₅)-,
E₃ is hydrogen, alkyl of 1 to 30 carbon atoms, phenyl, naphthyl, said phenyl or said naphthyl substituted by chlorine or by alkyl of 1 to 4 carbon atoms, or phenylalkyl of 7 to 12 carbon atoms, or said phenylalkyl substituted by alkyl of 1 to 4 carbon atoms,
E₄ is hydrogen, alkyl of 1 to 30 carbon atoms, phenyl, naphthyl or phenylalkyl of 7 to 12 carbon atoms, or
E₃ and E₄ together are polymethylene of 4 to 17 carbon atoms, or said polymethylene substituted by up to four alkyl groups of 1 to 4 carbon atoms, for example methyl,
E₆ is an aliphatic or aromatic tetravalent radical,
R₂ of formula (N) is a previously defined when m is 1;
G₁ a direct bond, C₁-C₁₂ alkylene, phenylene or -NH-G'-NH wherein G' is C₁-C₁₂ alkylene; or
wherein the hindered amine compound is a compound of the formula I, II, III, IV, V, VI, VII, VIII, IX, X or XI 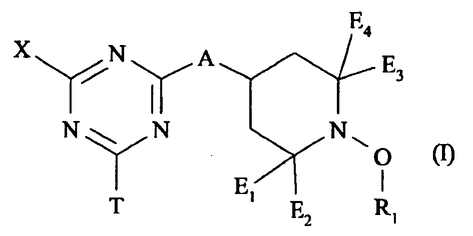 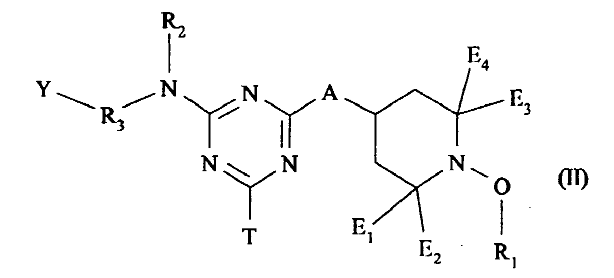 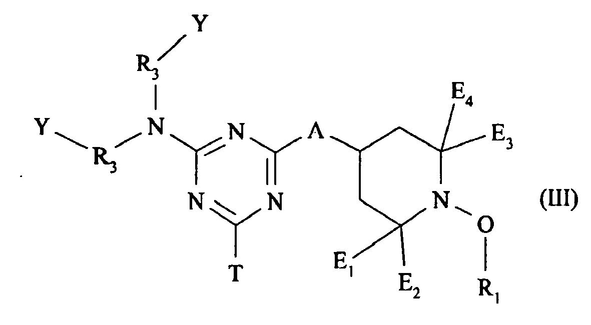 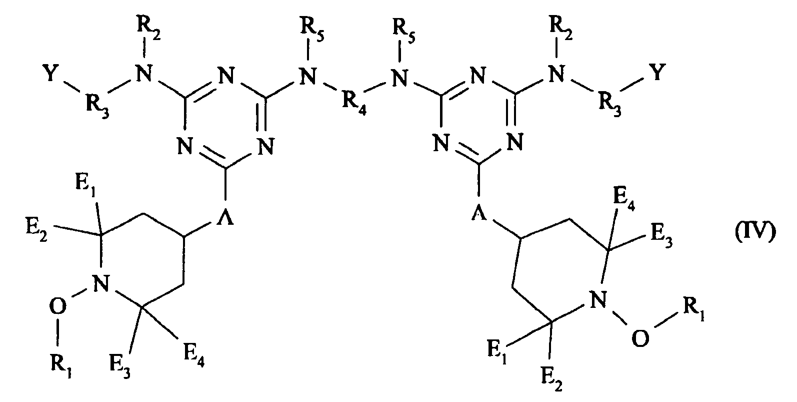 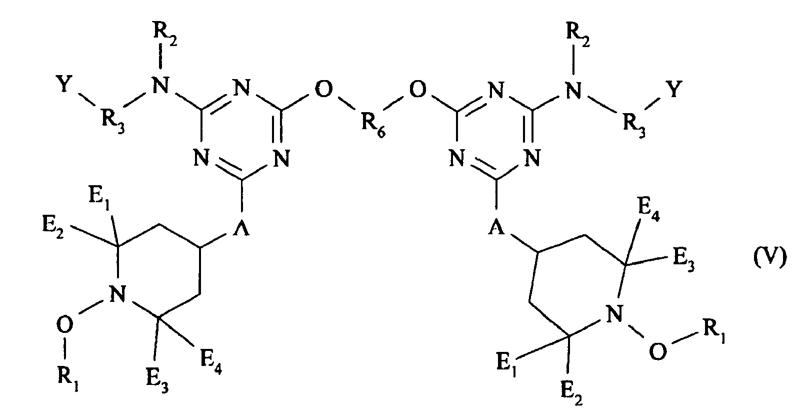 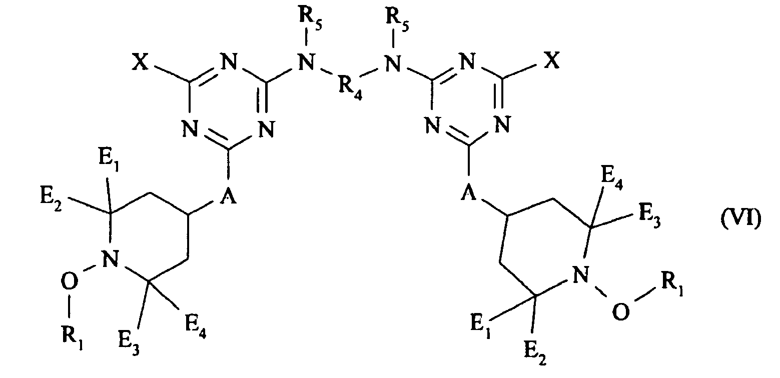 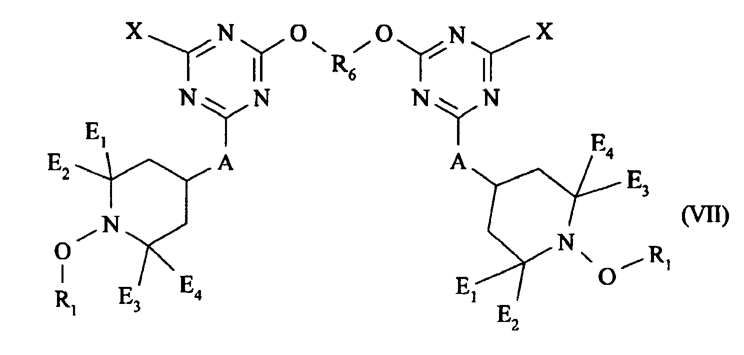 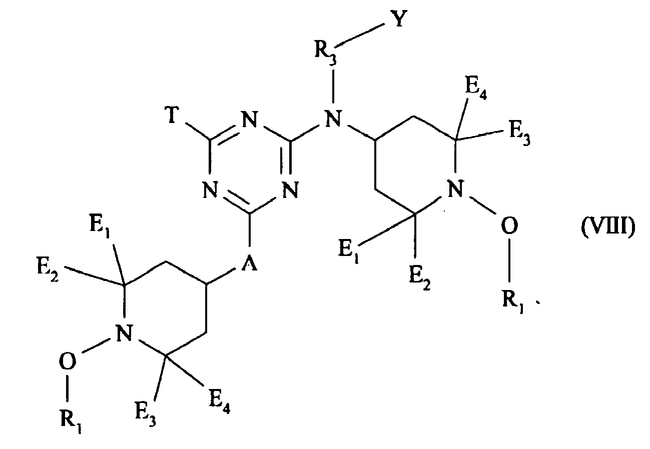 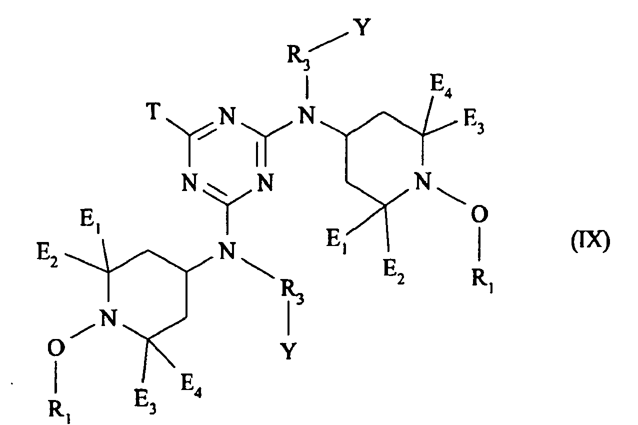 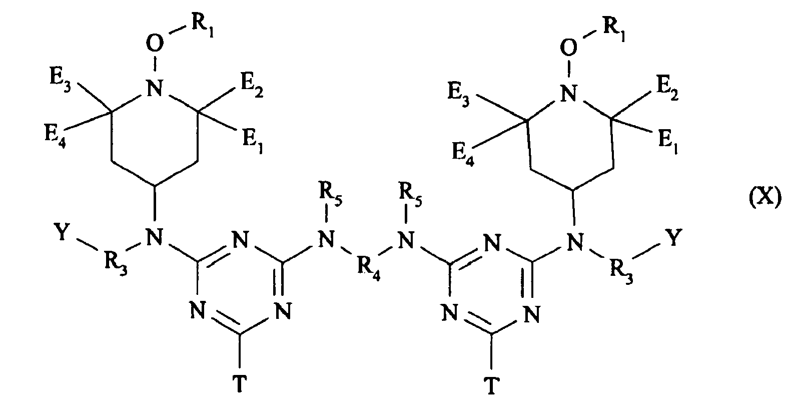 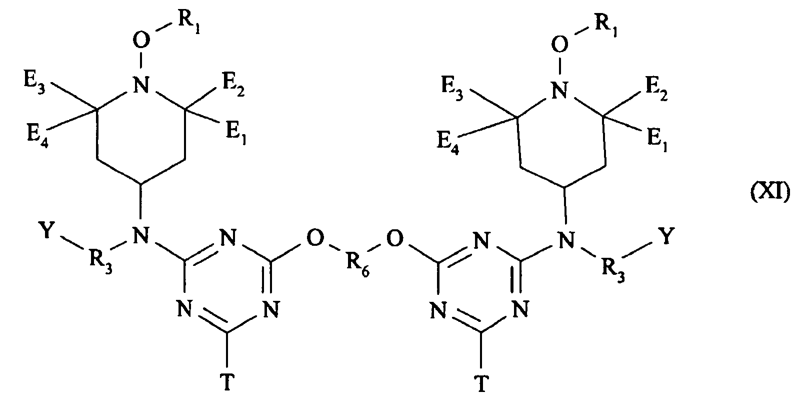
wherein
E₁, E₂, E₃ and E₄ are independently alkyl of 1 to 4 carbon atoms, or E₁ and E₂ are independently alkyl of 1 to 4 carbon atoms and E₃ and E₄ taken together are pentamethylene, or E₁ and E₂; and E₃ and E₄ each taken together are pentamethylene,
R₁ is alkyl of 1 to 18 carbon atoms, cycloalkyl of 5 to 12 carbon atoms, a bicyclic or tricyclic hydrocarbon radical of 7 to 12 carbon atoms, phenylalkyl of 7 to 15 carbon atoms, aryl of 6 to 10 carbon atoms or said aryl substituted by one to three alkyl of 1 to 8 carbon atoms,
R₂ is hydrogen or a linear or branched chain alkyl of 1 to 12 carbon atoms,
R₃ is alkylene of 1 to 8 carbon atoms, or R₃ is -CO-, -CO-R₄-, -CONR₂- or -CO-NR₂-R₄-,
R₄ is alkylene of 1 to 8 carbon atoms,
R₅ is hydrogen, a linear or branched chain alkyl of 1 to 12 carbon atoms, or 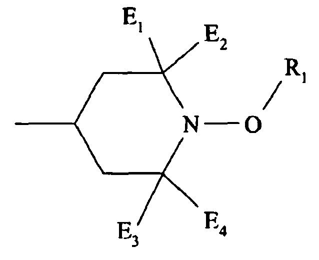
or when R₄ is ethylene, two R₅ methyl substituents can be linked by a direct bond so that the triazine bridging group -N(R₅)-R₄-N(R₅)- is a piperazin-1,4-diyl moiety,
R₆ is alkylene of 2 to 8 carbon atoms or R₆ is 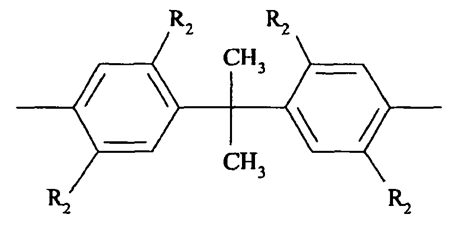 with the proviso that Y is not -OH when R₆ is the structure depicted above,
A is -O- or -NR₇-where R₇ is hydrogen, a straight or branched chain alkyl of 1 to 12 carbon atoms, or R₇ is 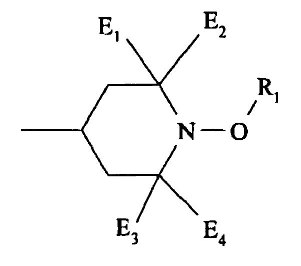
T is phenoxy, phenoxy substituted by one or two alkyl groups of 1 to 4 carbon atoms, alkoxy of 1 to 8 carbon atoms or -N(R₂)₂ with the stipulation that R₂ is not hydrogen, or T is 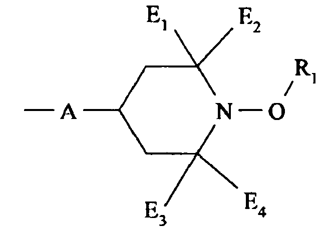
X is -NH₂, -NCO, -OH, -O-glycidyl, or -NHNH₂, and
Y is -OH, -NH₂, -NHR₂ where R₂ is not hydrogen; or Y is -NCO, -COOH, oxiranyl, -O-glycidyl, or -Si(OR₂)₃; or the combination R₃-Y- is -CH₂CH(OH)R₂ where R₂ is alkyl or said alkyl interrupted by one to four oxygen atoms, or R₃-Y- is -CH₂OR₂;
   or
   wherein the hindered amine compound is a mixture of N,N',N'''-tris{2,4-bis[(1-hydrocarbyloxy-2,2,6,6-tetramethylpiperidin-4-yl)alkylamino]-s-triazin-6-yl}-3,3'-ethylenediiminodipropylamine; N,N',N"-tris{2,4-bis[(1-hydrocarbyloxy-2,2,6,6-tetramethytpiperidin-4-yl)alkylamino]-s-triazin-6-yl}-3,3'-ethylenediiminodipropylamine, and bridged derivatives as described by formulas I, II, IIA and III

   R₁NH-CH₂CH₂CH₂NR₂CH₂CH₂NR₃CH₂CH₂CH₂NHR₄ (I)

   T-E₁-T₁ (II)

   T-E₁ (IIA)

   G-E₁-G₁-E₁-G₂ (III)
where in the tetraamine of formula I
R₁ and R₂ are the s-triazine moiety E; and one of R₃ and R₄ is the s-triazine moiety E with the other of R₃ or R₄ being hydrogen,
E is 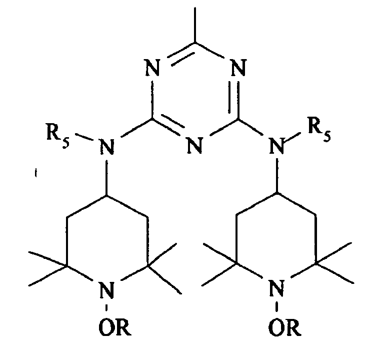
R is methyl, propyl, cyclohexyl or octyl, for instance cyclohexyl,
R₅ is alkyl of 1 to 12 carbon atoms, for example n-butyl,
where in the compound of formula II or IIA when R is propyl, cyclohexyl or octyl,
T and T₁ are each a tetraamine substituted by R₁-R₄ as is defined for formula I, where
   (1) one of the s-triazine moieties E in each tetraamine is replaced by the group E₁ which forms a bridge between two tetraamines T and T₁,
      E₁ is 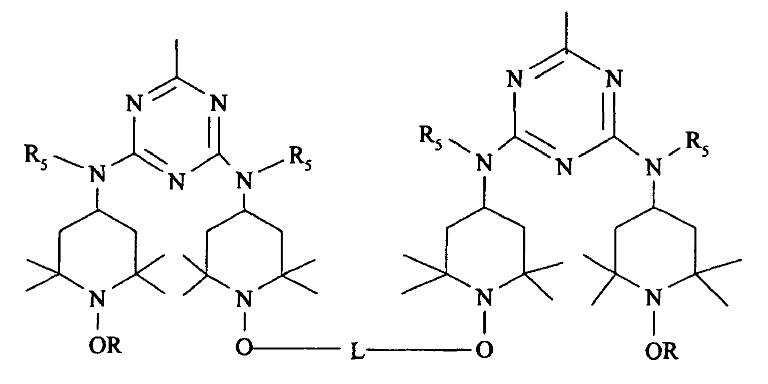 or
   (2) the group E₁ can have both termini in the same tetraamine T as in formula IIA where two of the E moieties of the tetraamine are replaced by one E₁ group, or
   (3) all three s-triazine substituents of tetraamine T can be E₁ such that one E₁ links T and T₁ and a second E₁ has both termini in tetraamine T,
L is propanediyl, cyclohexanediyl or octanediyl;
where in the compound of formula III
G, G₁ and G₂ are each tetraamines substituted by R₁-R₄ as defined for formula I, except that G and G₂ each have one of the s-triazine moieties E replaced by E₁, and G₁ has two of the triazine moieties E replaced by E₁, so that there is a bridge between G and G₁ and a second bridge between G₁ and G₂;
which mixture is prepared by reacting two to four equivalents of 2,4-bis[(1-hydrocarbyloxy-2,2,6,6-tetramethylpiperidin-4-yl)butylamino]-6-chloro-s-triazine with one equivalent of N,N'-bis(3-aminopropyl)ethylenediamine;
or the hindered amine is a compound of the formula IIIb 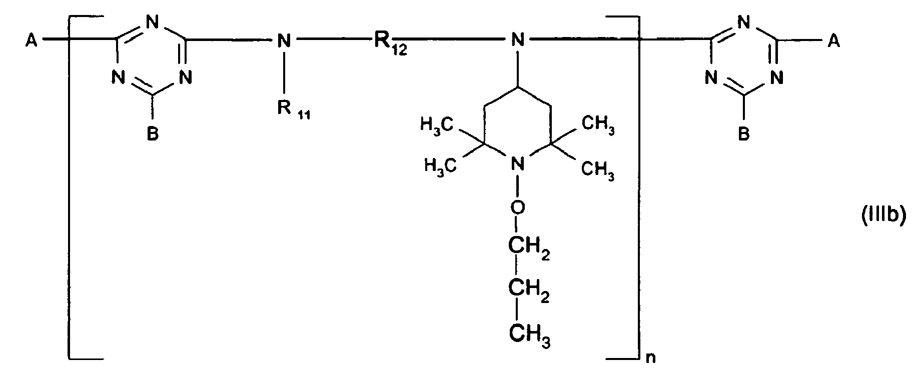 in which the index n ranges from 1 to 15;
R₁₂ is C₂-C₁₂alkylene, C₄-C₁₂alkenylene, C₅-C₇cycloalkylene, C₅-C₇cycloalkylene-di(C₁-C₄alkylene), C₁-C₄alkylenedi(C₅-C₇cycloalkylene), phenylenedi(C₁-C₄alkylene) or C₄-C₁₂alkylene interrupted by 1,4-piperazinediyl, -O- or >N-X₁ with X₁ being C₁-C₁₂acyl or (C₁-C₁₂alkoxy)carbonyl or having one of the definitions of R₁₄ given below except hydrogen; or R₁₂ is a group of the formula (Ib') or (Ic'), 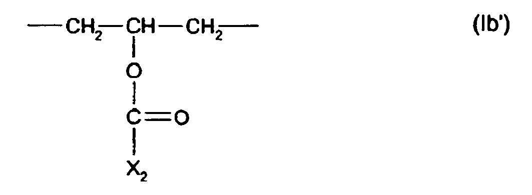 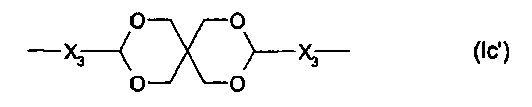
with m being 2 or 3,
X₂ being C₁-C₁₈alkyl, C₅-C₁₂cycloalkyl which is unsubstituted or substituted by 1, 2 or 3 C₁-C₄alkyl; phenyl which is unsubstituted or substituted by 1, 2 or 3 C₁-C₄alkyl or C₁-C₄alkoxy; C₇-C₉phenylalkyl which is unsubstituted or substituted on the phenyl by 1, 2 or 3 C₁-C₄alkyl; and
the radicals X₃ being independently of one another C₂-C₁₂alkylene;
R₁₃, R₁₄ and R₁₅, which are identical or different, are hydrogen, C₁-C₁₈alkyl, C₅₋C₁₂cycloalkyl which is unsubstituted or substituted by 1, 2 or 3 C₁-C₄alkyl; C₃-C₁₈alkenyl, phenyl which is unsubstituted or substituted by 1, 2 or 3 C₁-C₄alkyl or C₁-C₄alkoxy; C₇₋C₉phenylalkyl which is unsubstituted or substituted on the phenyl by 1, 2 or 3 C₁-C₄alkyl; tetrahydrofurfuryl or C₂-C₄alkyl which is substituted in the 2, 3 or 4 position by -OH, C₁-C₈alkoxy, di(C₁-C₄alkyl)amino or a group of the formula (le'); 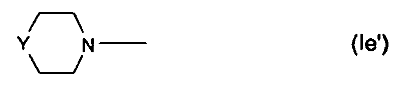 with Y being -O-, -CH₂-, -CH₂CH₂- or >N-CH₃,
   or -N(R₁₄)(R₁₅) is additionally a group of the formula (le');
   the radicals A are independently of one another -OR₁₃, -N(R₁₄)(R₁₅) or a group of the formula (IIId); 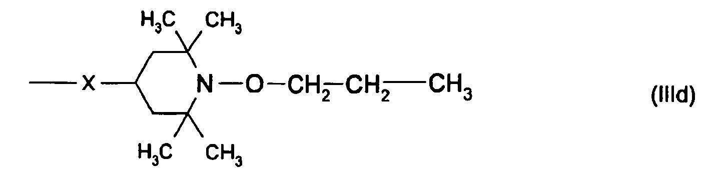 X is -O- or >N-R₁₆;
   R₁₆ is hydrogen, C₁-C₁₈alkyl, C₃-C₁₈alkenyl, C₅-C₁₂cycloalkyl which is unsubstituted or substituted by 1, 2 or 3 C₁-C₄alkyl; C₇-C₉phenylalkyl which is unsubstituted or substituted on the phenyl by 1, 2 or 3 C₁-C₄alkyl; tetrahydrofurfuryl, a group of the formula (IIIf), 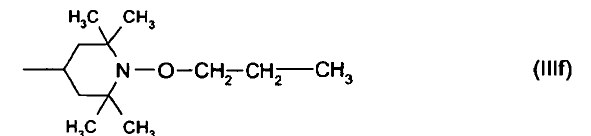 or C₂-C₄alkyl which is substituted in the 2, 3 or 4 position by -OH, C₁-C₈alkoxy, d)(C₁-C₄alkyl)amino or a group of the formula (le');
   R₁₁ has one of the definitions given for R₁₆; and
   the radicals B have independently of one another one of the definitions given for A.

Alkyl is straight or branched and is for example methyl, ethyl, n-propyl, n-butyl, sec-butyl, tert-butyl, n-hexyl, n-octyl, 2-ethylhexyl, n-nonyl, n-decyl, n-undecyl, n-dodecyl, n-tridecyl, n-tetradecyl, n-hexadecyl or n-octadecyl.

Cycloalkyl groups include cyclopentyl and cyclohexyl; typical cycloalkenyl groups include cyclohexenyl; while typical aralkyl groups include benzyl, alpha-methyl-benzyl, alpha,alpha-dimethylbenzyl or phenethyl, whereas typical aryl groups include for example phenyl or naphthyl.

If R₂ is a monovalent acyl radical of a carboxylic acid, it is for example an acyl radical of acetic acid, stearic acid, salicyclic acid, benzoic acid or β-(3,5-di-tert-butyl-4-hydroxyphenyl) propionic acid.

If R₂ is a divalent acyl radical of a dicarboxylic acid, it is for example an acyl radical of oxalic acid, adipic acid, succinic acid, suberic acid, sebacic acid, phthalic acid dibutylmalonic acid, dibenzylmalonic acid or butyl-(3,5-di-tert-butyl-4-hydropxybenzyl)-malonic acid, or bicycloheptenedicarboxylic acid, with succinates, sebacates, phthalates and isophthalates being specific examples.

If R₂ is a divalent acyl radical of a dicarbamic acid, it is for example an acyl radical of hexamethylenedicarbamic acid or of 2,4-toluylenedicarbamic acid.

Hindered alkoxyamine stabilizers of component (i) are well known in the art, also known as N-alkoxy hindered amines and NOR hindered amines or NOR hindered amine light stabilizers or NOR HALS.

They are disclosed for example in U.S. Pat. Nos. 5,004,770, 5,204,473, 5,096,950, 5,300,544, 5,112,890, 5,124,378, 5,145,893, 5,216,156, 5,844,026, 6,117,995, 6,271,377, 6,392,041, 6,376,584 and 6,472,456 and U.S. application Ser. Nos. 09/714,717, filed Nov. 16, 2000 and 60/312,517, filed Aug. 15, 2001. The relevant disclosures of these patents and applications are hereby incorporated by reference.

U.S. Pat. Nos. 6,271,377, 6,392,041and 6,376,584, cited above, disclose hindered hydroxyalkoxyamine stabilizers. For the purposes of this invention, the hindered hydoxyalkoxyamine stabilizers are considered a subset of the hindered alkoxyamine stabilizers and are part of present component (i). Hindered hydroxyalkoxyamine stabilizers are also known as N-hydroxyalkoxy hindered amines, or NORol HALS.

Suitable hindered amines of component (i) include for example:
NOR1 1-cyclohexyloxy-2,2,6,6-tetramethyl-4-octadecylaminopiperidine;
NOR2 bis(1-octyloxy-2,2,6,6-tetramethylpiperidin-4-yl) sebacate;
NOR3 2,4-bis[(1-cyclohexyloxy-2,2,6,6-tetramethylpiperidin-4-yl)butylamino]-6-(2-hydroxyethylamino-s-triazine;
NOR3 bis(1-cyclohexyloxy-2,2,6,6-tetramethylpiperidin-4-yl) adipate;
NOR4 2,4-bis[(1-cyclohexyloxy-2,2,6,6-tetramethylpiperidin-4-yl)butylamino]-6-chloro-s-triazine;
NOR5 1-(2-hydroxy-2-methylpropoxy)-4-hydroxy-2,2,6,6-tetramethylpiperidine;
NOR6 1-(2-hydroxy-2-methylpropoxy)-4-oxo-2,2,6,6-tetramethylpiperidine;
NOR7 1-(2-hydroxy-2-methylpropoxy)-4-octadecanoyloxy-2,2,6,6-tetramethylpiperidine;
NOR8 bis(1-(2-hydroxy-2-methylpropoxy)-2,2,6,6-tetramethylpiperidin-4-yl) sebacate;
NOR9 bis(1-(2-hydroxy-2-methylpropoxy)-2,2,6,6-tetramethylpiperidin-4-yl) adipate;
NOR10 2,4-bis{N-[1-(2-hydroxy-2-methylpropoxy)-2,2,6,6-tetramethylpiperidin-4-yl]-N-butylamino}-6-(2-hydroxyethylamino)-s-triazine;
NOR11 the reaction product of 2,4-bis[(1-cyclohexyloxy-2,2,6,6-tetramethylpiperidin-4-yl)butylamino]-6-chloro-s-triazine with N,N'-bis(3-aminopropyl)ethylenediamine) [CAS Reg. No. 191680-81-6]; and
NOR12 the compound of formula 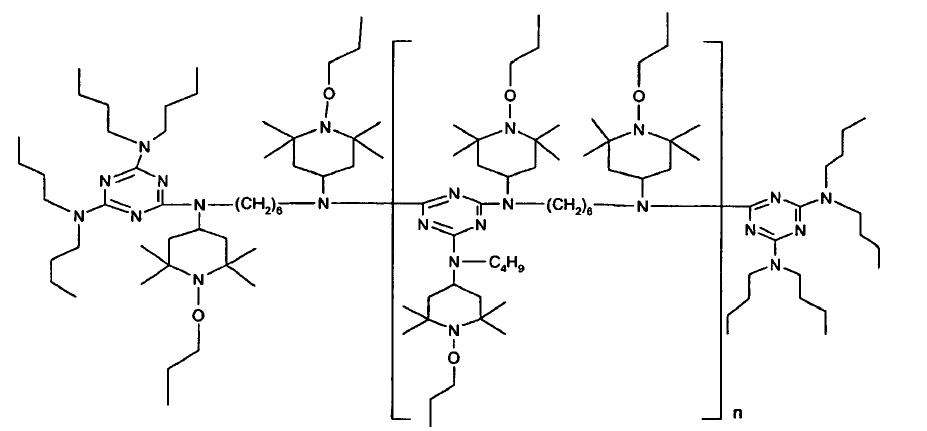 in which n is from 1 to 15.

Compound NOR12 is disclosed in example 2 of U.S. Patent No. 6,117,995.

The hindered amine stabilizers of component (i) are advantageously contained in the composition of the invention in an amount from 0.05% to 20% by weight based on the polylactic acid polymer substrate; for example from 0.1% to 10% by weight; for example from 0.2% to 8% by weight; for instance from 0.5% to 3% by weight. For example, the stabilizers of component (i) are present from 0.05% to 15%, from 0.05% to 10%, from 0.05% to 8%, from 0.05% to 5% or from 0.05% to 3% by weight based on the weight of the polylactic acid substrate. For example, the stabilizers of component (i) are present from 0.1% to 20%, from 0.2 to 20%, from 0.5 to 20% or from 1% to 20% by weight based on the weight of the polylactic acid substrate.

### Conventional Flame Retardants of Component (ii)

Oganohalogen flame retardants are for example:
polybrominated diphenyl oxide (DE-60F, Great Lakes Corp.),
decabromodiphenyl oxide (DBDPO; SAYTEX^{®} 102E),
tris[3-bromo-2,2-bis(bromomethyl)propyl] phosphate (PB 370^{®}, FMC Corp.),
tris(2,3-dibromopropyl)phosphate
tris(2,3-dichloropropyl)phosphate,
chlorendic acid,
tetrachlorophthalic acid,
tetrabromophthalic acid,
bis-(N,N'-hydroxyethyl)tetrachlorphenylene diamine,
poly-β-chloroethyl triphosponate mixture
tetrabromobisphenol A bis(2,3-dibromopropyl ether) (PE68),
brominated epoxy resin,
ethylene-bis(tetrabromophthalimide) (SAYTEX^{®} BT-93),
bis(hexachlorocyclopentadieno)cyclooctane (DECLORANE PLUS^{®}),
chlorinated paraffins,
octabromodiphenyl ether,
hexachlorocyclopentadiene derivatives,
1,2-bis(tribromophenoxy)ethane (FF680),
tetrabromo-bisphenol A (SAYTEX^{®} RB100),
ethylene bis-(dibromo-norbornanedicarboximide) (SAYTEX^{®}BN-451),
bis-(hexachlorocyclopentadieno) cyclooctane,
polytetrafluorethylene (PTFE)
tris-(2,3-dibromopropyl)-isocyanurate, and
ethylene-bis-tetrabromophthalimide.

The phosphorus containing flame retardants are for example:
Tetraphenyl resorcinol diphosphite (FYROLFLEX^{®} RDP, Akzo Nobel),
tetrakis(hydroxymethyl)phosphonium sulfide,
diethyl-N,N-bis(2-hydroxyethyl)-aminomethyl phosphonate,
hydroxyalkyl esters of phosphorus acids,
ammonium polyphosphate (APP) or (HOSTAFLAM^{®} AP750),
resorcinol diphosphate oligomer (RDP),
phosphazene flame retardants,
ethylenediamine diphosphate (EDAP),
phosphonates and their metal salts and
phosphinates and their metal salts.

Isocyanurate flame retardants include polyisocyanurate, esters of isocyanuric acid and isocyanurates. For example, an hydroxyalkyl isocyanurate such as tris-(2-hydroxyethyl)isocyanurate, tris(hydroxymethyl)isocyanurate, tris(3-hydroxy-n-proyl)isocyanurate or triglycidyl isocyanurate.

The melamine based flame retardants are for example:
melamine cyanurate,
melamine borate,
melamine phosphates,
melamine polyphosphates,
melamine pyrophosphates,
melamine ammonium polyphosphate and
melamine ammonium pyrophosphate.

Boric acid may be included as a flame retardant.

The halogenated flame retardants useful in the present invention may be selected from organic aromatic halogenated compounds such as halogenated benzenes, biphenyls, phenols, ethers or esters thereof, bisphenols, diphenyloxides, aromatic carboxylic acids or polyacids, anhydrides, amides or imides thereof; organic cycloaliphatic or polycycloaliphatic halogenated compounds; and organic aliphatic halogenated compounds such as halogenated paraffins, oligo- or polymers, alkylphosphates or alkylisocyanurates. These components are largely known in the art, see e.g. US patents Nos. 4,579,906 (e.g. col. 3, lines 30-41), 5,393,812; see also Plastics Additives Handbook, Ed. by H. Zweifel, 5^{th} Ed., Hanser Publ., Munich 2001, pp. 681-698.

The phosphazene flame retardants are well known in the art. They are disclosed for example in EP1104766, JP07292233, DE19828541, DE1988536, JP11263885, U.S. Pat. Nos. 4,107,108, 4,108,805 and 4,079,035 and 6,265,599. The relevant disclosures of the U.S. Patents are hereby incorporated by reference.

PTFE, polytetrafluoroethylene (for example Teflon^{®} 6C; E. I. Du Pont), may be advantageously added to the present compositions as an additional flame retardant, as disclosed in U.S. application 60/312,517, filed Aug. 15, 2001.

Component (ii) is advantageously contained in the composition of the invention in an amount from 0.5% to 45% by weight of the polylactic acid polymeric substrate; for instance 3% to 40%; for example 5% to 35% by weight of the polylactic acid component. For example, component (ii) is employed from 0.5% to 10% by weight, from 1% to 10%, from 3% to 10% or from 5% to 10% by weight, based on the weight of the polylactic acid polymer substrate. For example, component (ii) is employed from 0.5% to 8%, from 0.5% to 6%, from 0.5% to 5%, or from 0.5% to 3% by weight, based on the weight of the polylactic acid polymer substrate.

The ratio (parts by weight) of component (i) to component (ii) is for example between 1:5 to 1:200, for instance from 1:50 to 1:100, or 1:10 to 1:25. For example the ratio of component (i) to component (ii) is from 1:10 to 1:200, from 1:25 to 1:200, from 1:50 to 1:200 or from 1:100 to 1:200. For example, the weight ratio of component (i) to component (ii) is from 1:5 to 1:100, from 1:5 to 1:50, from 1:5 to 1:25, or from 1:5 to 1:10.

The amount of component (ii) used also depends on the effectiveness of the specific compound(s) and the specific application type.

The compositions of this invention may further comprise acid scavengers.

Acid scavengers are for example hydrotalcites and amorphous basic aluminum magnesium carbonates, such as those described in U.S. Pat. Nos. 4,427,816, 5,106,898 and 5,234,981, the relevant disclosures of which are hereby incorporated by reference. Hydrotalcite is also known as hycite or DHT4A.

Hydrotalcites are natural or synthetic. The natural hydrotalcite is held to possess a structure Mg₆Al₂(OH)₁₆CO₃ · 4 H₂O.

A typical empirical formula of a synthetic hydrotalcite is Al₂Mg_{4.35}OH_{11.36}CO_{3(1.67)} · x H₂O.

Examples of the synthetic product include: Mg_{0.7}Al_{0.3}(OH)₂(CO₃)_{0.15} · 0.54 H₂O, Mg_{4.5}Al₂(OH)₁₃CO₃ · 3.5 H₂O and Mg_{4.2}Al(OH)_{12.4}CO₃.

The acid scavengers are present in the polylactic acid polymeric compositions for example at a level of 0.1% to 1.0% by weight, based on the weight of the polylactic acid component. For instance, the present acid scavengers are present from 0.2% to to 0.8% or from 0.4% to 0.6% by weight, based on the weight of the polylactic acid component. For example, the present acid scavengers are present from 0.1 % to 0.8%, from 0.1 % to 0.6%, from 0.1% to 0.4% or from 0.1% to 0.2% by weight based on the weight of the polylactic acid component. For instance, the present acid scavengers are present from 0.2% to 1.0%, from 0.4% to 1.0%, from 0.6% to 1.0% or from 0.8% to 1.0% by weight based on the weight of the polylactic acid component.

The acid scavengers aid the present compositions in color, odor and stability.

The present polymer compositions can contain further additives. These additional additives are mainly from the group of heat stabilizers and /or light stabilizers. The thermal stabilization embraces both processing and use (long-term stability). Said additives are known to the skilled person and most of them are commercially available.

Suitable additional additives are for example:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.

1.4. Tocopherols, for example α-tocopherol, β-tocopherol, γ-tocopherol, δ-tocopherol and mixtures thereof (Vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis(2,6-dimethyl-4-hydroxyphenyl)disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylene-bis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.

1.7. O-, N- and S-benzyl compounds, for example 3,5,3',5'-tetra-tort-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, didodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicydohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)-hydrazide, N,N'-bis[2-(3-[3,5-di-tert-butyl-4-hydroxyphenyl]propionyloxy)ethyl]oxamide (Naugard^{®}XL-1 supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyGohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cydohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylaminies, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octyl-phenothiazines, N-allylphenothiazin, N,N,N',N'-tetraphenyl-1,4-diaminobut-2-ene, N,N-bis-(2,2,6,6-tetramethyl-piperid-4-yl-hexamethytenediamine, bis(2,2,6,6-tetramethylpiperid-4-yl)-sebacate, 2,2,6,6-tetramethylpiperidin-4-one, 2,2,6,6-tetramethylpiperidin-4-ol.

### 2. UV absorbers and light stabilizers

2.1. 2-(2'-Hydroxyphenyl)benzotriazoles, for example known commercial hydroxyphenyl-2H-benzotriazoles and benzotriazoles as disclosed in, United States Patent Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905,4,853,471; 5,268,450; 5,278,314; 5,280,124; 5,319,091; 5,410,071; 5,436,349; 5,516,914; 5,554,760; 5,563,242; 5,574,166; 5,607,987, 5,977,219 and 6,166,218 such as 2-(2-hydroxy-5-methylphenyl)-2H-benzotriazole, 2-(3,5-di-t-butyl-2-hydroxyphenyl)-2H-benzotriazole, 2-(2-hydroxy-5-t-butylphenyl)-2H-benzotriazole, 2-(2-hydroxy-5-t-octylphenyl)-2H-benzotriazole, 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole, 2-(3-sec-butyl-5-t-butyl-2-hydroxyphenyl)-2H-benzotriazole, 2-(2-hydroxy-4-octyloxyphenyl)-2H-benzotriazole, 2-(3,5-di-t-amyl-2-hydroxyphenyl)-2H-benzotriazole, 2-(3,5-bis-α-cumyl-2-hydroxyphenyl)-2H-benzotriazole, 2-(3-t-butyl-2-hydroxy-5-(2-(ω-hydroxy-octa-(ethyleneoxy)carbonyl-ethyl)-, phenyl)-2H-benzotriazole, 2-(3-dodecyl-2-hydroxy-5-methylphenyl)-2H-benzotriazole, 2-(3-t-butyl-2-hydroxy-5-(2-octyloxycarbonyl)ethylphenyl)-2H-benzotriazole, dodecylated 2-(2-hydroxy-5-methylphenyl)-2H-benzotriazole, 2-(3-t-butyl-2-hydroxy-5-(2-octyloxycarbonylethyl)phenyl)-5-chloro-2H-benzotriazole, 2-(3-tert-butyl-5-(2-(2-ethylhexyloxy)-carbonylethyl)-2-hydroxyphenyl)-5-chloro-2H-benzotriazole, 2-(3-t-butyl-2-hydroxy-5-(2-methoxycarbonylethyl)phenyl)-5-chloro-2H-benzotriazole, 2-(3-t-butyl-2-hydroxy-5-(2-methoxycarbonylethyl)phenyl)-2H-benzotriazole, 2-(3-t-butyl-5-(2-(2-ethylhexyloxy)carbonylethyl)-2-hydroxyphenyl)-2H-benzotriazole, 2-(3-t-butyl-2-hydroxy-5-(2-isooctyloxycarbonylethyl)phenyl-2H-benzotriazole, 2,2'-methylene-bis(4-t-octyl-(6-2H-benzotriazol-2-yl)phenol), 2-(2-hydroxy-3-α-cumyl-5-t-octylphenyl)-2H-benzotriazole, 2-(2-hydroxy-3-t-octyl-5-α-cumylphenyl)-2H-benzotriazole, 5-fluoro-2-(2-hydroxy-3,5-di-α-cumylphenyl)-2H-benzotriazole, 5-chloro-2-(2-hydroxy-3,5-di-α-cumylphenyl)-2H-benzotriazole, 5-chloro-2-(2-hydroxy-3-α-cumyl-5-t-octylphenyl)-2H-benzotriazole, 2-(3-t-butyl-2-hydroxy-5-(2-isooctyloxycarbonylethyl)phenyl)-5-chloro-2H-benzotriazole, 5-trifluoromethyl-2-(2-hydroxy-3-α-cumyl-5-t-octylphenyl)-2H-benzotriazole, 5-trifluoromethyl-2-(2-hydroxy-5-t-octylphenyl)-2H-benzotriazole, 5-trifluoromethyl-2-(2-hydroxy-3,5-di-t-octylphenyl)-2H-benzotriazole, methyl 3-(5-trifluoromethyl-2H-benzotriazol-2-yl)-5-t-butyl-4-hydroxyhydrocinnamate, 5-butylsulfonyl-2-(2-hydroxy-3-α-cumyl-5-t-octylphenyl)-2H-benzotriazole, 5-trifluoromethyl-2-(2-hydroxy-3-α-cumyl-5-t-butylphenyl)-2H-benzotriazole, 5-trifluoromethyl-2-(2-hydroxy-3,5-di-t-butylphenyl)-2H-benzotriazole, 5-trifluoromethyl-2-(2-hydroxy-3,5-di-α-cumylphenyl)-2H-benzotriazole, 5-butylsulfonyl-2-(2-hydroxy-3,5-di-t-butylphenyl)-2H-benzotriazole and 5-phenylsulfonyl-2-(2-hydroxy-3,5-di-t-butylphenyl)-2H-benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, as for example 4-tertbutyl-phenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylaaylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxy-cinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decan-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis-(2,2,6,6-tetramethyl-4-piperidyl)hexamethylenediamine and 4-morpholino-2,6-dichloro-1,3,5-briazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexarnethylenediamine and 4-cydohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-a-olefin-copolymer with 2,2,6,6-tetramethyl-4-aminopiperidine or 1,2,2,6,6-pentamethyl-4-aminopiperidine.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.8. 2-(2-Hydroxyphenyl)-1,3,5-triazines, for example known commercial tris-aryl-o-hydroxyphenyl-s-triazines and triazines as disclosed in, WO 96/28431 and United States Patent Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,736,597; 5,942,626; 5,959,008; 5,998,116; 6,013,704; 6,060,543; 6,187,919; 6,242,598 and 6,255,483, for example 4,6-bis-(2,4-dimethylphenyl)-2-(2-hydroxy-4-octyloxyphenyl)-s-triazine, Cyasorb^{®} 1164, Cytec Corp, 4,6-bis-(2,4-dimethylphenyl)-2-(2,4-dihydroxyphenyl)-s-triazine, 2,4-bis(2,4-dihydroxyphenyl)-6-(4-chlorophenyl)-s-triazine, 2,4-bis[2-hydroxy-4-(2-hydroxyethoxy)phenyl]-6-(4-chlorophenyl)-s-triazine, 2,4-bis[2-hydroxy-4-(2-hydroxy-4-(2-hydroxyethoxy)phenyl]-6-(2,4-dimethylphenyl)-s-triazine, 2,4-bis[2-hydroxy-4-(2-hydroxyethoxy)phenyl]-6-(4-bromophenyl)-s-triazine, 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,4-bis(4-biphenylyl)-6-(2-hydroxy-4-octyloxycarbonylethylideneoxyphenyl)-s-triazine, 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)-phenyl]-s-triazine, 2,4-bis(2,4-dimethylphenyl)-6-[2-hydroxy-4-(3-benzyloxy-2-hydroxy-propyloxy)phenyl]-s-triazine, 2,4-bis(2-hydroxy-4-n-butyloxyphenyl)-6-(2,4-di-n-butyloxyphenyl)-s-triazine, 2,4-bis(2,4-dimethylphenyl)-6-[2-hydroxy-4-(3-nonyloxy*-2-hydroxy-propyloxy)-5-α-cumylphenyl]-s-triazine (* denotes a mixture of octyloxy, nonyloxy and decyloxy groups), methylenebis-{2,4-bis(2,4-dimethylphenyl)-6-[2-hydroxy-4-(3-butyloxy-2-hydroxypropoxy)phenyl]-s-triazine}, methylene bridged dimer mixture bridged in the 3:5', 5:5' and 3:3' positions in a 5:4:1 ratio, 2,4,6-tris(2-hydroxy-4-isooctyloxycarbonylisopropylidene-oxyphenyl)-s-triazine, 2,4-bis(2,4-dimethylphenyl)-6-(2-hydroxy-4-hexyloxy-5-α-cumylphenyl)-s-triazine, 2-(2,4,6-trimethylphenyl)-4,6-bis[2-hydroxy-4-(3-butyloxy-2-hydroxy-propyloxy)phenyl]-s-triazine, 2,4,6-tris[2-hydroxy-4-(3-sec-butyloxy-2-hydroxypropyloxy)-phenyl]-s-triazine, mixture of 4,6-bis-(2,4-dimethylphenyl)-2-(2-hydroxy-4-(3-dodecyloxy-2-hydroxypropoxy)-phenyly)s-triazine and 4,6-bis-(2,4-dimethylphenyl)-2-(2-hydroxy-4-(3-tridecyloxy-2-hydroxypropoxy)-phenyl)-s-triazine, Tinuvin^{®} 400, Ciba Specialty Chemicals Corp., 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine.

3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, 6-fluoro-2,4,8,10-tetra-tert-butyl-12-methyl-dibenz[d,g]-1,3,2-dioxaphosphocin, bis(2,4-di-tert-butyl-6-methylphenyl) methyl phosphite, bis(2,4-di-tert-butyl-6-methylphenyl) ethyl phosphite, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite.

Especially preferred are the following phosphites:
Tris(2,4-di-tert-butylphenyl) phosphite (Irgafos^{®}168, Ciba-Geigy), tris(nonylphenyl) phosphite,

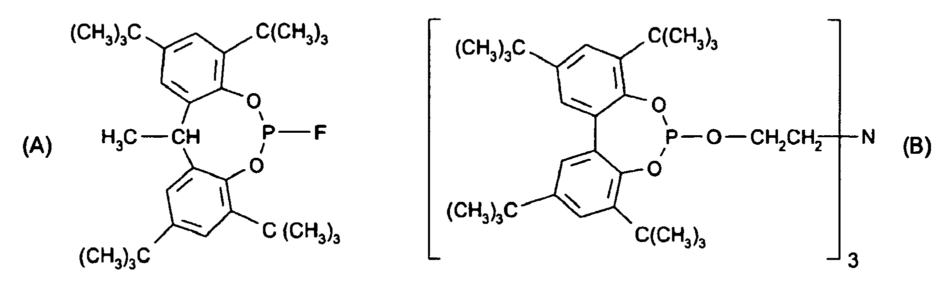

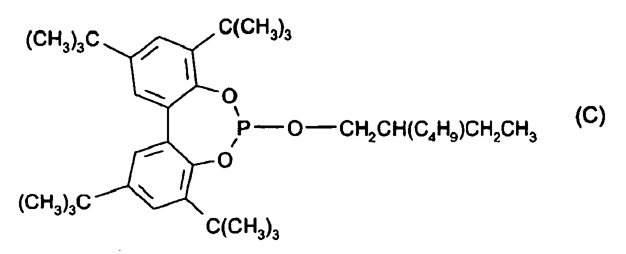

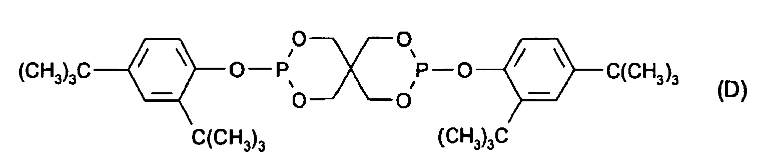

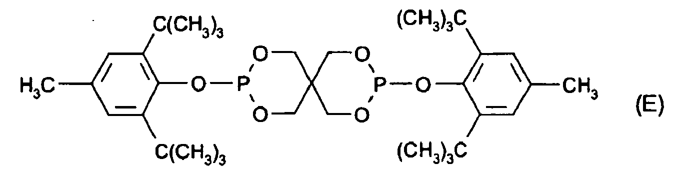

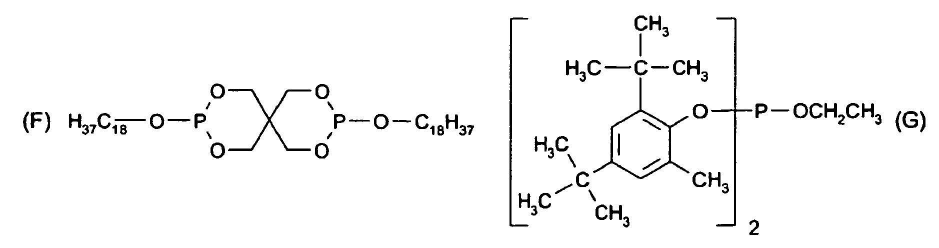

5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridcyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.

7. Thiosynergists, for example dilauryl thiodipropionate or distearyl thiodipropionate.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Polvamide stabilizers, for example copper salts in combination with iodides and/or phosphorus compounds and salts of divalent manganese.

10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example, calcium stearate, zinc stearate, magnesium behenate, magnesium stearate, sodium ricinoleate and potassium palmitate, antimony pyrocatecholate or zink pyrocatecholate.

11. Nucleating agents, for example inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers).

12. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.

13. Other additives, for example plasticisers, lubricants, emulsifiers, pigments, rheology additives, catalysts, flow-control agents, optical brighteners, flameproofing agents, antistatic agents and blowing agents.

14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, 3-(2,3-dimethylphenyl)-5,7-di-tert-butyl-benzofuran-2-one.

Suitable lubricants are for example:
montan wax, fatty acid esters, PE waxes, amide waxes, polyol partial esters, partially saponified PE waxes, so-called complex ester chloroparaffins, glycerol esters, alkaline earth metal soaps or fatty ketones, such as described in DE4204887. Suitable lubricants are also described in "Taschenbuch der Kunststoffadditive", editors R. Gächter and H. Müller, Hanser Verlag, 3^{rd} edition, 1990, pages 443-503. Other lubricant embodiments, in particular combinations of lubricants, are to be found in EP 0062813 and EP 0336289.

The instant composition can additionally contain another UV absorber selected from the group consisting of the s-triazines, the oxanilides, the hydroxybenzophenones, benzoates and the α-cyanoacrylates. Particularly, the instant composition may additionally contain an effective stabilizing amount of at least one other 2-hydroxyphenyl-2H-benzotriazole; another tris-aryl-s-triazine; or hindered amine or mixtures thereof. For example, additional components are selected from pigments, dyes, plasticizers, antioxidants, thixotropic agents, levelling assistants, basic costabilizers, further light stabilizers like UV absorbers and/or sterically hindered amines, metal passivators, metal oxides, organophosphorus compounds, hydroxylamines, and mixtures thereof, especially pigments, phenolic antioxidants, calcium stearate, zinc stearate, phosphite and phosphonite stabilizers, benzofuranone stabilizers, UV absorbers of the 2-(2'-hydroxyphenyl)benzotriazole and 2-(2-hydroxyphenyl)-1,3,5-triazine classes, and sterically hindered amines.

The compositions of this invention may be prepared by known methods, for example by mixing the cited additives and optional further additives with the polymer using appliances such as calenders, mixers, kneaders, extruders and the like. The additives can be added singly or in admixture with each other. It is also possible to use masterbatches. For masterbatches, the carrier polymer is not necessarily a polylactic acid polymer. In such operations, the carrier polymer can be used in the form of powder, granules, solutions, suspensions or in the form of latices.

The flame retardant finished polymers of the invention may be brought into the desired form by known methods. Such methods are, for example, calendering, extruding, spray coating, spinning, compression melting, rotational casting, thermoforming or extrusion blowing. The flame retardant finished polymer can also be processed into foamed articles.

The finished flame retardant polylactic acid polymer articles are for example fibers, films, molded articles and foamed articles.

The additives of the invention and optional further components may be added to the polymer material individually or mixed with one another. If desired, the individual components can be mixed with one another before incorporation into the polymer for example by dry blending, compaction or in the melt.

Further, the instant invention pertains to a process for imparting light stability and flame retardancy to a polylactic acid polymer substrate, which process comprises adding to said polymer substrate a synergistic mixture of
(i) at least one sterically hindered amine stabilizer and
(ii) at least one conventional flame retardant selected from the group consisting of the organohalogen, phosphorus containing, isocyanurate and melamine based flame retardants.

A molded polylactic acid polymer article made flame retardant by the incorporation therein of a synergistic mixture of
(i) at least one sterically hindered amine stabilizer and
(ii) at least one conventional flame retardant selected from the group consisting of the organohalogen, phosphorus containing, isocyanurate and melamine based flame retardants is another object of the invention.
Of interest are molded polylactic polymer articles, wherein the component (i) is selected from the group consisting of suitable hindered amines as mentioned above.
Also of interest are molded polylactic polymer articles, wherein the component (ii) is selected from the group consisting of conventional flame retardants as mentioned above.

It is also contemplated that PTFE, polytetrafluoroethylene (for example Teflon^{®} 6C; E. I. Du Pont), may be advantageously added to the present compositions as an additional flame retardant, as disclosed in U.S. application 60/312,517, filed Aug. 15, 2001.

The effective flame retarding amount of components (i) and (ii) is that needed to show flame retarding efficacy as measured by one of the standard methods used to assess flame retardancy. These include the NFPA 701 Standard Methods of Fire Tests for Flame-Resistant Textiles and Films, 1989 and 1996 editions; the UL 94 Test for Flammability of Plastic Materials for Parts in Devices and Appliances, 5th Edition, October 29, 1996; Limiting Oxygen Index (LOI), ASTM D-2863; and Cone Calorimetry, ASTM E-1354. Ratings according to the UL 94 V test are as compiled in the following table:

| Rating | Afterflame time | Burning drips | Burn to Clamp |
|---|---|---|---|
| V-0 | < 10 s | no | no |
| V-1 | < 30 s | no | no |
| V-2 | < 30 s | yes | no |
| Fail | < 30 s | | yes |
| Fail | > 30 s | | no |

Coadditives found particularly useful for use with the instant combination of components (i) and (ii) in present flame retardant compositions are as follows:

UV absorbers:
2-(2-hydroxy-3,5-di-α-cumylphenyl)-2H-benzotriazole, (TINUVIN^{®} 234, Ciba Specialty Chemicals Corp.);
2-(2-hydroxy-5-methylphenyl)-2H-benzotriazole, (TINUVIN^{®} P, Ciba Specialty Chemicals Corp.);
5-chloro-2-(2-hydroxy-3,5-di-tert-butylphenyl)-2H-benzotriazole, (TINUVIN^{®} 327, Ciba Specialty Chemicals Corp.);
2-(2-hydroxy-3,5-di-tert-amylphenyl)-2H-benzotriazole, (TINUVIN^{®} 328, Ciba Specialty Chemicals Corp.);
2-(2-hydroxy-3-α-cumyl-5-tert-octylphenyl)-2H-benzotriazole, (TINUVIN^{®} 928, Ciba Specialty Chemicals Corp.);
2,4-di-tert-butytphenyl 3,5-di-tert-butyl-4-hydroxybenzoate, (TINUVIN^{®} 120, Ciba Specialty Chemicals Corp.);
2-hydroxy-4-n-octyloxybenzophenone, (CHIMASSORB^{®} 81, Ciba Specialty Chemicals Corp.);
2,4-bis(2,4-dimethyphenyl)-6-(2-hydroxy-4-octyloxyphenyl)-s-triazine, (CYASORB^{®} 1164, Cytec).

The following examples are meant for illustrative purposes only and are not to be construed to limit the scope of this invention in any manner whatsoever. Where given, room temperature depicts a temperature in the range 20-25°C. Percentages are by weight of the polymer substrate unless otherwise indicated.

### Abbreviations:

- v: parts by volume
- w: parts by weight
- ¹Hnmr: nuclear magnetic resonance (NMR) of ¹H
- m/z: mass spectrometry (atomic units)
- amu: molecular weight in g/mol (= atomic units)
- PLA: polylactic acid

### Test Methods

NFPA 701 Standard Methods of Fire Tests for Flame-Resistant Textiles and Films, 1989 and 1996 editions;
UL 94 Test for Flammability of Plastic Materials for Parts in Devices and Appliances, 5th Edition, October 29, 1996;
Limiting Oxygen Index (LOI), ASTM D-2863;
Cone Calorimetry, ASTM E-1 or ASTM E 1354;
ASTM D 2633-82, bum test.

### Test compounds

Hindered amines of present component (i):
NOR1 1-cyclohexyloxy-2,2,6,6-tetramethyl-4-octadecylaminopiperidine;
NOR2 bis(1-octyloxy-2,2,6,6-tetramethylpiperidin-4-yl) sebacate;
NOR3 2,4-bis[(1-cyclohexyloxy-2,2,6,6-tetramethylpiperidin-4-yl)butylamino]-6-(2-hydroxyethylamino-s-triazine;
NOR3 bis(1-cyclohexyloxy-2,2,6,6-tetramethylpiperidin-4-yl) adipate;
NOR4 2,4-bis[(1-cyclohexyloxy-2,2,6,6-tetramethylpiperidin-4-yl)butylamino]-6-chloro-s-triazine;
NOR5 1-(2-hydroxy-2-methylpropoxy)-4-hydroxy-2,2,6,6-tetramethylpiperidine;
NOR6 1-(2-hydroxy-2-methylpropoxy)-4-oxo-2,2,6,6-tetramethylpiperidine;
NOR7 1-(2-hydroxy-2-methylpropoxy)-4-octadecanoyloxy-2,2,6,6-tetramethylpiperidine;
NOR8 bis(1-(2-hydroxy-2-methylpropoxy)-2,2,6,6-tetramethylpiperidin-4-yl) sebacate;
NOR9 bis(1-(2-hydroxy-2-methylpropoxy)-2,2,6,6-tetramethylpiperidin-4-yl) adipate;
NOR10 2,4-bis{N-[1-(2-hydroxy-2-methylpropoxy)-2,2,6,6-tetramethylpiperidin-4-yl]-N-butylamino}-6-(2-hydroxyethylamino)-s-triazine;
NOR11 the reaction product of 2,4-bis[(1-cyclohexyloxy-2,2,6,6-tetramethylpiperidin-4-yl)butylamino]-6-chloro-s-triazine with N,N'-bis(3-aminopropyl)ethylenediamine) [CAS Reg. No. 191680-81-6];
NOR11 is represented as a mixture of compounds with main component of the formula

   R₁NH-CH₂CH₂CH₂NR₂CH₂CH₂NR₃CH₂CH₂CH₂NHR₄
wherein 3 of R₁, R₂, R₃ and R₄ are residues of formula 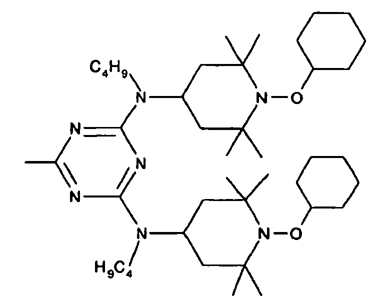 and 1 of R₁, R₂, R₃ and R₄ is
hydrogen
(NOR11 is a high molecolar weight compound disclosed in example 3 of U.S. Pat. No. 5,844,026); and
NOR12 the compound of formula 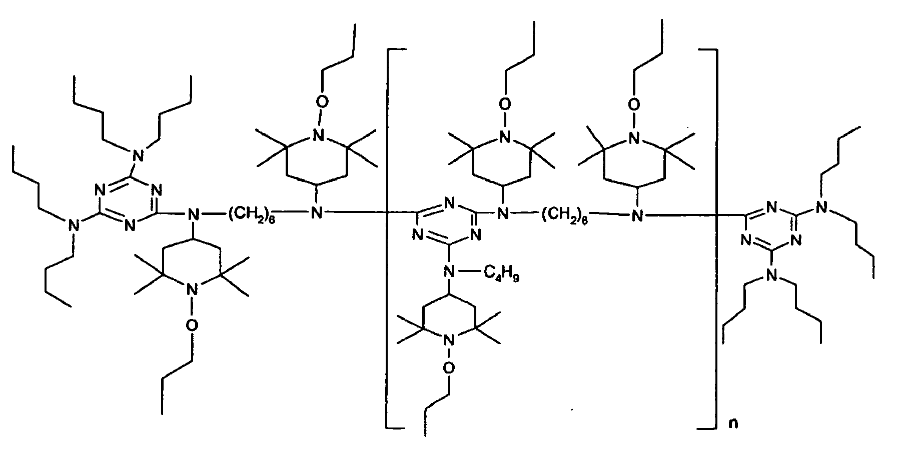 in which n is from 1 to 15.

Conventional flame retardants of component (ii):
DBDPO is decabromodiphenyl oxide,
FR1 tris[3-bromo-2,2-bis(bromomethyl)propyl] phosphate, (PB 370^{®}, FMC Corp.),
FR2 ammonium polyphosphate (APP),
FR3 tetrabromobisphenol A bis(2,3-dibromopropyl ether) (PE68),
FR4 ammonium polyphosphate/synergist blend, HOSTAFLAM^{®}AP750,
FR5 decabromodiphenyl oxide (DBDPO; obtained from Dead Sea Bromine),
FR6 ethylene bis-(tetrabromophthalimide), (SAYTEX^{®}BT-93),
FR7 melamine phosphate, MELAPUR^{®} P 46,
FR8 ammonium polyphosphate, EXOLIT^{®} AP752,
FR9 tris-(2,3-dibromopropyl)-isocyanurate,
FR10 hexabromocyclododecane,
FR11 melamine cyanurate, MELAPUR^{®} MC,
FR12 melamine borate,
FR13 melamine polyphosphate MELAPUR^{®} 200 and
FR14 melamine pyrophosphate.

Compounds NOR2, NOR7, NOR11, NOR12 are commercial stabilizers available from Ciba Specialty Chemicals. MELAPUR products are available from Ciba Specialty Chemicals.

### Example 1

Polylactic acid polymer resin is blended with test additives by using a Turbula mixer for 15-20 minutes. Total formulation size is 1000g. The mixtures are then extruded with a 27 mm Leistritz twin screw extruder at 160-190°C. The obtained resin is palletized with a cutter. The compounded pellets are then injection molded into 5" x 0.5" x 0.125" bars. Flame retardancy is measured by the UL 94 test. Results are below. Additives are weight percent based on the total formulation. Two sets of tests are performed.

| NOR11 | FR1 | FR5 | rating |
|---|---|---|---|
| ---- | ---- | ---- | fail |
| 0.25 | ---- | ---- | fail |
| 0.5 | ---- | ---- | V2 |
| 1.0 | ---- | ---- | fail |
| ---- | 5 | ---- | fail |
| ---- | 10 | ---- | V2 |
| ---- | ---- | 5 | V2 |
| ---- | ---- | 10 | V2 |
| 1.0 | 5 | ---- | V0 |
| 0.25 | 10 | ---- | V0 |
| 0.25 | ---- | 10 | V0 |

| NOR11 | FR1 | FR5 | rating |
|---|---|---|---|
| ---- | ---- | ---- | fail |
| 0.25 | ---- | ---- | fail |
| 0.5 | ---- | ---- | fail |
| 1.0 | ---- | ---- | V2 |
| ---- | 5 | ---- | V2 |
| ---- | ---- | 2.5 | fail |
| ---- | ---- | 5.0 | V2 |
| ---- | ---- | 10 | V2 |
| 0.5 | 5 | ---- | V0 |
| 0.5 | ---- | 10 | V0 |

The flame retardant combination of a present hindered amine and a conventional flame retardant is synergistic in polylactic acid.

NOR11 may be replaced with one or more hindered amines selected from NOR1-NOR10 and NOR12. FR1 and FR5 may be replaced by one or more flame retardants selected from FR2-FR4 and FR6-FR14.

## Claims

1. A flame retardant polylactic acid polymer composition which comprises
a polylactic acid polymer substrate and a synergistic mixture of
(i) at least one sterically hindered amine stabilizer and
(ii) at least one conventional flame retardant selected from the group consisting of the organohalogen, phosphorus containing, isocyanurate and melamine based flame retardants.

2. A composition according to claim **1** in which the stabilizers of component (i) are of the formula 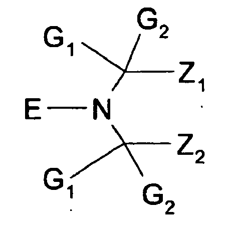 where
G₁ and G₂ are independently alkyl of 1 to 8 carbon atoms or are together pentamethylene,
Z₁ and Z₂ are each methyl, or Z₁ and Z₂ together form a linking moiety which may additionally be substituted by an ester, ether, amide, amino, carboxy or urethane group, and
E is oxyl, hydroxyl, alkoxy, cycloalkoxy, aralkoxy, aryloxy, -O-CO-OZ₃, -O-Si(Z₄)₃, -O-PO(OZ₅)₂ or -O-CH₂-OZ₆ where Z₃, Z₄, Z₅ and Z₆ are selected from the group consisting of hydrogen, an aliphatic, araliphatic and aromatic moiety; or E is -O-T-(OH)_{b},
T is a straight or branched chain alkylene of 1 to 18 carbon atoms, cycloalkylene of 5 to 18 carbon atoms, cycloalkenylene of 5 to 18 carbon atoms, a straight or branched chain alkylene of 1 to 4 carbon atoms substituted by phenyl or by phenyl substituted by one or two alkyl groups of 1 to 4 carbon atoms; and
b is 1, 2 or 3 with the proviso that b cannot exceed the number of carbon atoms in T, and when b is 2 or 3, each hydroxyl group is attached to a different carbon atoms of T.

3. A composition according to claim **1** in which the stabilizers of component (i) are of the formula A-R 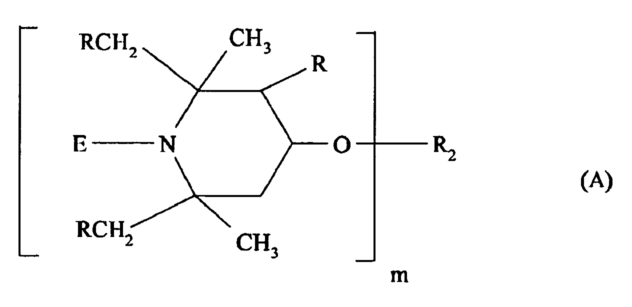 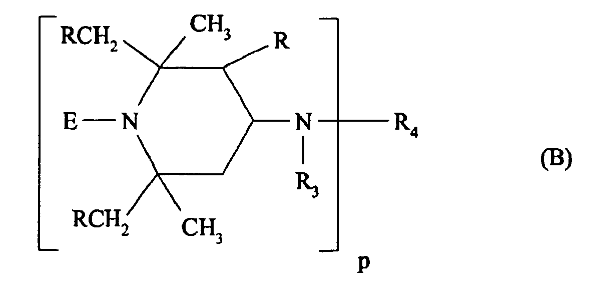 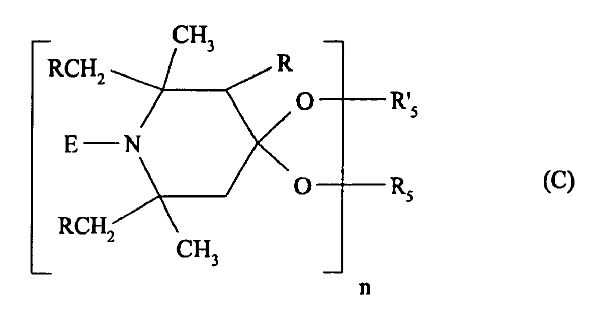 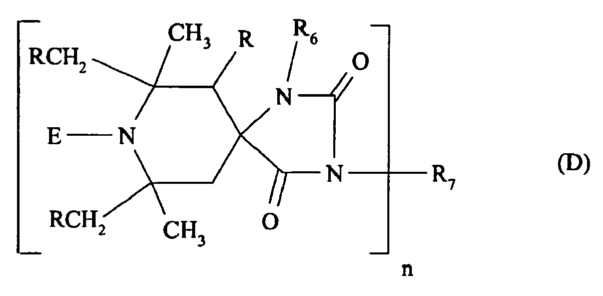 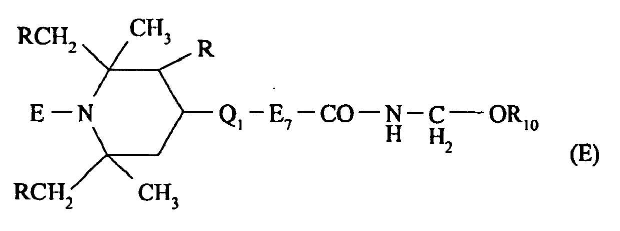 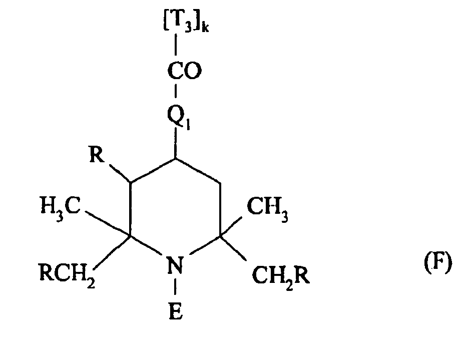 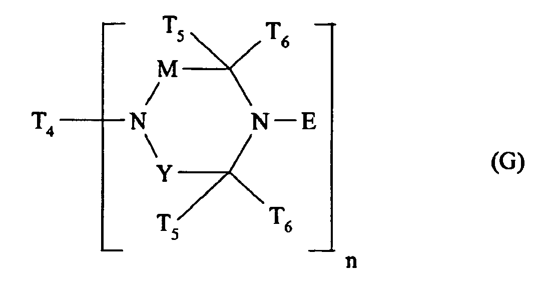 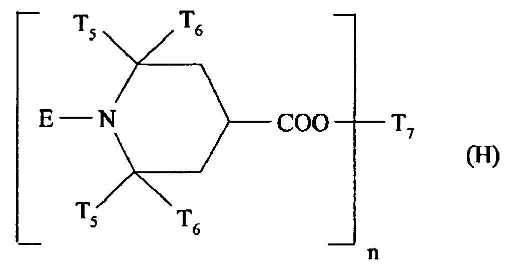 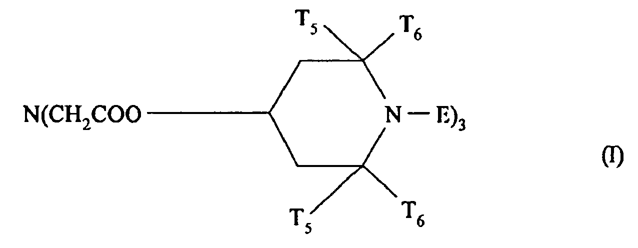 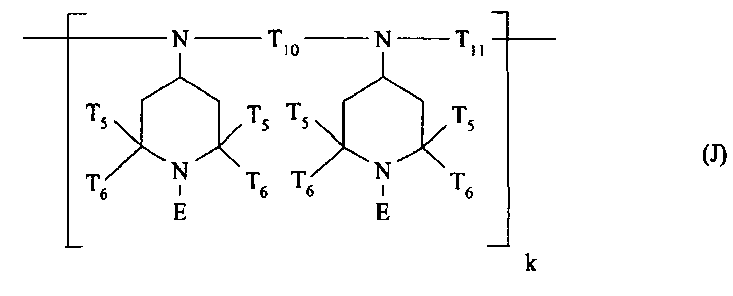 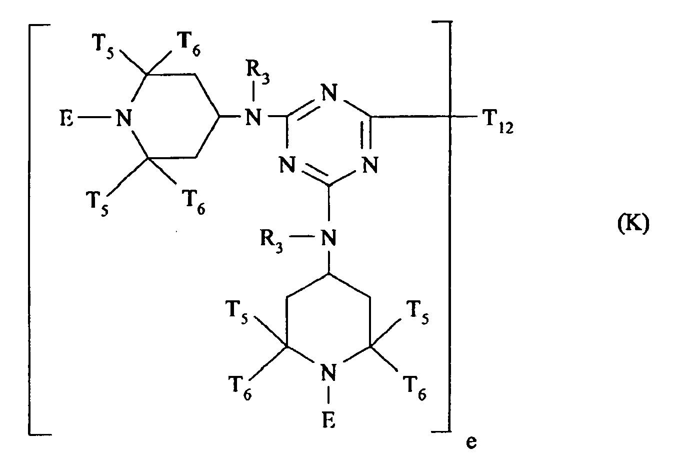 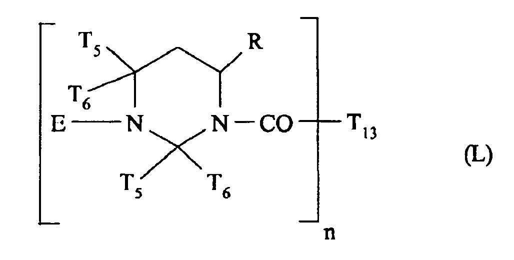 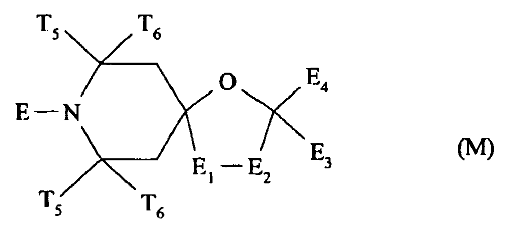 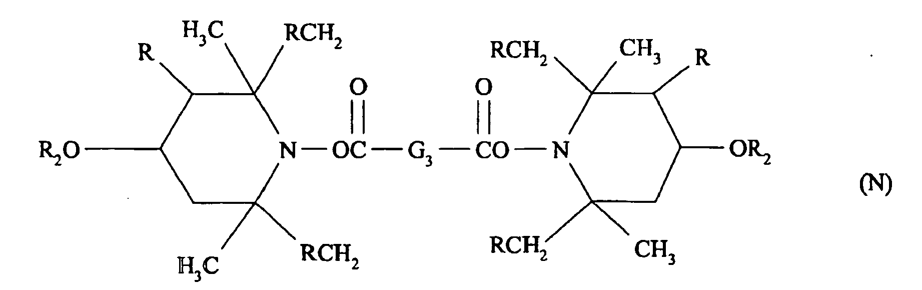 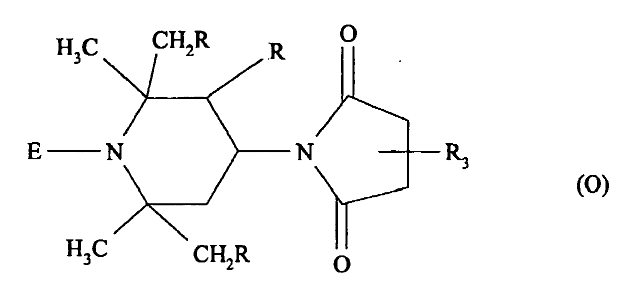 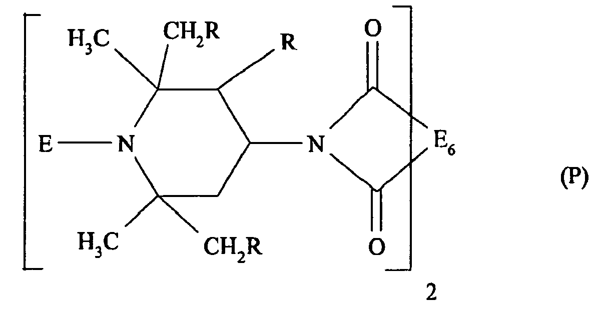 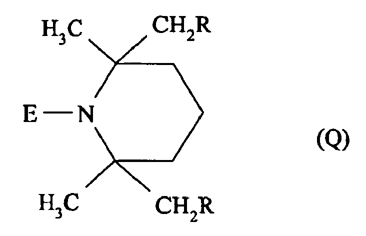 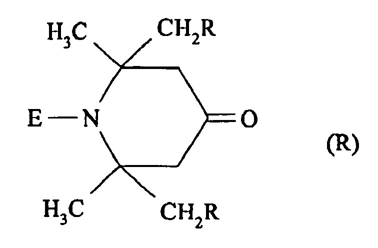 wherein
E is oxyl, hydroxyl, alkoxy of 1 to 18 carbon atoms, cycloalkoxy of 5 to 12 carbon atoms or aralkoxy of 7 to 15 carbon atoms, or E is -O-T-(OH)_{b},
T is a straight or branched chain alkylene of 1 to 18 carbon atoms, cycloalkylene of 5 to 18 carbon atoms, cycloalkenylene of 5 to 18 carbon atoms, a straight or branched chain alkylene of 1 to 4 carbon atoms substituted by phenyl or by phenyl substituted by one or two al kyl groups of 1 to 4 carbon atoms;
b is 1, 2 or 3 with the proviso that b cannot exceed the number of carbon atoms in T, and when b is 2 or 3, each hydroxyl group is attached to a different carbon atoms of T;
R is hydrogen or methyl,
m is 1 to 4,
when m is 1,
R₂ is hydrogen, C₁-C₁₈alkyl or said alkyl optionally interrupted by one or more oxygen atoms, C₂-C₁₂alkenyl, C₆-C₁₀aryl, C₇-C₁₈aralkyl, glycidyl, a monovalent acyl radical of an aliphatic,cycloaliphatic or aromatic carboxylic acid, or a carbamic acid, of a cycloaliphatic carboxylic acid having 5-12 C atoms or of an aromatic carboxylic acid having 7-15 C atoms, or 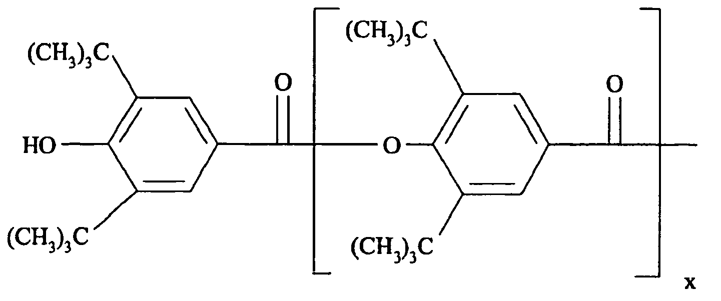 wherein x is 0 or 1, 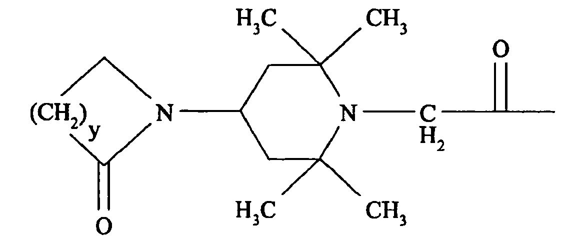
wherein y is 2-4;
when m is 2,
R₂ is C₁-C₁₂alkylene, C₄-C₁₂alkenylene, xylylene, a divalent acyl radical of an aliphatic, cycloaliphatic, araliphatic or aromatic dicarboxylic acid or of a dicarbamic acid, of an aliphatic dicarboxylic acid having 2-18 C atoms, of a cycloaliphatic or aromatic dicarboxylic acid having 8-14 C atoms, or of an aliphatic, cycloaliphatic or aromatic dicarbamic acid having 8-14 C atoms; 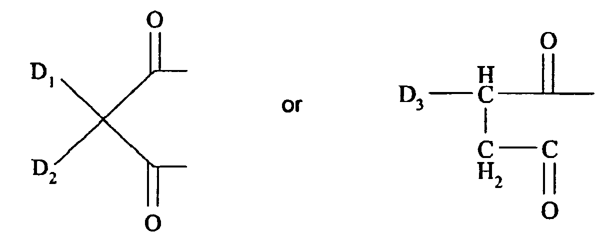 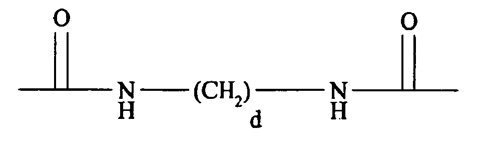 wherein D₁ and D₂ are independently hydrogen, an alkyl radical containing up to 8 carbon atoms, an aryl or aralkyl radical including 3,5-di-t-butyl-4-hydroxybenzyl radical, D₃ is hydrogen, or an alkyl or alkenyl radical containing up to 18 carbon atoms, and d is 0-20;
when m is 3, R₂ is a trivalent acyl radical of an aliphatic, unsaturated aliphatic, cycloaliphatic, or aromatic tricarboxylic acid;
when m is 4, R₂ is a tetravalent acyl radical of a saturated or unsaturated aliphatic or aromatic tetracarboxylic acid including 1,2,3,4-butanetetracarboxylic acid, 1,2,3,4-but-2-ene-tetracarboxylic , and 1,2,3,5- and 1,2,4,5-pentanetetracarboxylic acid;
p is 1, 2 or 3,
R₃ is hydrogen, C₁-C₁₂alkyl, C₅-C₇cycloalkyl, C₇-C₉aralkyl, C₂-C₁₈alkanoyl, C₃₋C₅alkenoyl or benzoyl;
when p is 1,
R₄ is hydrogen, C₁-C₁₈alkyl, C₅-C₇cycloalkyl, C₂-C₈alkenyl, unsubstituted or substituted by a cyano, carbonyl or carbamide group, aryl, aralkyl, or it is glycidyl, a group of the formula -CH₂CH(OH)-Z or of the formula -CO-Z or -CONH-Z wherein Z is hydrogen, methyl or phenyl; or a group of the formulae 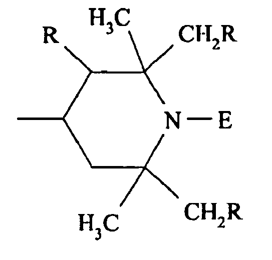
or 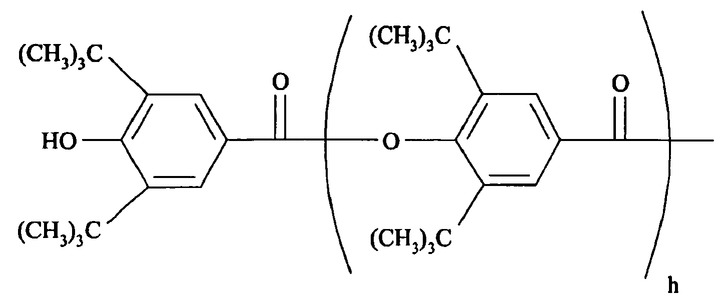 where h is 0 or 1,
R₃ and R₄ together, when p is 1, can be alkylene of 4 to 6 carbon atoms or 2-oxo-polyalkylene the cyclic acyl radical of an aliphatic or aromatic 1,2- or 1,3-dicarboxylic acid,
when p is 2,
R₄ is a direct bond or is C₁-C₁₂alkylene, C₆-C₁₂arylene, xylylene, a -CH₂CH(OH)-CH₂ group or a group -CH₂-CH(OH)-CH₂-O-X-O-CH₂-CH(OH)-CH₂- wherein X is C₂-C₁₀alkylene, C₆-C₁₅arylene or C₆-C₁₂cycloalkylene; or, provided that R₃ is not alkanoyl, alkenoyl or benzoyl, R₄ can also be a divalent acyl radical of an aliphatic, cycloaliphatic or aromatic dicarboxylic acid or dicarbamic acid, or can be the group -CO-; or
R₄ is 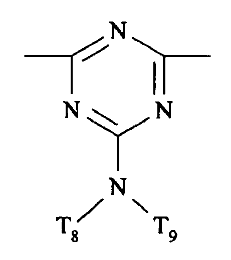
where T₈ and T₉ are independently hydrogen, alkyl of 1 to 18 carbon atoms, or T₈ and T₉ together are alkylene of 4 to 6 carbon atoms or 3-oxapentamethylene;
when p is 3,
R₄ is 2,4,6-triazinyl,
n is 1 or 2,
when n is 1,
R₅ and R'₅ are independently C₁-C₁₂ alkyl, C₂-C₁₂ alkenyl, C₇-C₁₂ aralkyl, or R₅ is also hydrogen, or R₅ and R'₅ together are C₂-C₈alkylene or hydroxyalkylene or C₄₋C₂₂acyloxyalkylene;
when n is 2,
R₅ and R'₅ together are (-CH₂)₂C(CH₂-)₂;
R₆ is hydrogen, C₁-C₁₂alkyl, allyl, benzyl, glycidyl or C₂-C₆alkoxyalkyl;
when n is 1,
R₇ is hydrogen, C₁-C₁₂alkyl, C₃-C₅alkenyl, C₇-C₉aralkyl, C₅-C₇cycloalkyl, C₂₋C₄hydroxyalkyl, C₂-C₆alkoxyalkyl, C₆-C₁₀ aryl, glycidyl, a group of the formula -(CH₂)ₜ-COO-Q or of the formula -(CH₂)ₜ-O-CO-Q wherein t is 1 or 2, and Q is C₁-C₄alkyl or phenyl; or
when n is 2,
R₇ is C₂-C₁₂alkylene, C₆-C₁₂arylene, a group -CH₂CH(OH)CH₂-O-X-O-CH₂-CH(OH)-CH₂- wherein X is C₂-C₁₀alkylene, C₆-C₁₅arylene or C₆-C₁₂cycloalkylene, or a group - CH₂CH(OZ')CH₂-(OCH₂-CH(OZ')CH₂)₂- wherein Z' is hydrogen, C₁-C₁₈alkyl, allyl, benzyl, C₂₋C₁₂alkanoyl or benzoyl;
Q₁ is -N(R₈)- or -O-; E₇ is C₁-C₃ alkylene, the group -CH₂-CH(R₉)-O- wherein R₉ is hydrogen, methyl or phenyl, the group -(CH₂)₃-NH- or a direct bond;
R₁₀ is hydrogen or C₁-C₁₈ alkyl, R₈ is hydrogen, C₁-C₁₈alkyl, C₅-C₇cycloalkyl, C₇₋C₁₂aralkyl, cyanoethyl, C₆-C₁₀aryl, the group -CH₂-CH(R₉)-OH wherein R₉ has the meaning defined above; a group of the formula 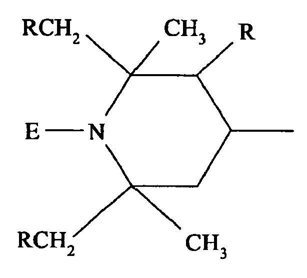 or a group of the formula 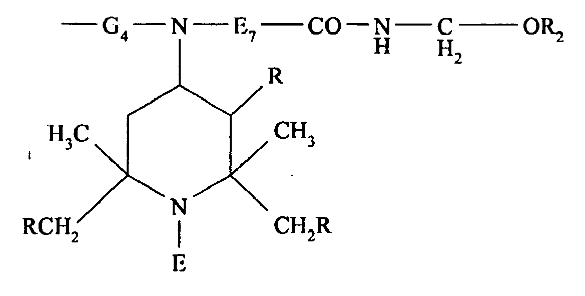
wherein G₄ is C₂-C₆alkylene or C₆-C₁₂arylene; or R₈ is a group -E₇-CO-NH-CH₂-OR₁₀;
Formula F denotes a recurring structural unit of a polymer where T₃ is ethylene or 1,2-propylene, is the repeating structural unit derived from an alpha-olefin copolymer with an alkyl acrylate or methacrylate; and where k is 2 to 100;
T₄ has the same meaning as R₄ when p is 1 or 2,
T₅ is methyl,
T₆ is methyl or ethyl, or T₅ and T₆ together are tetramethylene or pentamethylene,
M and Y are independently methylene or carbonyl, and T₄ is ethylene where n is 2;
T₇ is the same as R₇,
T₁₀ and T₁₁ are independently alkylene of 2 to 12 carbon atoms, or T₁₁ is 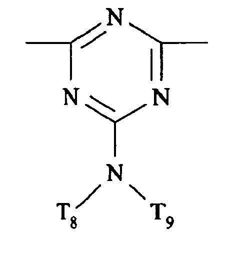
T₁₂ is piperazinyl,
-NR₁₁-(CH₂)_{d}-NR₁₁- or 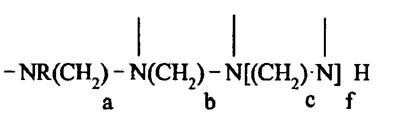
where R₁₁ is the same as R₃ or is also 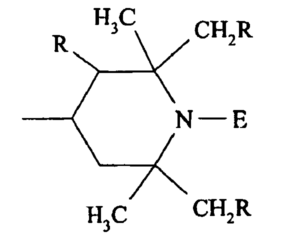
a, b and c are independently 2 or 3, and f is 0 or 1; and
e is 2, 3 or 4;
T₁₃ is the same as R₂ with the proviso that T₁₃ cannot be hydrogen when n is 1;
E₁ and E₂, being different, each are -CO- or -N(E₅)- where E₅ is hydrogen, C₁-C₁₂ alkyl or C₄-C₂₂ alkoxycarbonylalkyl,
E₃ is hydrogen, alkyl of 1 to 30 carbon atoms, phenyl, naphthyl, said phenyl or said naphthyl substituted by chlorine or by alkyl of 1 to 4 carbon atoms, or phenylalkyl of 7 to 12 carbon atoms, or said phenylalkyl substituted by alkyl of 1 to 4 carbon atoms,
E₄ is hydrogen, alkyl of 1 to 30 carbon atoms, phenyl, naphthyl or phenylalkyl of 7 to 12 carbon atoms, or
E₃ and E₄ together are polymethylene of 4 to 17 carbon atoms, or said polymethylene substituted by up to four alkyl groups of 1 to 4 carbon atoms,
E₆ is an aliphatic or aromatic tetravalent radical,
R₂ of formula (N) is a previously defined when m is 1;
G₁ a direct bond, C₁-C₁₂ alkylene, phenylene or -NH-G'-NH wherein G' is C₁-C₁₂ alkylene; or
wherein the hindered amine compound is a compound of the formula I, II, III, IV, V, VI, VII, VIII, IX, X or XI 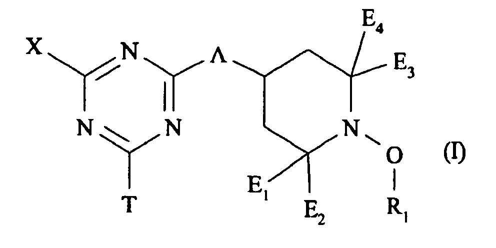 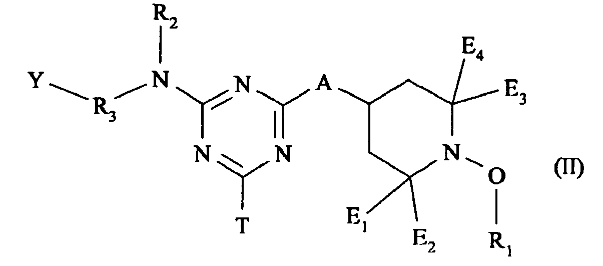 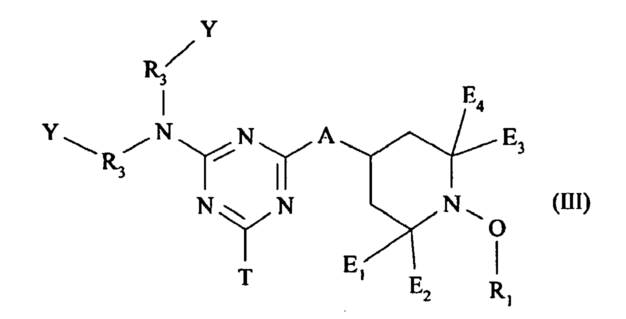 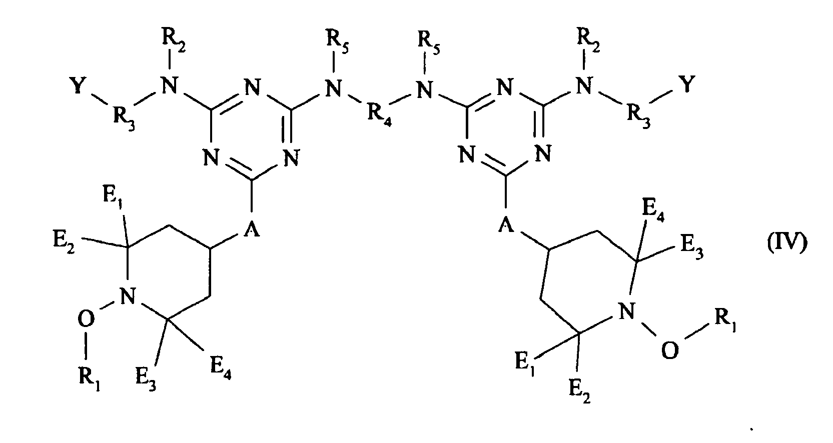 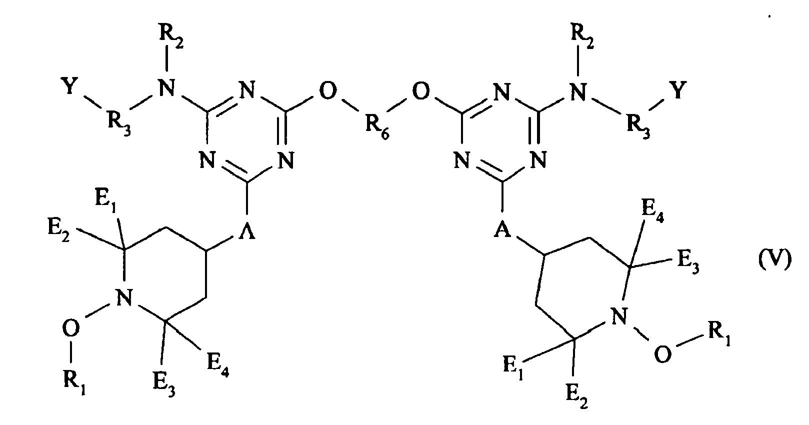 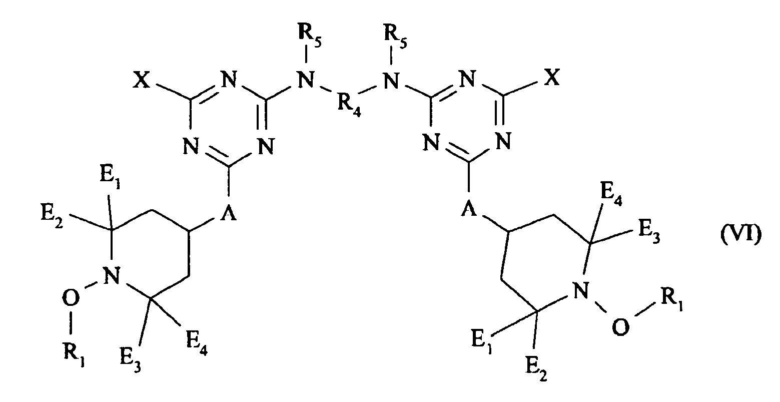 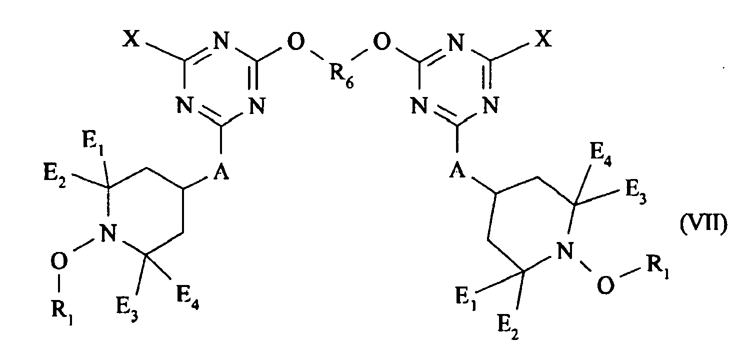 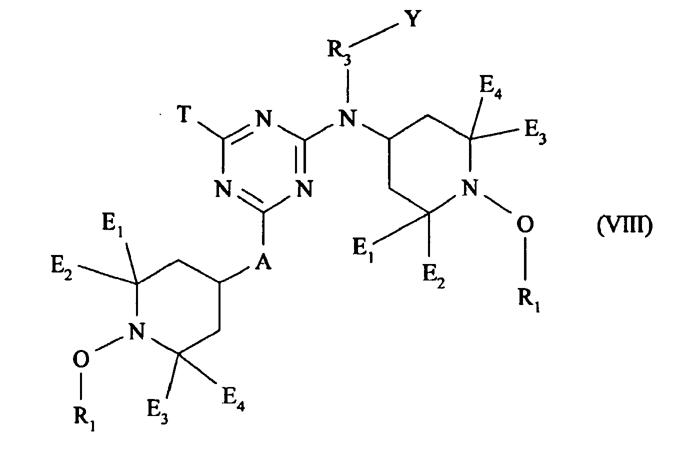 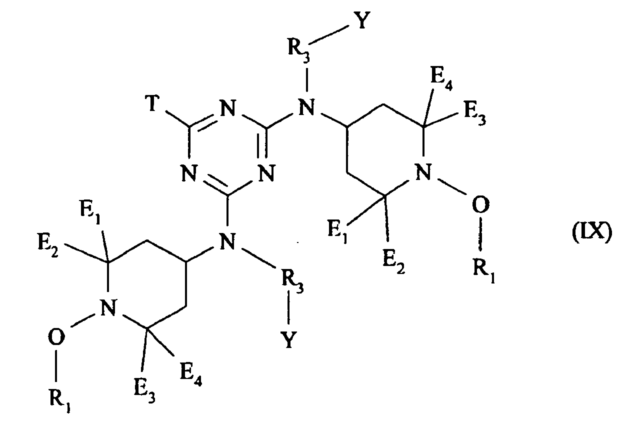 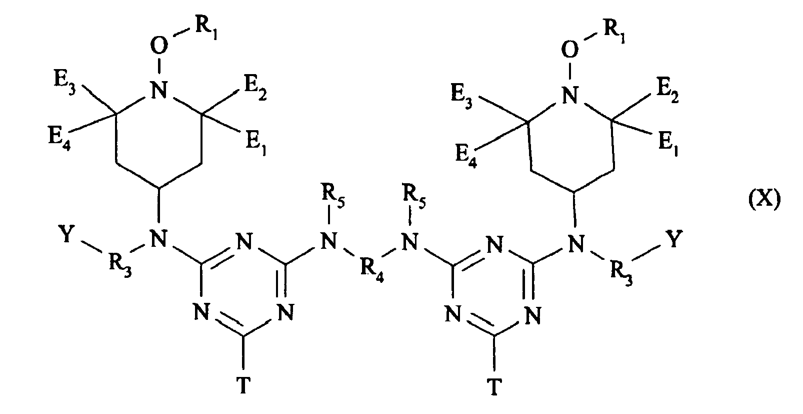 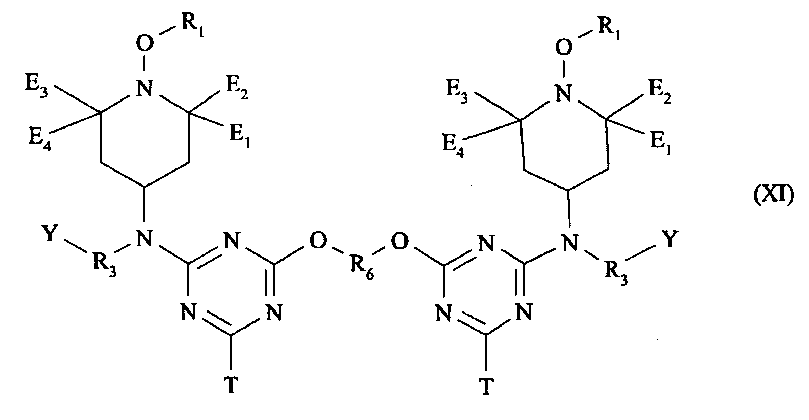 wherein
E₁, E₂, E₃ and E₄ are independently alkyl of 1 to 4 carbon atoms, or E₁ and E₂ are independently alkyl of 1 to 4 carbon atoms and E₃ and E₄ taken together are pentamethylene, or E₁ and E₂; and E₃ and E₄ each taken together are pentamethylene,
R₁ is alkyl of 1 to 18 carbon atoms, cycloalkyl of 5 to 12 carbon atoms, a bicyclic or tricyclic hydrocarbon radical of 7 to 12 carbon atoms, phenylalkyl of 7 to 15 carbon atoms, aryl of 6 to 10 carbon atoms or said aryl substituted by one to three alkyl of 1 to 8 carbon atoms,
R₂ is hydrogen or a linear or branched chain alkyl of 1 to 12 carbon atoms,
R₃ is alkylene of 1 to 8 carbon atoms, or R₃ is -CO-, -CO-R₄-, -CONR₂- or -CO-NR₂R₄-,
R₄ is alkylene of 1 to 8 carbon atoms,
R₅ is hydrogen, a linear or branched chain alkyl of 1 to 12 carbon atoms, or 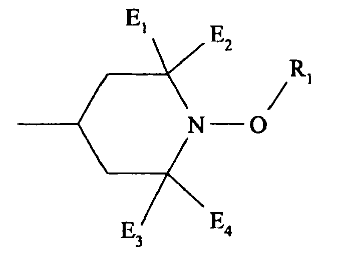
or when R₄ is ethylene, two R₅ methyl substituents can be linked by a direct bond so that the triazine bridging group -N(R₅)-R₄-N(R₅)- is a piperazin-1,4-diyl moiety,
R₆ is alkylene of 2 to 8 carbon atoms or R₆ is 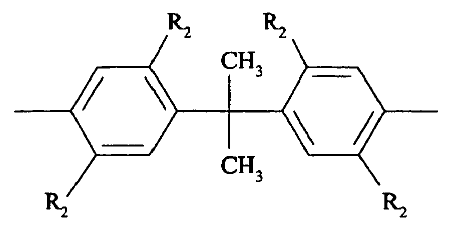 with the proviso that Y is not -OH when R₆ is the structure depicted above,
A is -O- or -NR₇- where R₇ is hydrogen, a straight or branched chain alkyl of 1 to 12 carbon atoms, or R₇ is 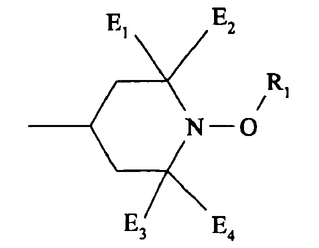
T is phenoxy, phenoxy substituted by one or two alkyl groups of 1 to 4 carbon atoms, alkoxy of 1 to 8 carbon atoms or -N(R₂)₂ with the stipulation that R₂ is not hydrogen, or T is 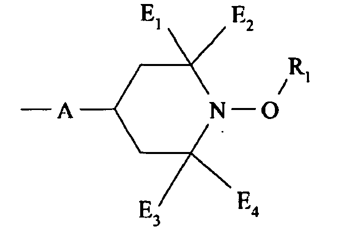
X is -NH₂, -NCO, -OH, -O-glycidyl, or -NHNH₂, and
Y is -OH, -NH₂, -NHR₂ where R₂ is not hydrogen; or Y is -NCO, -COOH, oxiranyl, -O-glycidyl, or -Si(OR₂)₃; or the combination R₃-Y- is -CH₂CH(OH)R₂ where R₂ is alkyl or said alkyl interrupted by one to four oxygen atoms, or R₃-Y- is -CH₂OR₂;
or
wherein the hindered amine compound is a mixture of N,N',N'''-tris{2,4-bis[(1-hydrocarbyloxy-2,2,6,6-tetramethylpiperidin-4-yl)alkylamino]-s-triazin-6-yl}-3,3'-ethylenediiminodipropylamine; N,N',N"-tris{2,4-bis[(1-hydrocarbyloxy-2,2,6,6-tetramethylpiperidin-4-yl)alkylamino]-s-triazin-6-yl}-3,3'-ethylenediiminodipropylamine, and bridged derivatives as described by formulas I, II, IIA and III
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III)
where in the tetraamine of formula I
R₁ and R₂ are the s-triazine moiety E; and one of R₃ and R₄ is the s-triazine moiety E with the other of R₃ or R₄ being hydrogen,
E is 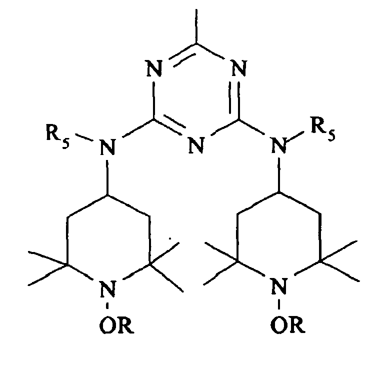
R is methyl, propyl, cyclohexyl or octyl,
R₅ is alkyl of 1 to 12 carbon atoms,
where in the compound of formula II or IIA when R is propyl, cyclohexyl or octyl,
T and T₁ are each a tetraamine substituted by R₁-R₄ as is defined for formula I, where
(1) one of the s-triazine moieties E in each tetraamine is replaced by the group E₁ which forms a bridge between two tetraamines T and T₁,
E₁ is 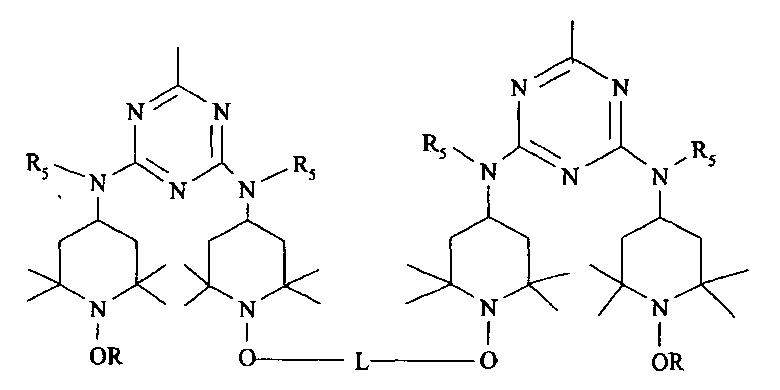 or
(2) the group E₁ can have both termini in the same tetraamine T as in formula IIA where two of the E moieties of the tetraamine are replaced by one E₁ group, or
(3) all three s-triazine substituents of tetraamine T can be E₁ such that one E₁ links T and T₁ and a second E₁ has both termini in tetraamine T,
L is propanediyl, cyclohexanediyl or octanediyl;
where in the compound of formula III
G, G₁ and G₂ are each tetraamines substituted by R₁-R₄ as defined for formula I, except that G and G₂ each have one of the s-triazine moieties E replaced by E₁, and G₁ has two of the triazine moieties E replaced by E₁, so that there is a bridge between G and G₁ and a second bridge between G₁ and G₂;
which mixture is prepared by reacting two to four equivalents of 2,4-bis[(1-hydrocarbyloxy-2,2,6,6-tetramethylpiperidin-4-yl)butylamino]-6-chloro-s-triazine with one equivalent of N,N'-bis(3-aminopropyl)ethylenediamine;
or the hindered amine is a compound of the formula IIIb 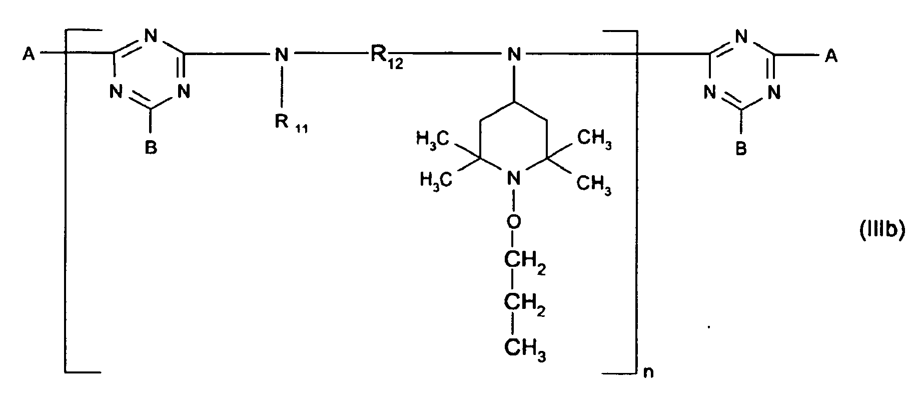 in which the index n ranges from 1 to 15;
R₁₂ is C₂-C₁₂alkylene, C₄-C₁₂alkenylene, C₅-C₇cycloalkylene, C₅-C₇cycloalkylene-di(C₁-C₄alkylene), C₁-C₄alkylenedi(C₅-C₇cycloalkylene), phenylenedi(C₁-C₄alkylene) or C₄-C₁₂alkylene interrupted by 1,4-piperazinediyl, -O- or >N-X, with X₁ being C₁-C₁₂acyl or (C₁-C₁₂alkoxy)carbonyl or having one of the definitions of R₁₄ given below except hydrogen; or R₁₂ is a group of the formula (Ib') or (Ic'); 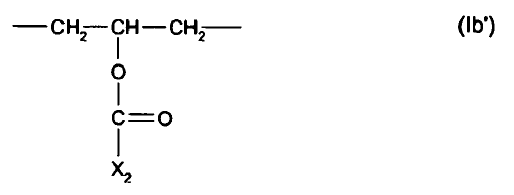 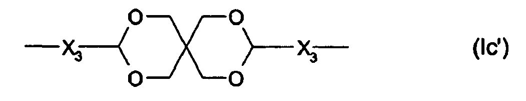
with m being 2 or 3,
X₂ being C₁-C₁₈alkyl, C₅-C₁₂cycloalkyl which is unsubstituted or substituted by 1, 2 or 3 C₁-C₄alkyl; phenyl which is unsubstituted or substituted by 1, 2 or 3 C₁-C₄alkyl or C₁-C₄alkoxy; C₇-C₉phenylalkyl which is unsubstituted or substituted on the phenyl by 1, 2 or 3 C₁-C₄alkyl; and
the radicals X₃ being independently of one another C₂-C₁₂alkylene;
R₁₃, R₁₄ and R₁₅, which are identical or different, are hydrogen, C₁-C₁₈alkyl, C₅₋C₁₂cycloalkyl which is unsubstituted or substituted by 1, 2 or 3 C₁-C₄alkyl; C₃-C₁₈alkenyl, phenyl which is unsubstituted or substituted by 1, 2 or 3 C₁-C₄alkyl or C₁-C₄alkoxy; C₇₋C₉phenylalkyl which is unsubstituted or substituted on the phenyl by 1, 2 or 3 C₁-C₄alkyl; tetrahydrofurfuryl or
C₂-C₄alkyl which is substituted in the 2, 3 or 4 position by -OH, C₁-C₈alkoxy, di(C₁-C₄alkyl)amino or a group of the formula (le'); 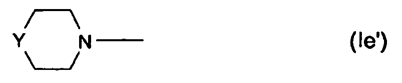 with Y being -O-, -CH₂-, -CH₂CH₂- or >N-CH₃,
or -N(R₁₄)(R₁₅) is additionally a group of the formula (le');
the radicals A are independently of one another -OR₁₃, -N(R₁₄)(R₁₅) or a group of the formula (IIId); 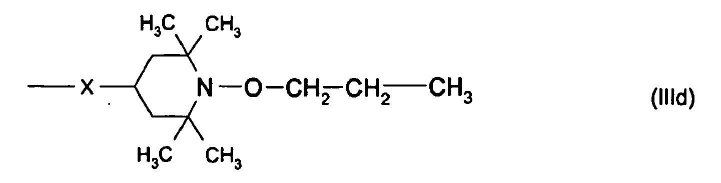
X is -O- or >N-R₁₆;
R₁₆ is hydrogen, C₁-C₁₈alkyl, C₃-C₁₈alkenyl, C₅-C₁₂cycloalkyl which is unsubstituted or substituted by 1, 2 or 3 C₁-C₄alkyl; C₇-C₉phenylalkyl which is unsubstituted or substituted on the phenyl by 1, 2 or 3 C₁-C₄alkyl; tetrahydrofurfuryl, a group of the formula (IIIf), 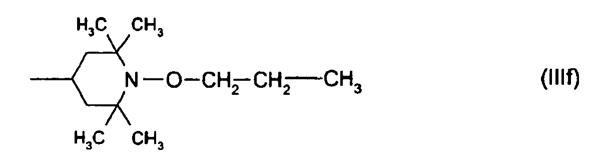
or C₂-C₄alkyl which is substituted in the 2, 3 or 4 position by -OH, C₁-C₈alkoxy, di(C₁-C₄alkyl)amino or a group of the formula (le');
R₁₁ has one of the definitions given for R₁₆; and
the radicals B have independently of one another one of the definitions given for A.

4. A composition according to claim **1** wherein the hindered amine stabilizers of component (i) are selected from the group consisting of
1-cyclohexyloxy-2,2,6,6-tetramethyl-4-octadecylaminopiperidine;
bis(1-octyloxy-2,2,6,6-tetramethylpiperidin-4-yl) sebacate;
2,4-bis[(1-cyclohexyloxy-2,2,6,6-tetramethylpiperidin-4-yl)butylamino]-6-(2-hydroxyethylamino-s-triazine;
bis(1-cyclohexyloxy-2,2,6,6-tetramethylpiperidin-4-yl) adipate;
2,4-bis[(1-cyclohexyloxy-2,2,6,6-tetramethylpiperidin-4-yl)butylamino]-6-chloro-s-triazine;
1-(2-hydroxy-2-methylpropoxy)-4-hydroxy-2,2,6,6-tetramethylpiperidine;
1-(2-hydroxy-2-methylpropoxy)-4-oxo-2,2,6,6-tetramethylpiperidine;
1-(2-hydroxy-2-methylpropoxy)-4-octadecanoyloxy-2,2,6,6-tetramethytpiperidine;
bis(1-(2-hydroxy-2-methylpropoxy)-2,2,6,6-tetramethylpiperidin-4-yl) sebacate;
bis(1-(2-hydroxy-2-methylpropoxy)-2,2,6,6-tetramethylpiperidin-4-yl) adipate;
2,4-bis{N-[1-(2-hydroxy-2-methylpropoxy)-2,2,6,6 tetramethylpiperidin-4-yl]-N-butyl-amino}-6-(2-hydroxyethylamino)-s-triazine;
the reaction product of 2,4-bis[(1-cyclohexyloxy-2,2,6,6-tetramethylpiperidin-4-yl)-butylamino]-6-chloro-s-triazine with N,N'-bis(3-aminopropyl)ethylenediamine) and
the compound of formula 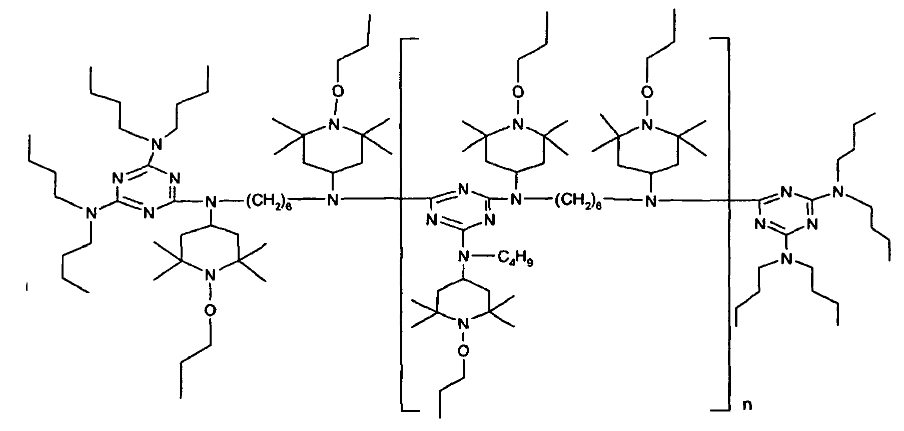 in which n is from 1 to 15.

5. A composition according to claim **1** in which the hindered amine stabilizers of component (i) are present from 0.05% to 20% by weight based on the weight of the polylactic acid polymer substrate.

6. A composition according to claim **1** in which the conventional flame retardants of component (ii) are selected from the group consisting of
polybrominated diphenyl oxide,
decabromodiphenyl oxide,
tris[3-bromo-2,2-bis(bromomethyl)propyl] phosphate,
tris(2,3-dibromopropyl)phosphate,
tris(2,3-dichloropropyl)phosphate,
chlorendic acid,
tetrachlorophthalic acid,
tetrabromophthalic acid,
bis-(N,N'-hydroxyethyl)tetrachlorphenylene diamine,
poly-β-chloroethyl triphosponate mixture,
tetrabromobisphenol A bis(2,3-dibromopropyl ether),
brominated epoxy resin,
ethylene-bis(tetrabromophthalimide),
bis(hexachlorocydopentadieno)cyclooctane,
chlorinated paraffins,
octabromodiphenyl ether,
hexachlorocyclopentadiene derivatives,
1,2-bis(tribromophenoxy)ethane,
tetrabromo-bisphenol A,
ethylene bis-(dibromo-norbornanedicarboximide),
bis-(hexachlorocydopentadieno) cyclooctane,
polytetrafluorethylene
tris-(2,3-dibromopropyl)-isocyanurate, and
ethylene-bis-tetrabromophthalimide,
tetraphenyl resorcinol diphosphite,
tetrakis(hydroxymethyl)phosphonium sulfide,
diethyl-N,N-bis(2-hydroxyethyl)-aminomethyl phosphonate,
hydroxyalkyl esters of phosphorus acids,
ammonium polyphosphate,
resorcinol diphosphate oligomer,
phosphazene flame retardants,
ethylenediamine diphosphate,
polyisocyanurate,
esters of isocyanuric acid,
isocyanurates,
hydroxyalkyl isocyanurates,
melamine cyanurate,
melamine borate,
melamine phosphates,
melamine polyphosphates,
melamine pyrophosphates,
melamine ammonium polyphosphate,
melamine ammonium pyrophosphate,
phosphonates and their metal salts and
phosphinates and their metal salts.

7. A composition according to claim **1** in which the conventional flame retardants of component (ii) are present in an amount from 0.5% to 45% by weight based on the weight of the polylactic acid polymeric substrate.

8. A composition according to claim **1** further comprising acid scavengers selected from the group consisting of hydrotalcites and amorphous basic aluminum magnesium carbonates.

9. A composition according to claim **8** in which the acid scavengers are present from 0.1% to 1.0% by weight based on the polylactic acid polymer substrate.

10. A composition according to claim **1** comprising a further component selected from the group consisting of pigments, dyes, plasticizers, antioxidants, thixotropic agents, levelling assistants, basic costabilizers, nitrone stabilizers, amine oxide stabilizers, benzofuranone stabilizers, UV absorbers, sterically hindered amines, metal passivators, metal oxides, organophosphorus compounds, hydroxylamines, and mixtures thereof.

11. A composition according to claim **1** comprising a further component selected from the group consisting of phenolic antioxidants, calcium stearate, zinc stearate, phosphite and phosphonite stabilizers, benzofuranone stabilizers, UV absorbers of the 2-(2'-hydroxyphenyl)benzotriazole and 2-(2-hydroxyphenyl)-1,3,5-triazine classes, and sterically hindered amines.

12. Use a synergistic mixture of
(i) at least one sterically hindered amine stabilizer and
(ii) at least one conventional flame retardant selected from the group consisting of the organohalogen, phosphorus containing, isocyanurate and melamine based flame retardants for imparting light stability and flame retardancy to a polylactic acid polymer substrate.

13. A process for imparting light stability and flame retardancy to a polylactic acid polymer substrate, which process comprises adding to said polymer substrate
(i) at least one sterically hindered amine stabilizer,
(ii) at least one conventional flame retardant selected from the group consisting of the organohalogen, phosphorus containing, isocyanurate and melamine based flame retardants.

14. A molded polylactic acid polymer article comprising a polylactic acid polymer substrate and a synergistic mixture of
(i) at least one sterically hindered amine stabilizer and
(ii) at least one conventional flame retardant selected from the group consisting of the organohalogen, phosphorus containing, isocyanurate and melamine based flame retardants.

## Patentansprüche

1. Flammhemmende Polymilchsäurepolymerzusammensetzung, die umfasst:
ein Polymilchsäurepolymersubstrat und ein synergistisches Gemisch von
(i) mindestens einem sterisch gehinderten Aminstabilisator und
(ii) mindestens einem herkömmlichen Flammschutzmittel, ausgewählt aus der Gruppe, bestehend aus dem Organohalogen-, Phosphor enthaltenden, Isocyanurat- und auf Melamin basierenden Flammschutzmitteln.

2. Zusammensetzung nach Anspruch 1, worin die Stabilisatoren von Komponente (i) die Formel 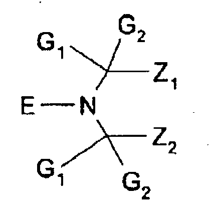 aufweisen,
worin G₁ und G₂ unabhängig Alkyl mit 1 bis 8 Kohlenstoffatomen darstellen oder zusammen Pentamethylen darstellen,
Z₁ und Z₂ jeweils Methyl darstellen oder Z₁ und Z₂ zusammen eine verbindende Einheit bilden, die zusätzlich mit einer Ester-, Ether-, Amid-, Amino-, Carboxy- oder Urethangruppe substituiert sein kann, und
E Oxyl, Hydroxyl, Alkoxy, Cycloalkoxy, Aralkoxy, Aryloxy, -O-CO-OZ₃, -O-Si(Z₄)₃, -O-PO(OZ₅)₂ oder -O-CH₂-OZ₆ darstellt, worin Z₃, Z₄, Z₅ und Z₆ ausgewählt sind aus der Gruppe, bestehend aus Wasserstoff, einer aliphatischen, araliphatischen und aromatischen Einheit; oder E -O-T-(OH)_{b} darstellt,
T ein gerad- oder verzweigtkettiges Alkylen mit 1 bis 18 Kohlenstoffatomen, Cycloalkylen mit 5 bis 18 Kohlenstoffatomen, Cycloalkenylen mit 5 bis 18 Kohlenstoffatomen, ein gerad- oder verzweigtkettiges Alkylen mit 1 bis 4 Kohlenstoffatomen, substituiert mit Phenyl oder mit Phenyl, substituiert mit einer oder zwei Alkylgruppen mit 1 bis 4 Kohlenstoffatomen, darstellt; und
b 1, 2 oder 3 ist mit der Maßgabe, dass b die Anzahl der Kohlenstoffatome in T nicht übersteigen darf, und wenn b 2 oder 3 ist, jede Hydroxylgruppe an ein anderes Kohlenstoffatom von T gebunden ist.

3. Zusammensetzung nach Anspruch 1, worin die Stabilisatoren von Komponente (i) die Formel A-R aufweisen 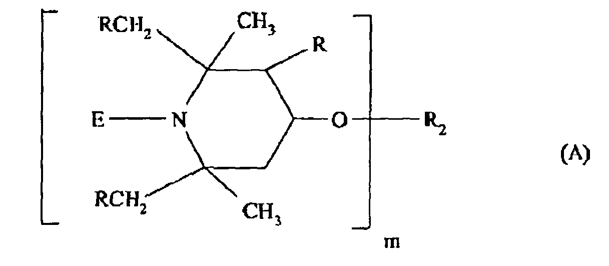 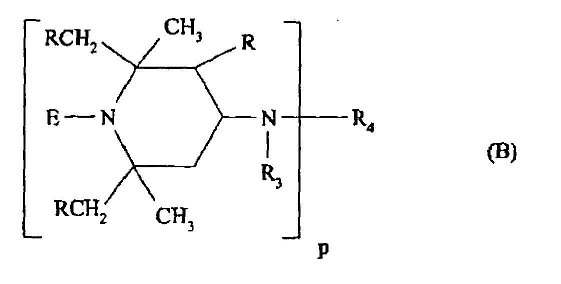 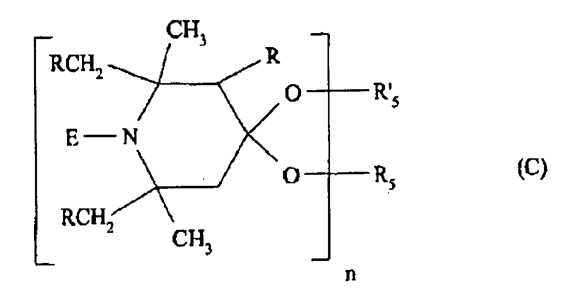 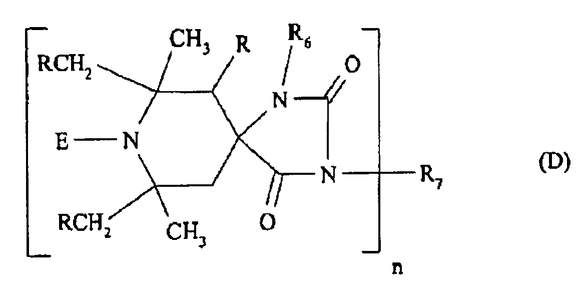 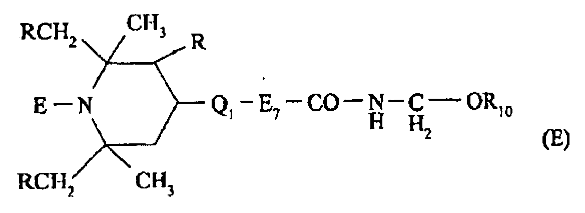 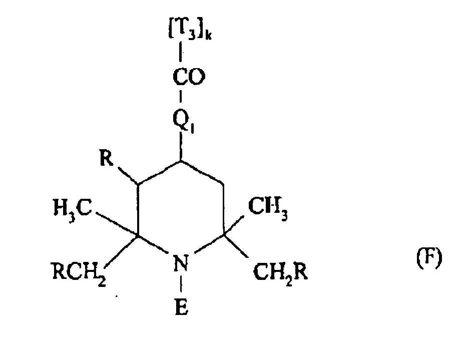 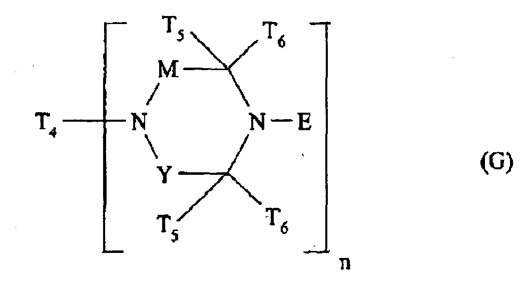 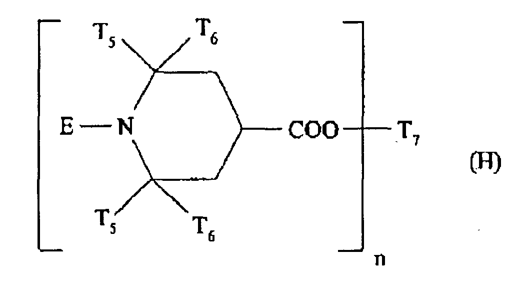 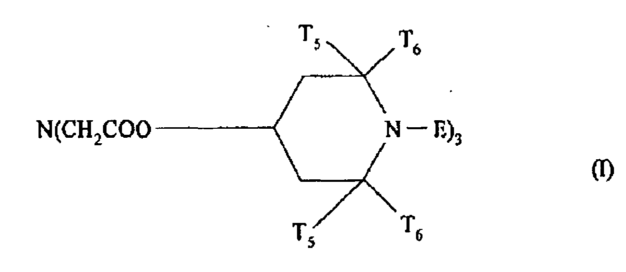 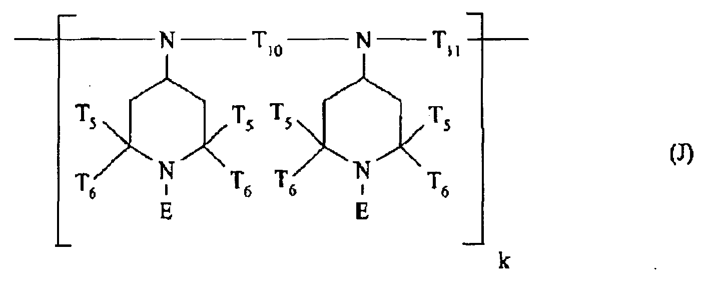 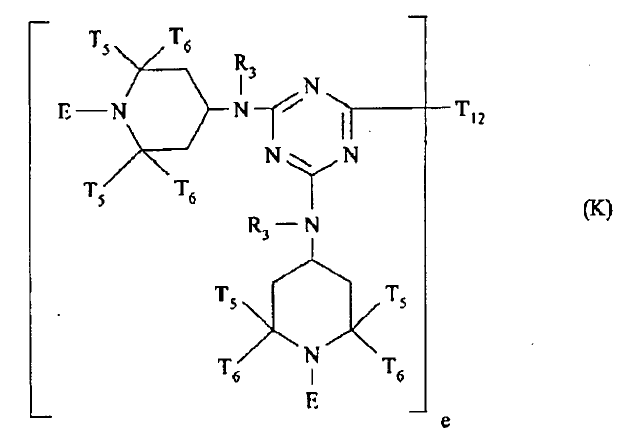 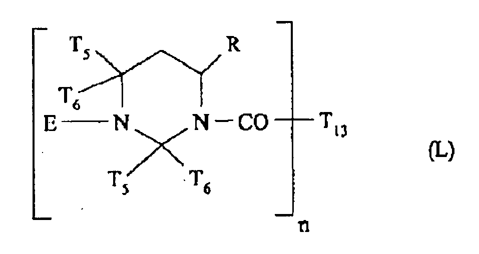 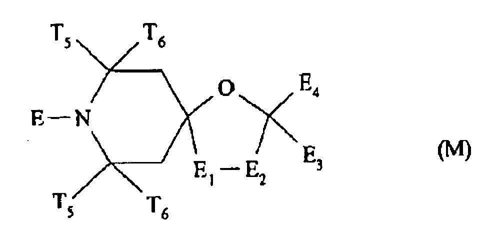 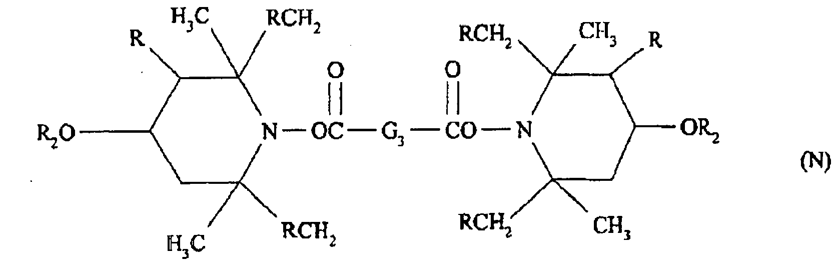 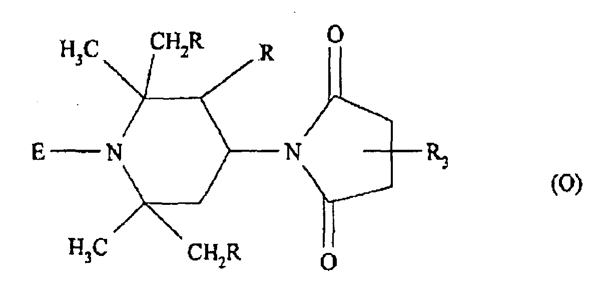 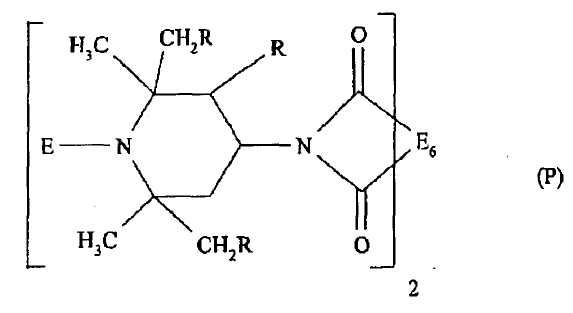 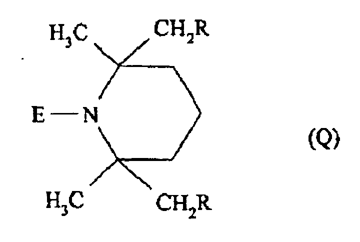 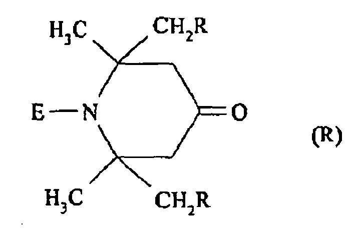 worin
E Oxyl, Hydroxyl, Alkoxy mit 1 bis 18 Kohlenstoffatomen, Cycloalkoxy mit 5 bis 12 Kohlenstoffatomen oder Aralkoxy mit 7 bis 15 Kohlenstoffatomen darstellt, oder E -O-T-(OH)_{b} darstellt,
T gerad- oder verzweigtkettiges Alkylen mit 1 bis 18 Kohlenstoffatomen, Cycloalkylen mit 5 bis 18 Kohlenstoffatomen, Cycloalkenylen mit 5 bis 18 Kohlenstoffatomen, ein gerad- oder verzweigtkettiges Alkylen mit 1 bis 4 Kohlenstoffatomen, substituiert mit Phenyl oder mit Phenyl, substituiert mit einer oder zwei Alkylgruppen mit 1 bis 4 Kohlenstoffatomen, darstellt;
b 1, 2 oder 3 ist, mit der Maßgabe, dass b die Anzahl an Kohlenstoffatomen in T nicht übersteigen darf, und wenn b 2 oder 3 ist, jede Hydroxylgruppe an ein anderes Kohlenstoffatom von T gebunden ist;
R Wasserstoff oder Methyl darstellt,
m 1 bis 4 ist,
wenn m 1 ist,
R₂ Wasserstoff, C₁-C₁₈-Alkyl oder das Alkyl, gegebenenfalls unterbrochen durch ein oder mehrere Sauerstoffatome, C₂₋C₁₂-Alkenyl, C₆-C₁₀-Aryl, C₇-C₁₈-Aralkyl, Glycidyl, einen einwertigen Acylrest von einer aliphatischen, cycloaliphatischen oder aromatischen Carbonsäure, oder einer Carbamidsäure, von einer cycloaliphatischen Carbonsäure mit 5 bis 12 C-Atomen oder von einer aromatischen Carbonsäure mit 7 bis 15 C-Atomen oder 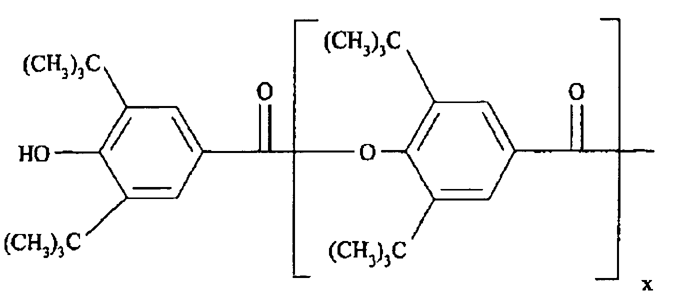 worin x 0 oder 1 ist, 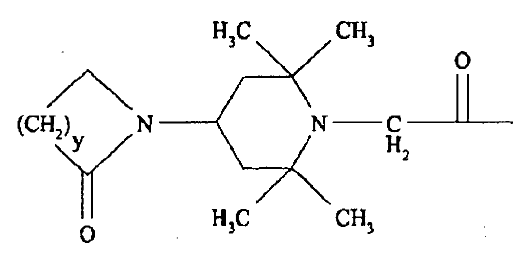 worin y 2 bis 4 ist;
darstellt,
wenn m 2 ist,
R₂ C₁-C₁₂-Alkylen, C₄-C₁₂-Alkenylen, Xylylen, einen zweiwertigen Acylrest von einer aliphatischen, cycloaliphatischen, araliphatischen oder aromatischen Dicarbonsäure oder von einer Dicarbamidsäure, von einer aliphatischen Dicarbonsäure mit 2 bis 18 C-Atomen, von einer cycloaliphatischen oder aromatischen Dicarbonsäure mit 8 bis 14 C-Atomen oder von einer aliphatischen, cycloaliphatischen oder aromatischen Dicarbamidsäure mit 8 bis 14 C-Atomen 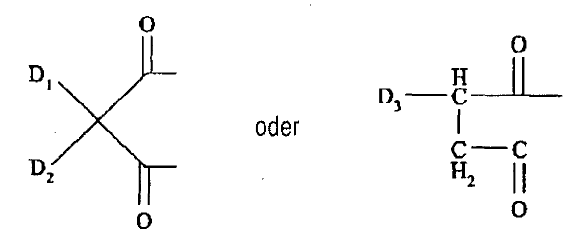 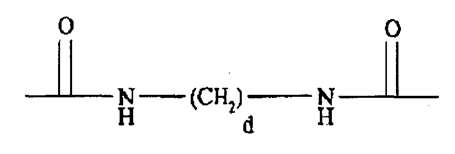 worin D₁ und D₂ unabhängig Wasserstoff, einen Alkylrest, der bis zu 8 Kohlenstoffatome enthält, einen Aryl- oder Aralkylrest, einschließlich 3,5-Di-t-butyl-4-hydroxybenzylrest, darstellen, D₃ Wasserstoff oder einen Alkyl- oder Alkenylrest, der bis zu 18 Kohlenstoffatome enthält, darstellt und d 0 bis 20 ist;
darstellt,
wenn m 3 ist,
R₂ einen dreiwertigen Acylrest von einer aliphatischen, ungesättigten aliphatischen, cycloaliphatischen oder aromatischen Tricarbonsäure darstellt;
wenn m 4 ist,
R₂ einen vierwertigen Acylrest von einer gesättigten oder ungesättigten aliphatischen oder aromatischen Tetracarbonsäure, einschließlich 1,2,3,4-Butantetracarbonsäure, 1,2,3,4-But-2-en-tetracarbonsäure und 1,2,3,5- und 1,2,4,5-Pentatetracarbonsäure, darstellt;
p 1, 2 oder 3 ist,
R₃ Wasserstoff, C₁-C₁₂-Alkyl, C₅-C₇-Cycloalkyl, C₇-C₉₋Aralkyl, C₂-C₁₈-Alkanoyl, C₃-C₅-Alkenoyl oder Benzoyl darstellt;
wenn p 1 ist,
R₄ Wasserstoff, C₁-C₁₈-Alkyl, C₅-C₇-Cycloalkyl, C₂-C₈₋Alkenyl, unsubstituiert oder substituiert mit einer Cyano-, Carbonyl- oder Carbamidgruppe, Aryl, Aralkyl darstellt oder es Glycidyl, eine Gruppe der Formel -CH₂-CH(OH)-Z oder der Formel -CO-Z oder -CONH-Z, worin Z Wasserstoff, Methyl oder Phenyl darstellt; oder eine Gruppe der Formeln 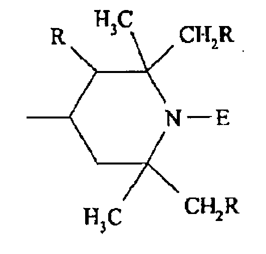 oder 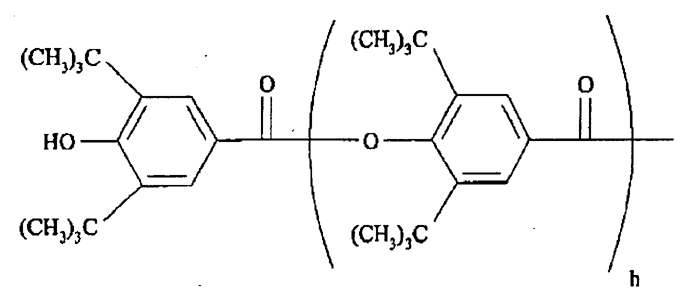 worin h 0 oder 1 ist, darstellt,
R₃ und R₄ zusammen, wenn p 1 ist, Alkylen mit 4 bis 6 Kohlenstoffatomen oder 2-Oxopolyalkylen, der cyclische Acylrest von einer aliphatischen oder aromatischen 1,2- oder 1,3-Dicarbonsäure sein kann;
wenn p 2 ist,
R₄ eine direkte Bindung darstellt oder C₁-C₁₂-Alkylen, C₆-C₁₂-Arylen, Xylylen, eine Gruppe -CH₂CH(OH)-CH₂ oder eine Gruppe -CH₂-CH(OH)-CH₂-O-X-O-CH₂-CH(OH)-CH₂- darstellt, worin X C₂-C₁₀-Alkylen, C₆-C₁₅-Arylen oder C₆-C₁₂-Cycloalkylen darstellt, oder mit der Maßgabe, dass R₃ nicht Alkanoyl, Alkenoyl oder Benzoyl darstellt, R₄ auch einen zweiwertigen Acylrest von einer aliphatischen, cycloaliphatischen oder aromatischen Dicarbonsäure oder Dicarbamidsäure darstellen kann, oder die Gruppe -CO- darstellen kann; oder
R₄ 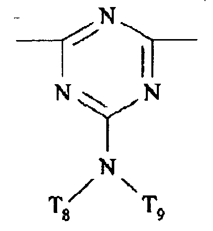 darstellt, worin T₈ und T₉ unabhängig Wasserstoff, Alkyl mit 1 bis 18 Kohlenstoffatomen darstellen, oder T₈ und T₉ zusammen Alkylen mit 4 bis 6 Kohlenstoffatomen oder 3-Oxapentamethylen darstellen;
wenn p 3 ist,
R₄ 2,4,6-Triazinyl darstellt,
n 1 oder 2 ist,
wenn n 1 ist,
R₅ und R'₅ unabhängig C₁-C₁₂-Alkyl, C₂-C₁₂-Alkenyl, C₇₋C₁₂-Aralkyl darstellen oder R₅ auch Wasserstoff darstellt oder R₅ und R'₅ zusammen C₂-C₈-Alkylen oder Hydroxyalkylen oder C₄₋C₂₂-Acyloxyalkylen darstellen;
wenn n 2 ist,
R₅ und R'₅ zusammen (-CH₂)₂C(CH₂-)₂ darstellen;
R₆ Wasserstoff, C₁-C₁₂-Alkyl, Allyl, Benzyl, Glycidyl oder C₂-C₆-Alkoxyalkyl darstellt;
wenn n 1 ist,
R₇ Wasserstoff, C₁-C₁₂-Alkyl, C₃-C₅-Alkenyl, C₇-C₉₋Aralkyl, C₅-C₇-Cycloalkyl, C₂-C₄-Hydroxyalkyl, C₂-C₆-Alkoxyalkyl, C₆-C₁₀-Aryl, Glycidyl, eine Gruppe der Formel -(CH₂)ₜ₋COO-Q oder der Formel -(CH₂)ₜ-O-CO-Q, worin t 1 oder 2 ist und Q C₁-C₄-Alkyl oder Phenyl darstellt, darstellt; oder
wenn n 2 ist,
R₇ C₂-C₁₂-Alkylen, C₆-C₁₂-Arylen, eine Gruppe -CH₂CH (OH) - CH₂-O-X-O-CH₂-CH(OH)-CH₂-, worin X C₂-C₁₀-Alkylen, C₆-C₁₅-Arylen oder C₆-C₁₂-Cycloalkylen darstellt, oder eine Gruppe -CH₂CH(OZ')CH₂-(OCH₂-CH(OZ')CH₂)₂-, worin Z' Wasserstoff, C₁-C₁₈₋Alkyl, Allyl, Benzyl, C₂-C₁₂-Alkanoyl oder Benzoyl darstellt, darstellt;
Q₁ -N(R₈)- oder -O- darstellt; E₇ C₁-C₃-Alkylen, die Gruppe -CH₂-CH(R₉)-O-, worin R₉ Wasserstoff, Methyl oder Phenyl, die Gruppe -(CH₂)₃-NH- oder eine direkte Bindung darstellt, darstellt;
R₁₀ Wasserstoff oder C₁-C₁₈-Alkyl darstellt, R₈ Wasserstoff, C₁-C₁₈-Alkyl, C₅-C₇-Cycloalkyl, C₇-C₁₂-Aralkyl, Cyanoethyl, C₆-C₁₀-Aryl, die Gruppe -CH₂-CH(R₉)-OH, worin R₉ die vorstehend definierte Bedeutung aufweist; eine Gruppe der Formel 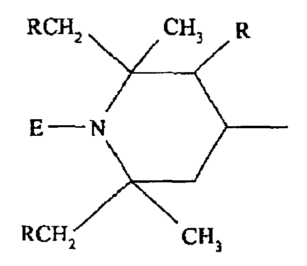 oder eine Gruppe der Formel 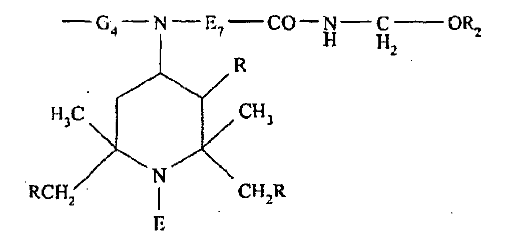 worin G₄ C₂-C₆-Alkylen oder C₆-C₁₂-Arylen darstellt, darstellt; oder R₈ eine Gruppe -E₇-CO-NH-CH₂-OR₁₀ darstellt;
Formel F eine wiederkehrende Struktureinheit eines Polymers bedeutet, worin T₃ Ethylen oder 1,2-Propylen darstellt, die wiederkehrende Struktureinheit, abgeleitet von einem α-Olefincopolymer mit einem Acrylsäure- oder Methacrylsäurealkylester, darstellt und worin k 2 bis 100 ist;
T₄ die gleiche Bedeutung wie R₄ aufweist, wenn p 1 oder 2 ist,
T₅ Methyl darstellt,
T₆ Methyl oder Ethyl darstellt oder T₅ und T₆ zusammen Tetramethylen oder Pentamethylen darstellen,
M und Y unabhängig Methylen oder Carbonyl darstellen und T₄ Ethylen darstellt, wenn n 2 ist;
T₇ das Gleiche wie R₇ ist,
T₁₀ und T₁₁ unabhängig Alkylen mit 2 bis 12 Kohlenstoffatomen darstellen, oder T₁₁ 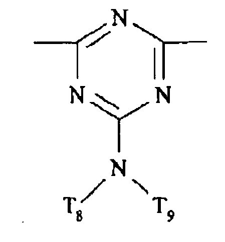 darstellt;
T₁₂ Piperazinyl, -NR₁₁-(CH₂)_{d}-NR₁₁- oder 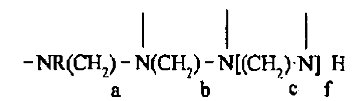 darstellt,
worin R₁₁ das Gleiche wie R₃ ist oder auch 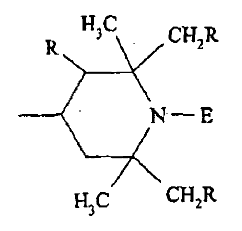 darstellt,
a, b und c unabhängig 2 oder 3 sind und f 0 oder 1 ist; und
e 2, 3 oder 4 ist;
T₁₃ das Gleiche wie R₂ darstellt, mit der Maßgabe, dass T₁₃ nicht Wasserstoff sein darf, wenn n 1 ist;
E₁ und E₂, die verschieden sind, jeweils -CO- oder -N(E₅)- darstellen, worin E₅ Wasserstoff, C₁-C₁₂-Alkyl oder C₄₋C₂₂-Alkoxycarbonylalkyl darstellt;
E₃ Wasserstoff, Alkyl mit 1 bis 30 Kohlenstoffatomen, Phenyl, Naphthyl, das Phenyl oder das Naphthyl substituiert mit Chlor oder mit Alkyl mit 1 bis 4 Kohlenstoffatomen, oder Phenylalkyl mit 7 bis 12 Kohlenstoffatomen, oder das Phenylalkyl substituiert mit Alkyl mit 1 bis 4 Kohlenstoffatomen, darstellt,
E₄ Wasserstoff, Alkyl mit 1 bis 30 Kohlenstoffatomen, Phenyl, Naphthyl oder Phenylalkyl mit 7 bis 12 Kohlenstoffatomen darstellt, oder
E₃ und E₄ zusammen Polymethylen mit 4 bis 17 Kohlenstoffatomen oder das Polymethylen substituiert mit bis zu vier Alkylgruppen mit 1 bis 4 Kohlenstoffatomen, darstellen,
E6 einen aliphatischen oder aromatischen vierwertigen Rest darstellt,
R₂ von Formel (N) wie vorstehend definiert ist, wenn m 1 ist;
G₁ eine direkte Bindung, C₁-C₁₂-Alkylen, Phenylen oder -NH-G'-NH darstellt, worin G' C₁-C₁₂-Alkylen darstellt oder
worin die gehinderte Aminverbindung eine Verbindung der Formel I, II, III, IV, V, VI, VII, VIII, IX, X oder XI 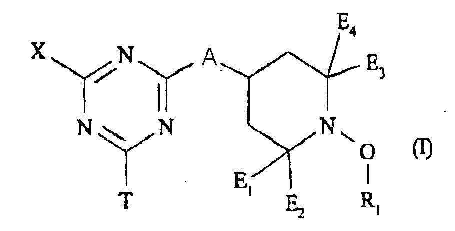 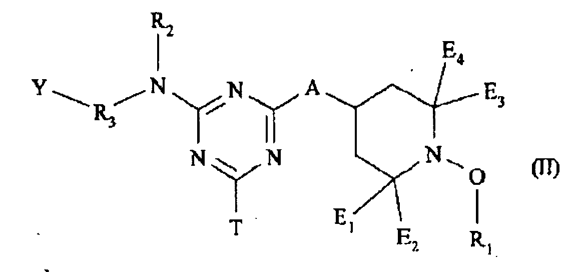 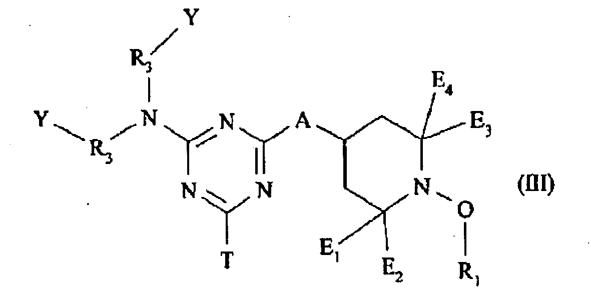 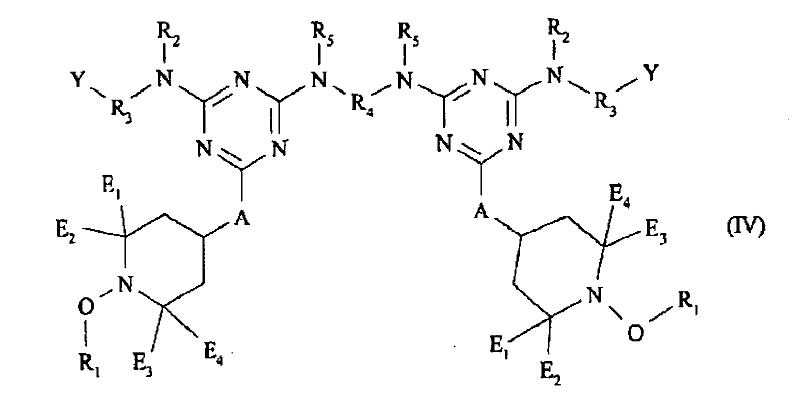 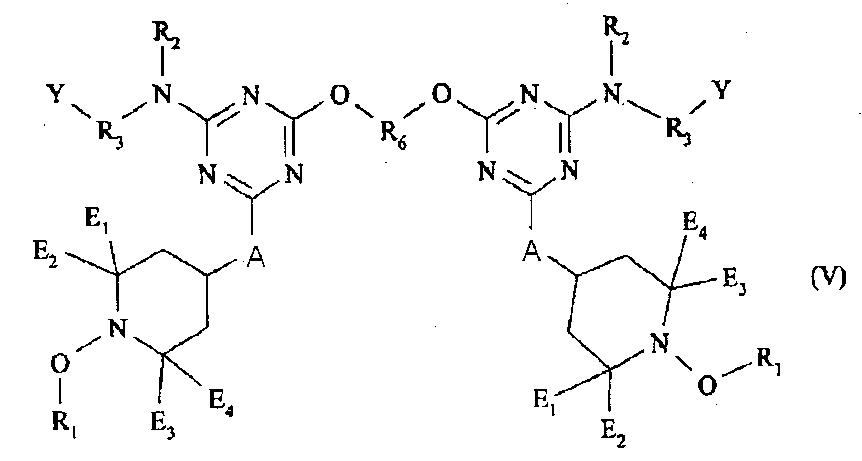 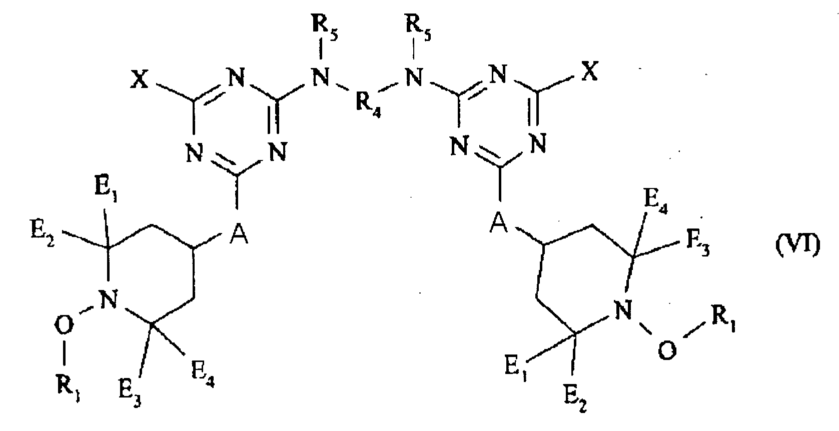 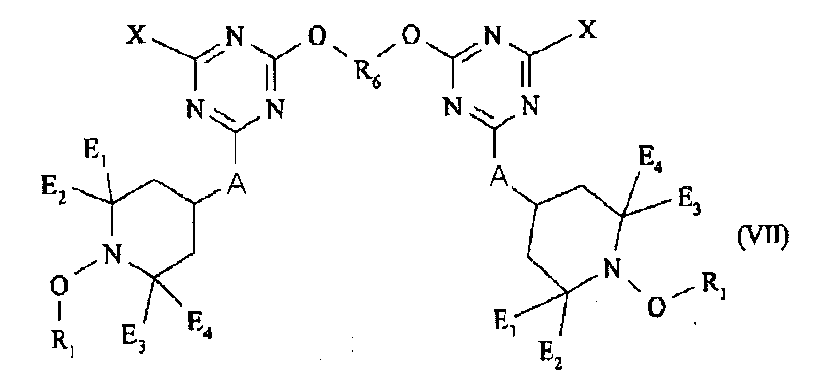 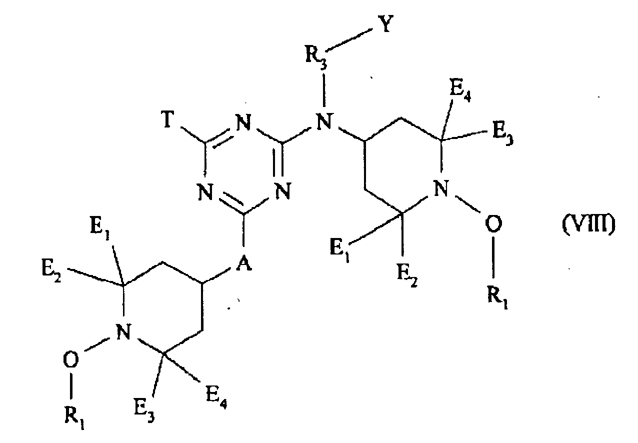 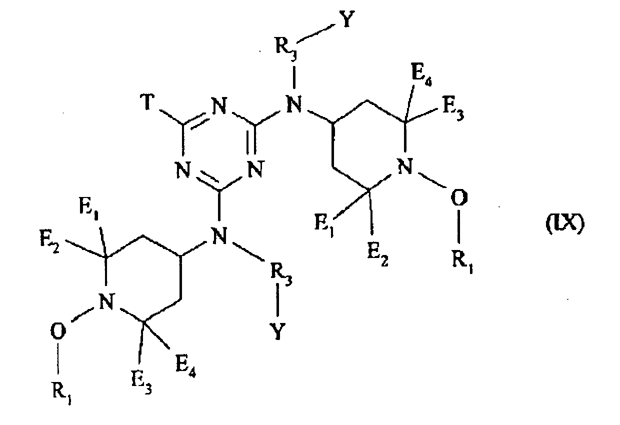 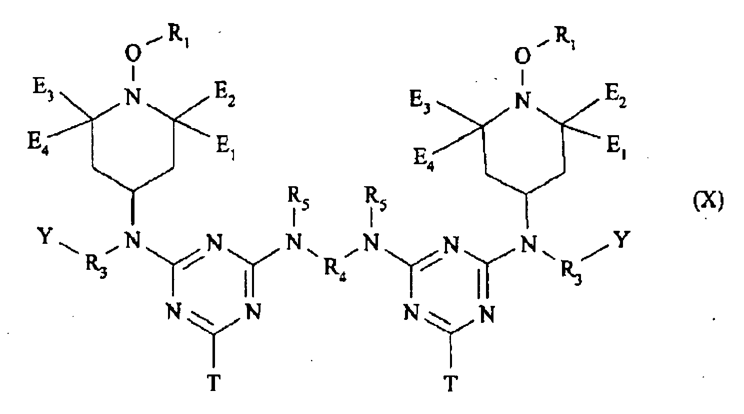 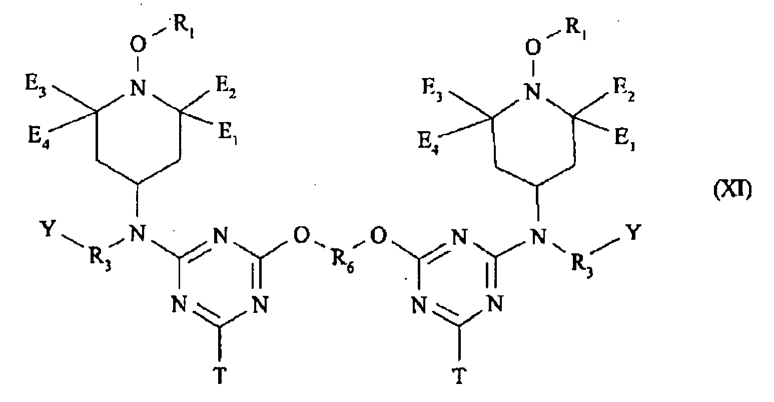 darstellt,
worin
E₁, E₂, E₃ und E₄ unabhängig Alkyl mit 1 bis 4 Kohlenstoffatomen darstellen oder E₁ und E₂ unabhängig Alkyl mit 1 bis 4 Kohlenstoffatomen darstellen und E₃ und E₄ zusammengenommen Pentamethylen darstellen oder E₁ und E₂; und E₃ und E₄ jeweils zusammengenommen Pentamethylen darstellen,
R₁ Alkyl mit 1 bis 18 Kohlenstoffatomen, Cycloalkyl mit 5 bis 12 Kohlenstoffatomen, einen bicyclischen oder tricyclischen Kohlenwasserstoffrest mit 7 bis 12 Kohlenstoffatomen, Phenylalkyl mit 7 bis 15 Kohlenstoffatomen, Aryl mit 6 bis 10 Kohlenstoffatomen oder das Aryl substituiert mit 1 bis 3 Alkyl mit 1 bis 8 Kohlenstoffatomen, darstellt,
R₂ Wasserstoff oder ein lineares oder verzweigtkettiges Alkyl mit 1 bis 12 Kohlenstoffatomen darstellt,
R₃ Alkylen mit 1 bis 8 Kohlenstoffatomen darstellt oder R₃ -CO-, -CO-R₄-, -CONR₂- oder -CO-NR₂-R₄- darstellt,
R₄ Alkylen mit 1 bis 8 Kohlenstoffatomen darstellt,
R₅ Wasserstoff, ein lineares oder verzweigtkettiges Alkyl mit 1 bis 12 Kohlenstoffatomen oder 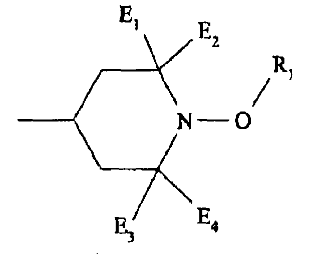 darstellt
oder wenn R₄ Ethylen darstellt, zwei R₅ Methylsubstituenten durch eine direkte Verbindung verbunden sein können, sodass die Triazinbrückengruppe -N(R₅)-R₄-N(R₅)- eine Piperazin-1,4-diyleinheit darstellt,
R₆ Alkylen mit 2 bis 8 Kohlenstoffatomen darstellt oder R₆ 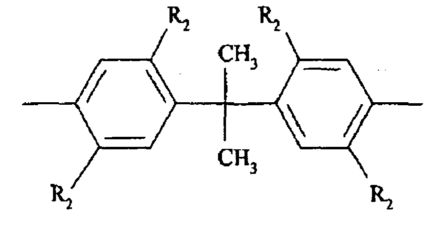 darstellt,
mit der Maßgabe, dass Y nicht -OH darstellt, wenn R₆ die vorstehend angeführte Struktur darstellt,
A -O- oder -NR₇- darstellt, worin R₇ Wasserstoff, ein gerad- oder verzweigtkettiges Alkyl mit 1 bis 12 Kohlenstoffatomen darstellt, oder R₇ 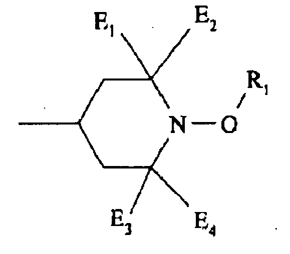 darstellt,
T Phenoxy, Phenoxy substituiert mit einer oder zwei Alkylgruppen mit 1 bis 4 Kohlenstoffatomen, Alkoxy mit 1 bis 8 Kohlenstoffatomen oder -N(R₂)₂ darstellt mit der Bedingung, dass R₂ nicht Wasserstoff darstellt, oder T 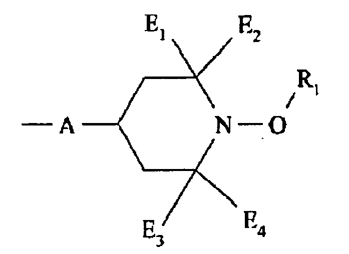 darstellt,
X -NH₂, -NCO, -OH, -O-Glycidyl oder -NHNH₂ darstellt, und
Y -OH, -NH₂, -NHR₂ darstellt, worin R₂ nicht Wasserstoff darstellt; oder Y -NCO, -COOH, Oxiranyl, -O-Glycidyl oder -Si(OR₂)₃ darstellt; oder die Kombination R₃-Y- -CH₂CH(OH)R₂ darstellt, worin R₂ Alkyl oder das Alkyl, unterbrochen durch ein bis vier Sauerstoffatome, darstellt oder R₃-Y- -CH₂OR₂ darstellt;
oder
worin die gehinderte Aminverbindung ein Gemisch von N, N',N"'-Tris{2,4-bis [(1'-kohlenwasserstoffoxy-2,2,6,6-tetramethyl-piperidin-4-yl)alkylamino]-s-triazin-6-yl}-3,3'-ethylendiiminodipropylamin; N,N',N''-Tris{2,4-bis[(1-kohlenwasserstoffoxy-2,2,6,6-tetramethylpiperidin-4-yl)alkyl-amino]-s-triazin-6-yl}-3,3'-ethylendiiminodipropylamin und verbrückten Derivaten, wie durch Formeln I, II, IIA und III beschrieben,
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III)
darstellt, wobei in dem Tetraamin der Formel I
R₁ und R₂ die s-Triazineinheit E darstellen, und einer von R₃ und R₄ die s-Triazineinheit E darstellt, wobei der andere von R₃ und R₄ Wasserstoff darstellt,
E 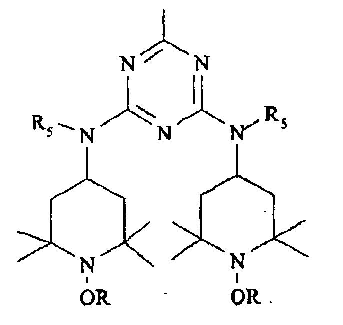 darstellt,
R Methyl, Propyl, Cyclohexyl oder Octyl darstellt,
R₅ Alkyl mit 1 bis 12 Kohlenstoffatomen darstellt,
worin in der Verbindung der Formel II oder IIA, wenn R Propyl, Cyclohexyl oder Octyl darstellt,
T und T₁ jeweils ein Tetraamin substituiert mit R₁ - R₄ wie für Formel I definiert, darstellen, worin
(1) eine von den s-Triazineinheiten E in jedem Tetraamin durch die Gruppe E₁ ersetzt ist, die eine Brücke zwischen zwei Tetraaminen T und T₁ bildet,
E₁ 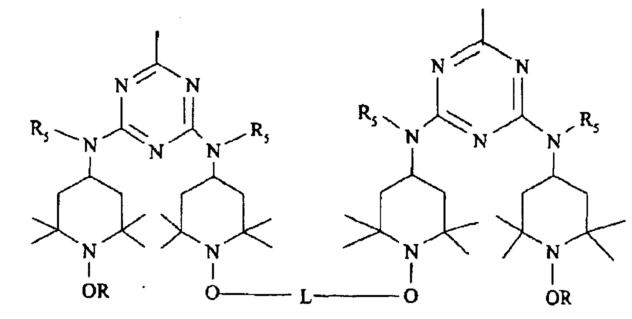 darstellt
oder
(2) die Gruppe E₁ beide Enden in dem gleichen Tetraamin T wie in Formel IIA aufweisen kann, worin zwei von den Einheiten E des Tetraamins ersetzt sind durch eine Gruppe E₁, oder
(3) alle drei s-Triazinsubstituenten von Tetraamin T E₁ sein können, sodass ein E₁ T und T₁ verbindet und das zweite E₁ beide Enden in Tetraamin T aufweist;
L Propandiyl, Cyclohexandiyl oder Octandiyl darstellt;
worin in der Verbindung der Formel III
G, G₁ und G₂ jeweils Tetraamine, substituiert mit R₁ - R₄ wie für Formel I definiert, darstellen, mit der Ausnahme, dass G und G₂ jeweils eine von den s-Triazineinheiten E, ersetzt durch E₁, aufweisen und G₁ zwei von den Triazineinheiten E, ersetzt durch E₁, aufweisen, sodass es eine Brücke zwischen G und G₁ und eine zweite Brücke zwischen G₁ und G₂ gibt;
wobei das Gemisch hergestellt wird durch Umsetzen von zwei bis vier Äquivalenten 2,4-Bis[(1-kohlenwasserstoffoxy-2,2,6,6-tetramethylpiperidin-4-yl)butylamino]-6-chlor-s-triazin mit einem Äquivalent N,N'-Bis(3-aminopropyl)ethylendiamin;
oder das gehinderte Amin eine Verbindung der Formel IIIb 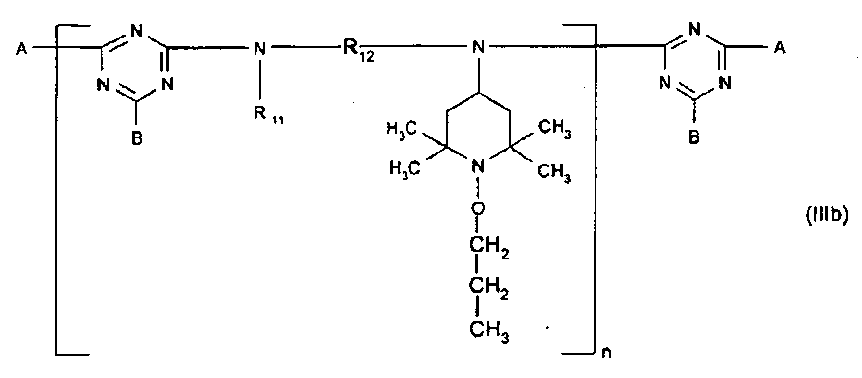 darstellt, worin der Index n im Bereich von 1 bis 15 liegt;
R₁₂ C₂-C₁₂-Alkylen, C₄-C₁₂-Alkenylen, C₅-C₇-Cycloalkylen, C₅-C₇-Cycloalkylen-di(C₁-C₄-alkylen), C₁-C₄-Alkylendi(C₅-C₇-cycloalkylen), Phenylendi(C₁-C₄-alkylen) oder C₄-C₁₂-Alkylen, unterbrochen durch 1,4-Piperazindiyl, -O- oder >N-X₁, darstellt, wobei X₁ C₁-C₁₂-Acyl oder (C₁-C₁₂-Alkoxy)carbonyl darstellt oder eine der für R₁₄ nachstehend angegebenen Definitionen mit der Ausnahme von Wasserstoff aufweist; oder R₁₂ eine Gruppe der Formel (Ib') oder (Ic') darstellt; 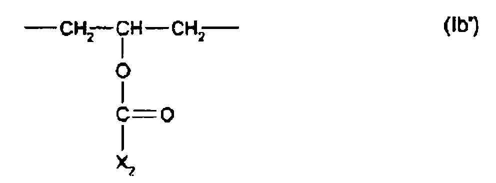 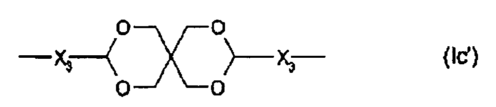 wobei m 2 oder 3 ist,
X₂ C₁-C₁₈-Alkyl, C₅-C₁₂-Cycloalkyl, das unsubstituiert oder mit 1, 2 oder 3 C₁-C₄-Alkyl substituiert ist; Phenyl, das unsubstituiert oder mit 1, 2 oder 3 C₁-C₄-Alkyl oder C₁-C₄₋Alkoxy substituiert ist; C₇-C₉-Phenylalkyl, das unsubstituiert oder an dem Phenyl mit 1, 2 oder 3 C₁-C₄-Alkyl substituiert ist, darstellt; und
die Reste X₃ unabhängig voneinander C₂-C₁₂-Alkylen darstellen;
R₁₃, R₁₄ und R₁₅, die gleich oder verschieden sind, Wasserstoff, C₁-C₁₈-Alkyl, C₅-C₁₂-Cycloalkyl, das unsubstituiert oder mit 1, 2 oder 3 C₁-C₄-Alkyl substituiert ist; C₃-C₁₈₋Alkenyl, Phenyl, das unsubstituiert oder mit 1, 2 oder 3 C₁-C₄₋Alkyl oder C₁-C₄-Alkoxy substituiert ist; C₇-C₉-Phenylalkyl, das unsubstituiert oder an dem Phenyl mit 1, 2 oder 3 C₁-C₄-Alkyl substituiert ist; Tetrahydrofurfuryl oder C₂-C₄-Alkyl, das in der 2-, 3- oder 4-Position mit -OH, C₁-C₈-Alkoxy, Di(C₁-C₄₋alkyl)amino oder einer Gruppe der Formel (Ie') 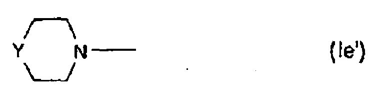 substituiert ist, wobei Y -O-, -CH₂-, -CH₂CH₂- oder >N-CH₃ darstellt, darstellen;
oder -N(R₁₄)(R₁₅) zusätzlich eine Gruppe der Formel (Ie') darstellt;
die Reste A unabhängig voneinander -OR₁₃, -N(R₁₄)(R₁₅) oder eine Gruppe der Formel (IIId) darstellen; 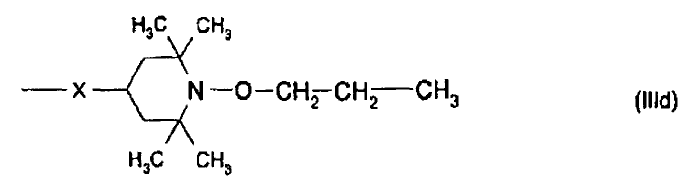 X -O- oder >N-R₁₆ darstellt,
R₁₆ Wasserstoff, C₁-C₁₈-Alkyl, C₃-C₁₈-Alkenyl, C₅-C₁₂-CYCloalkyl, das unsubstituiert oder mit 1, 2 oder 3 C₁-C₄-Alkyl substituiert ist; C₇-C₉-Phenylalkyl, das unsubstituiert oder an dem Phenyl mit 1, 2 oder 3 C₁-C₄-Alkyl substituiert ist; Tetrahydrofurfuryl, eine Gruppe der Formel (IIIf), 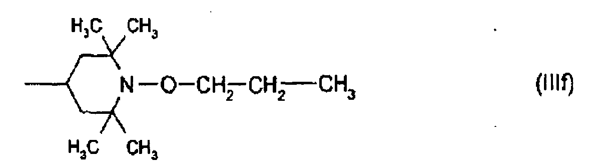 oder C₂-C₄-Alkyl, das in der 2-, 3- oder 4-Position mit -OH, C₁-C₈-Alkoxy, Di(C₁-C₄-alkyl)amino oder einer Gruppe der Formel (Ie') substituiert ist, darstellt;
R₁₁ eine der vorstehend für R₁₆ angegebenen Definitionen aufweist; und
die Reste B unabhängig voneinander eine der für A angegebenen Definitionen aufweisen.

4. Zusammensetzung nach Anspruch 1, worin die gehinderten Aminstabilisatoren von Komponente (i) ausgewählt sind aus der Gruppe, bestehend aus
1-Cyclohexyloxy-2,2,6,6-tetramethyl-4-octadecylaminopiperidin;
Bis(1-octyloxy-2,2,6,6-tetramethylpiperidin-4-yl)sebacat;
2,4-Bis[(1-cyclohexyloxy-2,2,6,6-tetramethylpiperidin-4-yl)butylamino]-6-(2-hydroxyethylamino-s-triazin;
Bis(1-cyclohexyloxy-2,2,6,6-tetramethylpiperidin-4-yl)-adipat;
2,4-Bis[(1-cyclohexyloxy-2,2,6,6-tetramethylpiperidin-4-yl)butylamino]-6-chlor-s-triazin;
1-(2-Hydroxy-2-methylpropoxy)-4-hydroxy-2,2,6,6-tetramethylpiperidin;
1-(2-Hydroxy-2-methylpropoxy)-4-oxo-2,2,6,6-tetramethylpiperidin;
1-(2-Hydroxy-2-methylpropoxy)-4-octadecanoyloxy-2,2,6,6-tetramethylpiperidin;
Bis(1-(2-hydroxy-2-methylpropoxy)-2,2,6,6-tetramethylpiperidin-4-yl)sebacat;
Bis(1-(2-hydroxy-2-methylpropoxy)-2,2,6,6-tetramethylpiperidin-4-yl)adipat;
2,4-Bis(N-[1-(2-hydroxy-2-methylpropoxy)-2,2,6,6-tetramethylpiperidin-4-yl]-N-butyl-amino}-6-(2-hydroxyethylamino)-s-triazin;
dem Reaktionsprodukt von 2,4-Bis[(1-cyclohexyloxy-2,2,6,6-tetramethylpiperidin-4-yl)-butylamino]-6-chlor-s-triazin mit N,N'-Bis(3-aminopropyl)ethylendiamin und
der Verbindung der Formel 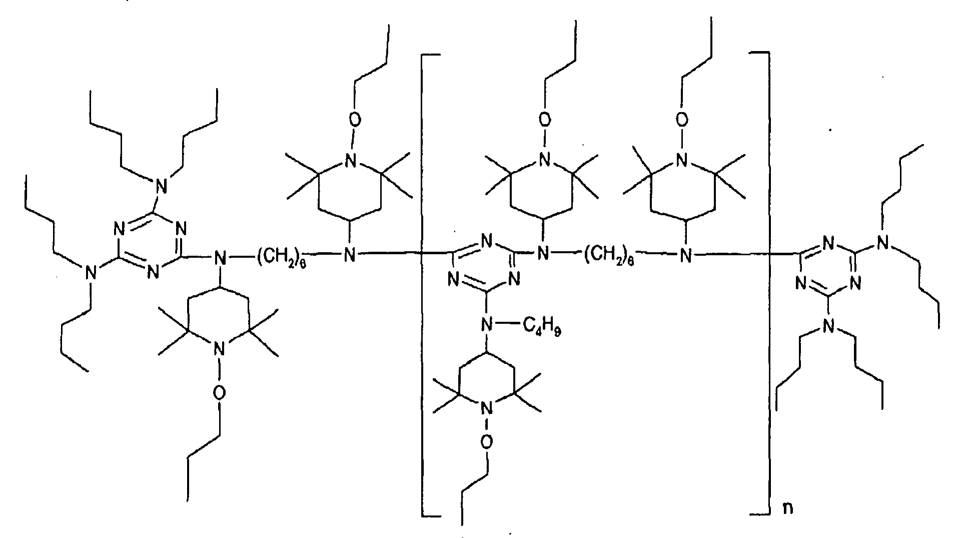 worin n 1 bis 15 ist.

5. Zusammensetzung nach Anspruch 1, worin die gehinderten Aminstabilisatoren von Komponente (i) mit 0,05 % bis 20 Gew.-%, bezogen auf das Gewicht des Polymilchsäurepolymersubstrats, vorliegen.

6. Zusammensetzung nach Anspruch 1, worin die herkömmlichen Flammschutzmittel von Komponente (i) ausgewählt sind aus der Gruppe, bestehend aus
polybromiertem Diphenyloxid,
Decabromdiphenyloxid,
Tris[3-brom-2,2-bis(brommethyl)propyl]phosphat,
Tris(2,3-dibrompropyl)phosphat,
Tris(2,3-dichlorpropyl)phösphat,
Chlorendisäure,
Tetrachlorphthalsäure,
Tetrabromphthalsäure,
Bis-(N,N'-hydroxyethyl)tetrachlorphenylendiamin,
Poly-β-chlorethyltriphosphonatgemisch,
Tetrabrombisphenol-A-bis(2,3-dibrompropylether),
bromiertem Epoxidharz,
Ethylenbis(tetrabromphthalimid),
Bis(hexachlorcyclopentadieno)cyclooctan,
chlorierten Paraffinen,
Octabromdiphenylether,
Hexachlorcyclopentadienderivaten,
1,2-Bis(tribromphenoxy)ethan,
Tetrabrombisphenol A,
Ethylenbis(dibromnorbornandicarboximid),
Bis(hexachlorcyclopentadieno)cyclooctan,
Polytetrafluorethylen,
Tris-(2,3-dibrompropyl)isocyanurat und
Ethylenbistetrabromphthalimid,
Tetraphenylresorcindiphosphit,
Tetrakis(hydroxymethyl)phosphoniumsulfid,
Diethyl-N,N-bis(2-hydroxyethyl)aminomethylphosphonat,
Hydroxyalkylestern von Phosphorsäuren,
Ammoniumpolyphosphat,
Resorcindiphosphatoligomer,
Phosphazenflammschutzmitteln,
Ethylendiamindiphosphat,
Polyisocyanurat,
Estern von Isocyanursäure,
Isocyanuraten,
Hydroxyalkylisocyanuraten,
Melamincyanurat,
Melaminborat,
Melaminphosphaten,
Melaminpolyphosphaten,
Melaminpyrophosphaten,
Melaminammoniumpolyphosphat,
Melaminammoniumpyrophosphat,
Phosphonaten und deren Metallsalzen und
Phosphinaten und deren Metallsalzen.

7. Zusammensetzung nach Anspruch 1, worin die herkömmlichen Flammschutzmittel von Komponente (ii) in einer Menge von 0,5 % bis 45 Gew.-%, bezogen auf das Gewicht des Polymilchsäurepolymersubstrats, vorliegen.

8. Zusammensetzung nach Anspruch 1, weiterhin umfassend Säurefänger, ausgewählt aus der Gruppe, bestehend aus Hydrotalciten und amorphen basischen Aluminiummagnesiumcarbonaten.

9. Zusammensetzung nach Anspruch 8, worin die Säurefänger mit 0,1 % bis 1,0 Gew.-%, bezogen auf das Polymilchsäurepolymersubstrat, vorliegen.

10. Zusammensetzung nach Anspruch 1, umfassend eine weitere Komponente, ausgewählt aus der Gruppe, bestehend aus Pigmenten, Farbstoffen, Weichmachern, Antioxidantien, thixotropen Mitteln, Egalisierungshilfen, basischen Co-Stabilisatoren, Nitronstabilisatoren, Aminoxidstabilisatoren, Benzofuranonstabilisatoren, UV-Absorptionsmitteln, sterisch gehinderten Aminen, Metallpassivatoren, Metalloxiden, Organophosphorverbindungen, Hydroxylaminen und Gemischen davon.

11. Zusammensetzung nach Anspruch 1, umfassend eine weitere Komponente, ausgewählt aus der Gruppe, bestehend aus phenolischen Antioxidantien, Calciumstearat, Zinkstearat, Phosphit- und Phosphonitstabilisatoren, Benzofuranonstabilisatoren, UV-Absorptionsmitteln von dem 2-(2'-Hydroxyphenyl)benzotriazol und 2-(2-Hydroxyphenyl)-1,3,5-triazinklassen und sterisch gehinderten Aminen.

12. Verwendung eines synergistischen Gemisches von
(i) mindestens einem sterisch gehinderten Aminstabilisator und
(ii) mindestens einem herkömmlichen Flammschutzmittel, ausgewählt aus der Gruppe, bestehend aus den Organohalogen-, Phosphor enthaltenden, Isocyanurat- und auf Melamin basierenden Flammschutzmitteln, um einem Polymilchsäurepolymersubstrat Lichtstabilität und Flammschutz zu verleihen.

13. Verfahren, um einem Polymilchsäurepolymersubstrat Lichtstabilität und Flammschutz zu verleihen, wobei das Verfahren Zugabe von:
(i) mindestens einem sterisch gehinderten Aminstabilisator,
(ii) mindestens einem herkömmlichen Flammschutzmittel, ausgewählt aus der Gruppe, bestehend aus den Organohalogen-, Phosphor enthaltenden, Isocyanurat- und auf Melamin basierenden Flammschutzmitteln, zu dem Polymersubstrat umfasst.

14. Polymilchsäurepolymerformgegenstand, umfassend ein Polymilchsäurepolymersubstrat und ein synergistisches Gemisch von
(i) mindestens einem sterisch gehinderten Aminstabilisator und
(ii) mindestens einem herkömmlichen Flammschutzmittel, ausgewählt aus der Gruppe, bestehend aus den Organohalogen-, Phosphor enthaltenden, Isocyanurat- und auf Melamin basierenden Flammschutzmitteln.

## Revendications

1. Composition à base de polymère d'acide polylactique à pouvoir retardateur de flamme qui comprend
un substrat en polymère d'acide polylactique et un mélange synergique
(i) d'au moins un stabilisant de type amine à encombrement stérique et
(ii) d'au moins un agent retardateur de flamme conventionnel choisi dans le groupe constitué par les agents retardateurs de flamme à base de composés organohalogénés, phosphorés, d'isocyanurate et de mélamine.

2. Composition selon la revendication 1, dans laquelle les stabilisants du composant (i) sont de la formule 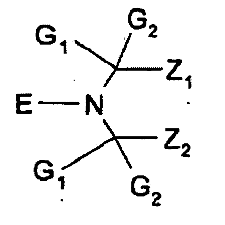 où
G₁ et G₂ sont indépendamment l'un de l'autre un groupe alkyle de 1 à 18 atomes de carbone ou forment conjointement un groupe pentaméthylène,
Z₁ et Z₂ sont chacun un groupe méthyle, ou Z₁ et Z₂ forment conjointement un résidu de liaison qui peut en outre être substitué par un groupe ester, un groupe éther, un groupe amide, un groupe amino, un groupe carboxy ou un groupe uréthanne, et
E est un groupe oxyle, hydroxyle, alcoxy, cycloalcoxy, aralcoxy, aryloxy, -O-CO-OZ₃, -O-Si(Z₄)₃, -O-PO(OZ₅)₂ ou -O-CH₂-OZ₆ où Z₃, Z₄, Z₅ et Z₆ sont choisis dans le groupe constitué par un atome d'hydrogène, un résidu aliphatique, araliphatique et aromatique; ou E est -O-T-(OH)_{b},
T est un groupe alkylène à chaîne linéaire ou ramifiée de 1 à 18 atomes de carbone, un groupe cycloalkylène de 5 à 18 atomes de carbone, un groupe cycloalcénylène de 5 à 18 atomes de carbone, un groupe alkylène à chaîne linéaire ou ramifiée de 1 à 4 atomes de carbone substitué par un groupe phényle ou un groupe phényle substitué à son tour par un ou deux groupes alkyle de 1 à 4 atomes de carbone; et
b vaut 1, 2 ou 3 à la condition que b n'excède pas le nombre d'atomes de carbone présents dans T, et que si b vaut 2 ou 3, chaque groupe hydroxyle soit lié à un atome de carbone différent de T.

3. Composition selon la revendication 1, dans laquelle les stabilisants du composant (i) sont selon les formules A - R 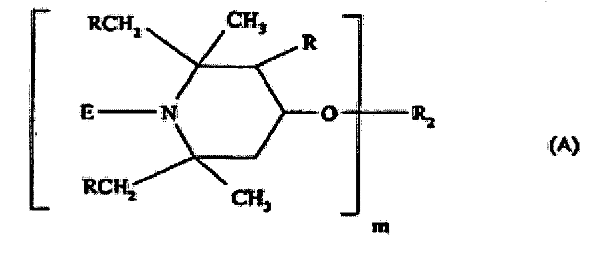 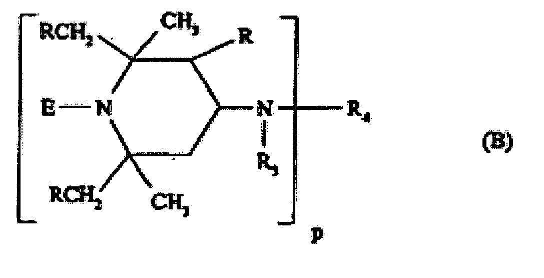 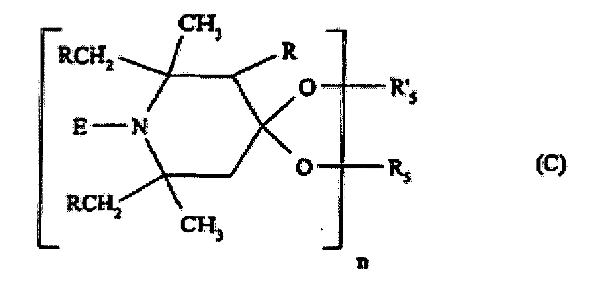 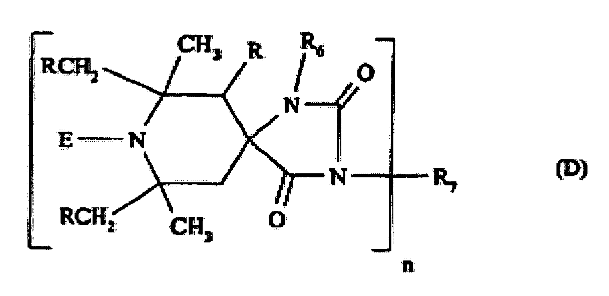 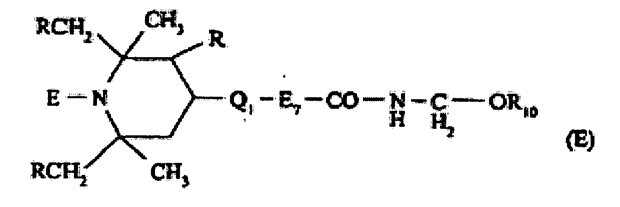 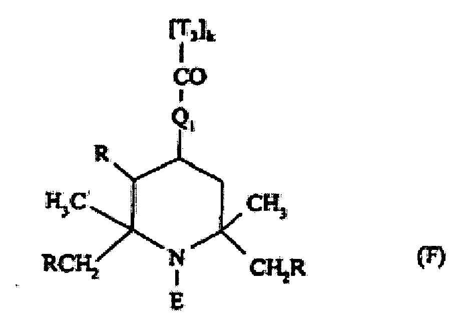 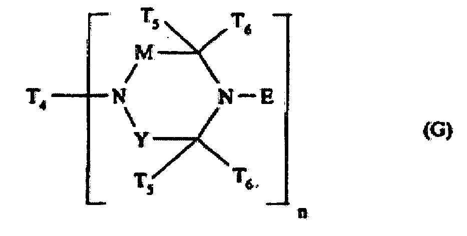 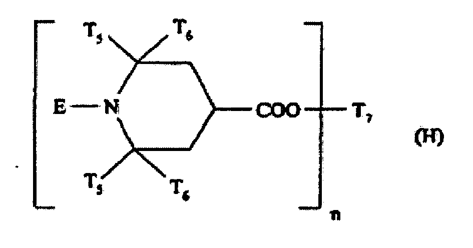 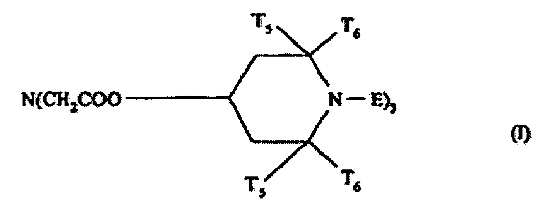 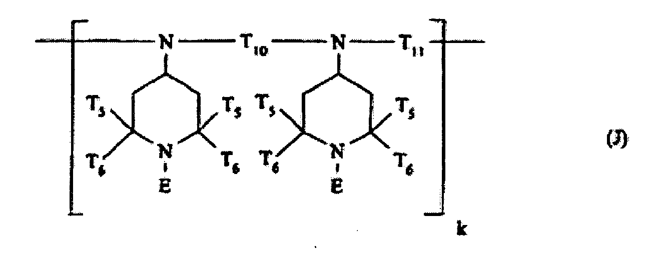 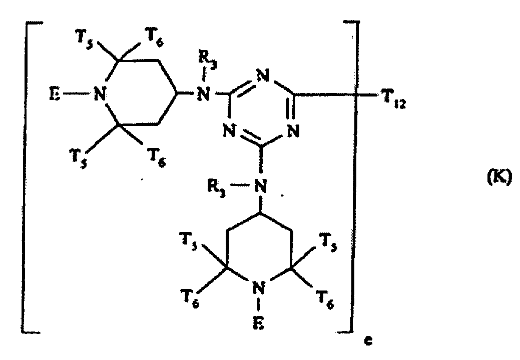 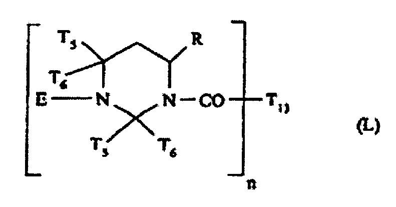 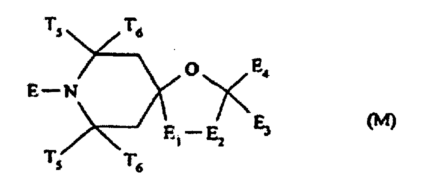 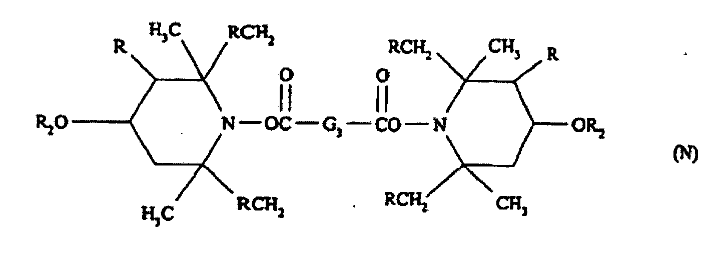 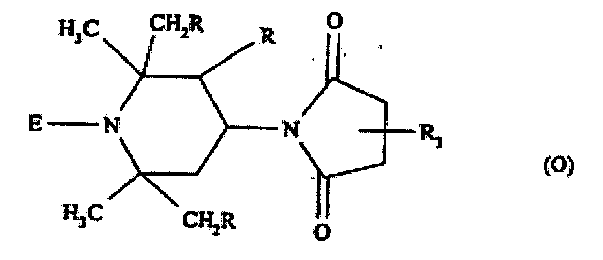 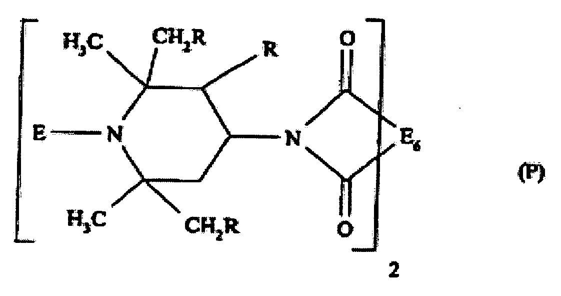 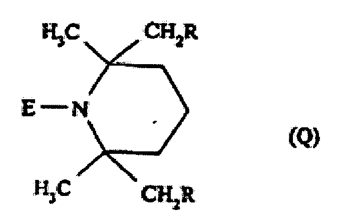 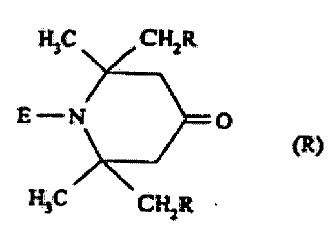 où
E est un groupe oxyle, un groupe hydroxyle, un groupe alcoxy de 1 à 18 atomes de carbone, un groupe cycloalcoxy de 5 à 12 atomes de carbone ou aralcoxy de 7 à 15 atomes de carbone, ou E est -O-T-(OH)_{b},
T est un groupe alkylène à chaîne linéaire ou ramifiée de 1 à 18 atomes de carbone, un groupe cycloalcénylène de 5 à 18 atomes de carbone, un groupe alkylène à chaîne linéaire ou ramifiée de 1 à 4 atomes de carbone substitué par un groupe phényle ou par un groupe phényle substitué à son tour par un ou deux groupes alkyle de 1 à 4 atomes de carbone;
b vaut 1, 2 ou 3 à la condition que b ne dépasse pas le nombre d'atomes de carbone présents dans T, et que si b vaut 2 ou 3, chaque groupe hydroxyle soit lié à un atome de carbone différent de T,
R est un atome d'hydrogène ou un groupe méthyle,
m a pour valeur 1 à 4,
lorsque m vaut 1,
R₂ est un atome d'hydrogène, un groupe alkyle en C₁ à C₁₈ ou ledit groupe alkyle éventuellement interrompu par un ou plusieurs atomes d'oxygène, un groupe alcényle en C₂ à C₁₂, un groupe aryle en C₆ à C₁₀, un groupe aralkyle en C₇ à C₁₈, un groupe glycidyle, un radical acyle monovalent d'un acide aliphatique, cycloaliphatique ou aromatique, ou d'un acide carbamique, d'un acide carboxylique cycloaliphatique ayant de 5 à 12 atomes de carbone ou d'un acide carboxylique aromatique ayant de 7 à 15 atomes de carbone,
ou 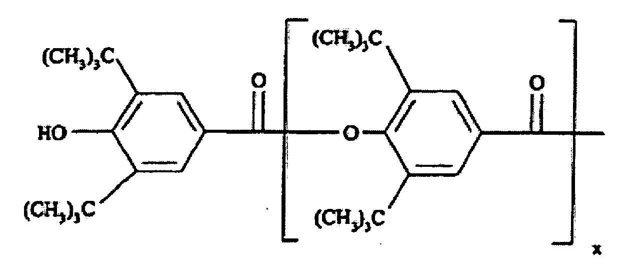 où x vaut 0 ou 1, 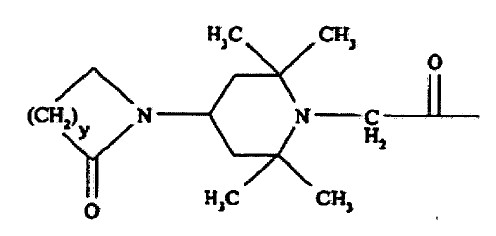 où y a pour valeur 2 à 4;
lorsque m vaut 2,
R₂ est un groupe alkylène en C₁ à C₁₂, alcénylène en C₄ à C₁₂, xylylène, un radical acyle bivalent d'un acide dicarboxylique aliphatique, cycloaliphatique, araliphatique ou aromatique ou d'un acide dicarbamique, d'un acide dicarboxylique aliphatique ayant de 2 à 18 atomes de carbone, d'un acide dicarboxylique cycloaliphatique ou aromatique ayant de 8 à 14 atomes de carbone, ou d'un acide dicarbamique aliphatique, cycloaliphatique ou aromatique ayant de 8 à 14 atomes de carbone; 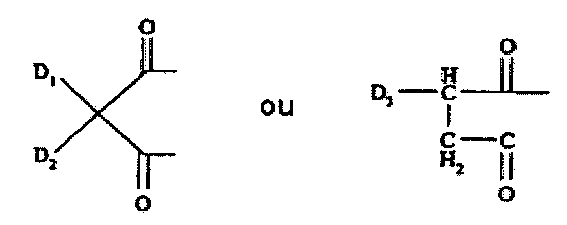 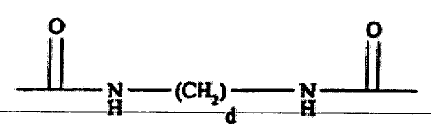 dans laquelle D₁ et D₂ sont indépendamment l'un de l'autre un atome d'hydrogène, un radical alkyle contenant jusqu'à 8 atomes de carbone, un radical aryle ou aralkyle, incluant un radical 3, 5-ditertiobutyl-4-hydroxybenzyle, D₃ est un atome d'hydrogène, ou un radical alkyle ou alcényle contenant jusqu'à 18 atomes de carbone, et d a pour valeur 0 à 20;
lorsque m vaut 3, R₂ est un radical acyle trivalent d'un acide tricarboxylique aliphatique, aliphatique insaturé, cycloaliphatique ou aromatique;
lorsque m vaut 4, R₂ est un radical acyle tétravalent d'un acide tétracarboxylique aliphatique saturé ou insaturé ou aromatique, incluant l'acide 1, 2, 3, 4-butanetétracarboxylique, l'acide 1, 2, 3, 4-but-2-ène-tétracarboxylique, et l'acide 1, 2, 3, 5- et 1, 2, 4, 5-pentanetétracarboxylique;
pvaut1, 2 ou 3,
R₃ est un atome d'hydrogène, un groupe alkyle en C₁ à C₁₂, un groupe cycloalkyle en C₅ à C₇, un groupe aralkyle en C₇ à C₉, un groupe alcoyle en C₂ à C₁₈, un groupe alcénoyle en C₃ à C₅ ou un groupe benzoyle,
lorsque p vaut 1,
R₄ est un atome d'hydrogène, un groupe alkyle en C₁ à C₁₈, un groupe cycloalkyle en C₅ à C₇, un groupe alcényle en C₂ à C₈, éventuellement substitué par un groupe cyano, un groupe carbonyle ou un groupe carbamide, un groupe aryle, aralkyle ou bien il s'agit d'un groupe glycidyle, d'un groupe de formule -CH₂-CH(OH)-Z ou de formule -CO-Z ou -CONH-Z où Z est un atome d'hydrogène, un groupe méthyle ou un groupe phényle; ou encore un groupe selon les formules 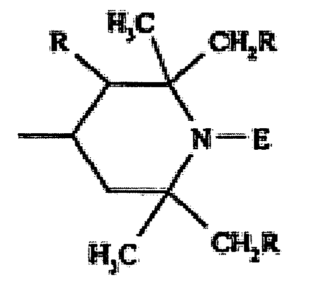 ou 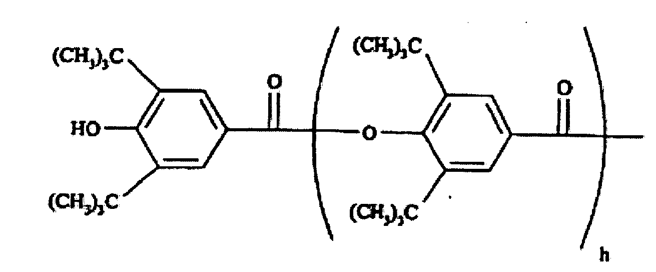 où h vaut 0 ou 1,
R₃ et R₄ peuvent former conjointement, lorsque p vaut 1, un groupe alkylène de 4 à 6 atomes de carbone ou un groupe 2-oxo-polyalkylène, le radical acyle cyclique d'un acide 1, 2- ou 1, 3-dicarboxylique aliphatique ou aromatique,
lorsque p vaut 2,
R₄ est une liaison directe ou est un groupe alkylène en C₁ à C₁₂, un groupe arylène en C₆ à C₁₂, un groupe xylylène, un groupe -CH₂CH(OH)-CH₂ ou un groupe -CH₂-CH(OH)-CH₂-O-X-O-CH₂-CH(OH)-CH₂- où X est un groupe alkylène en C₂ à C₁₀, un groupe arylène en C₆ à C₁₅ ou un groupe cycloalkylène en C₆ à C₁₂; ou bien, pourvu que R₃ ne soit pas un groupe alcoyle, un groupe alcénoyle ou un groupe benzoyle, R₄ peut aussi être un radical acyle bivalent d'un acide dicarboxylique aliphatique, cycloaliphatique ou aromatique ou d'un acide dicarbamique, ou peut être le groupe -CO-; ou
R₄ est 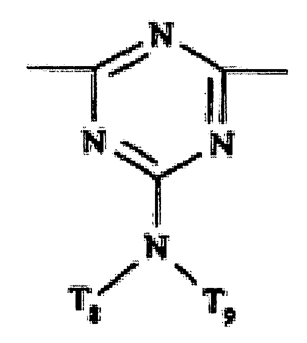 où T₈ et T₉ sont indépendamment l'un de l'autre un atome d'hydrogène, un groupe alkyle ayant de 1 à 18 atomes de carbone, ou T₈ et T₉ forment conjointement un groupe alkylène de 4 à 6 atomes de carbone ou un groupe 3-oxapentaméthylène;
lorsque p vaut 3,
R₄ est un groupe 2, 4, 6-triazinyle,
n vaut 1 ou 2,
lorsque n vaut 1,
R₅ et R'₅ sont indépendamment l'un de l'autre un groupe alkyle en C₁ à C₁₂, alcényle en C₂ à C₁₂, aralkyle en C₇ à C₁₂, ou R₅ est aussi un atome d'hydrogène, ou bien R₅ et R'₅ forment conjointement un groupe alkylène en C₂ à C₈ ou un groupe hydroxyalkylène ou un groupe acyloxyalkylène en C₄ à C₂₂;
lorsque n vaut 2,
R₅ et R'₅ forment conjointement (-CH₂)₂C(CH₂-)₂;
R₆ est un atome d'hydrogène, un groupe alkyle en C₁ à C₁₂, allyle, benzyle, glycidyle ou alcoxyalkyle en C₂ à C₆;
lorsque n vaut 1,
R₇ est un atome d'hydrogène, un groupe alkyle en C₁ à C₁₂, un groupe alcényle en C₃ à C₅, un groupe aralkyle en C₇ à C₉, un groupe cycloalkyle en C₅ à C₇, un groupe hydroxyalkyle en C₂ à C₄, un groupe alcoxyalkyle en C₂ à C₆, un groupe aryle en C₆ à C₁₀, un groupe glycidyle, un groupe de formule -(CH₂)ₜ-COO-Q ou de formule -(CH₂)ₜ-O-CO-Q dans laquelle t vaut 1 ou 2, et Q est un groupe alkyle en C₁ à C₄ ou un groupe phényle, ou
lorsque n vaut 2,
R₇ est un groupe alkylène en C₂ à C₁₂, un groupe arylène en C₆ à C₁₂, un groupe -CH₂CH(OH)-CH₂-O-X-O-CH₂-CH(OH)-CH₂- où X est un groupe alkylène en C₂ à C₁₀, un groupe arylène en C₆ à C₁₅ ou cycloalkylène en C₆ à C₁₂, ou un groupe CH₂CH(OZ')CH₂-(OCH₂₋CH(OZ')CH₂)₂- où Z' est un atome d'hydrogène, un groupe alkyle en C₁ à C₁₈, un groupe allyle, un groupe benzyle, un groupe alcoyle en C₂ à C₁₂ ou un groupe benzoyle;
Q₁ est -N(R₈)- ou -O-; E₇ est un groupe alkylène en C₁ à C₃, le groupe -CH₂-CH(R₉)-O- où R₉ est un atome d'hydrogène, un groupe méthyle ou un groupe phényle, le groupe -(CH₂)₃-NH- ou une liaison directe ;
R₁₀ est un atome d'hydrogène ou un groupe alkyle en C₁ à C₁₈, R₈ est un atome d'hydrogène, un groupe alkyle en C₁ à C₁₈, un groupe cycloalkyle en C₅ à C₇, un groupe aralkyle en C₇ à C₁₂, un groupe cyanoéthyle, un groupe aryle en C₆ à C₁₀, le groupe -CH₂-CH(R₉)-OH où R₉ a le sens défini ci-dessus; un groupe de la formule 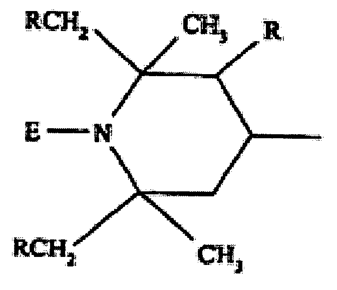 ou un groupe de la formule 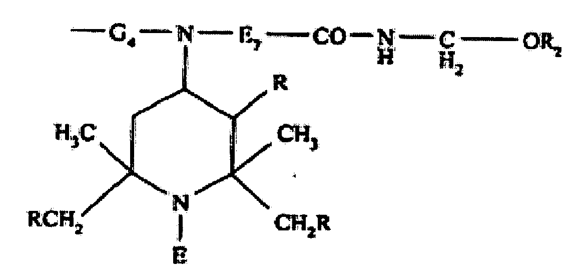 où G₄ est un groupe alkylène en C₂ à C₆ ou un groupe arylène en C₆ à C₁₂; ou R₈ est un groupe -E₇-CO-NH-CH₂-OR₁₀;
la formule F désigne un motif structurel récurrent d'un polymère où T₃ est un groupe éthylène ou un groupe 1, 2-propylène, ou désigne le motif structurel récurrent dérivé d'un copolymère d'une α-oléfine et d'un acrylate ou méthacrylate d'alkyle; et où k a pour valeur 2 à 100;
T₄ a le même sens que R₄ lorsque p vaut 1 ou 2,
T₅ est un groupe méthyle,
T₆ est un groupe méthyle ou un groupe éthyle, ou T₅ et T₆ forment conjointement un groupe tétraméthylène ou pentaméthylène,
M et Y sont indépendamment l'un de l'autre un groupe méthylène ou carbonyle, et T₄ est un groupe éthylène où n vaut 2;
T₇ est identique à R₇,
T₁₀ et T₁₁ sont indépendamment l'un de l'autre un groupe alkylène de 2 à 12 atomes de carbone, ou T₁₁ est 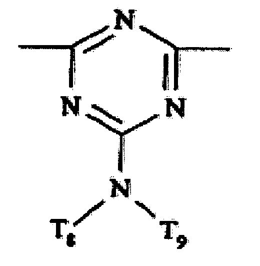 T₁₂ est un groupe pipérazinyle,
-NR₁₁-(CH₂)_{d}-NR₁₁ ou 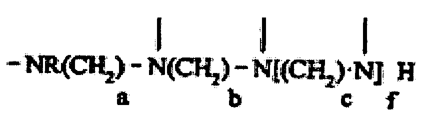 où R₁₁ est identique à R₃ ou est aussi 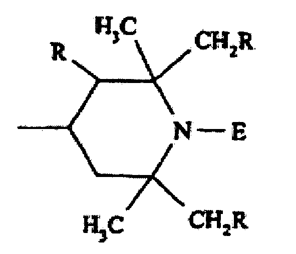 a, b, c valent indépendamment l'un de l'autre 2 ou 3, et f vaut 0 ou 1; et
e vaut 2, 3 ou 4;
T₁₃ est identique à R₂ à la condition que T₁₃ ne soit pas un atome d'hydrogène lorsque n vaut 1,
E₁ et E₂ étant différents, l'un désignant -CO- ou -N(E₅)- lorsque E₆ est un atome d'hydrogène, un groupe alkyle en C₁ à C₁₂ ou alcoxycarbonylalkyle en C₄ à C₂₂,
E₃ est un atome d'hydrogène, un groupe alkyle de 1 à 30 atomes de carbone, un groupe phényle, un groupe naphtyle, ledit groupe phényle ou ledit groupe naphtyle substitué par un atome de chlore ou par un groupe alkyle de 1 à 4 atomes de carbone, ou encore un groupe phénylalkyle de 7 à 12 atomes de carbone, ou ledit groupe phénylalkyle substitué par un groupe alkyle de 1 à 4 atomes de carbone,
E₄ est un atome d'hydrogène, un groupe alkyle de 1 à 30 atomes de carbone, un groupe phényle, un groupe naphtyle, ou un groupe phénylalkyle de 7 à 12 atomes de carbone, ou
E₃ et E₄ forment conjointement un groupe polyméthylène de 4 à 17 atomes de carbone, ou ledit groupe polyméthylène substitué par jusqu'à quatre groupes alkyle de 1 à 4 atomes de carbone,
E₆ est un radical tétravalent aliphatique ou aromatique;
R₂ de formule (N) est tel que défini précédemment lorsque m vaut 1;
G₁ est une liaison directe, un groupe alkylène en C₁ à C₁₂, un groupe phénylène ou -NH-G'-NH où G' est un groupe alkylène en C₁ à C₁₂; ou bien
où l'amine à encombrement stérique est un composé de la formule I, II, III, IV, V, VI, VII, VIII, IX, X ou XI 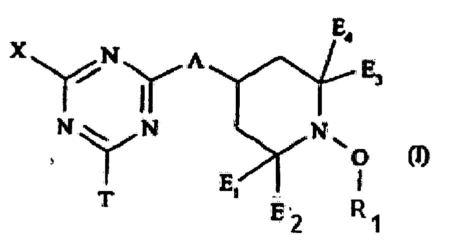 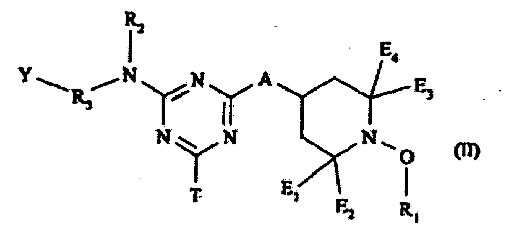 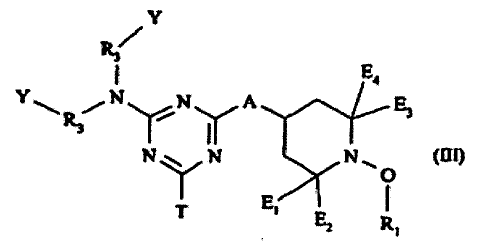 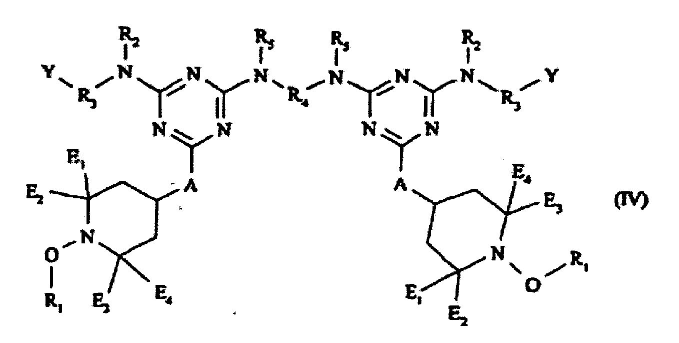 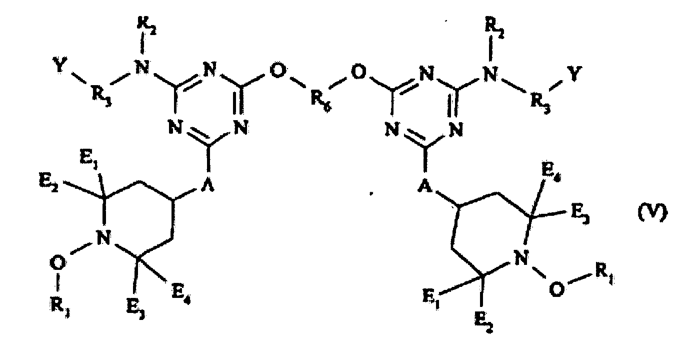 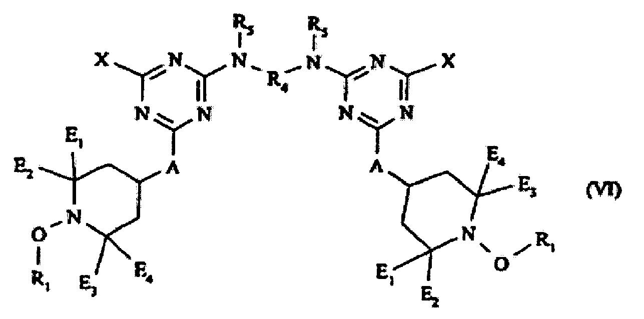 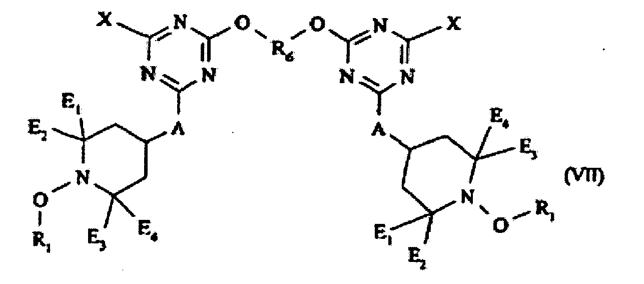 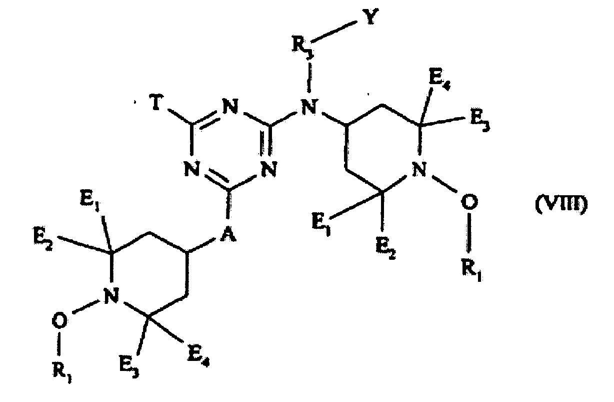 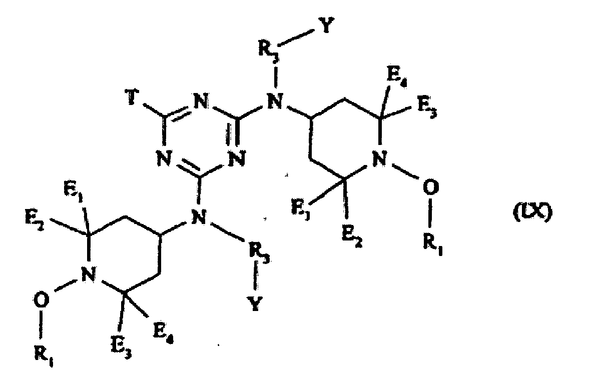 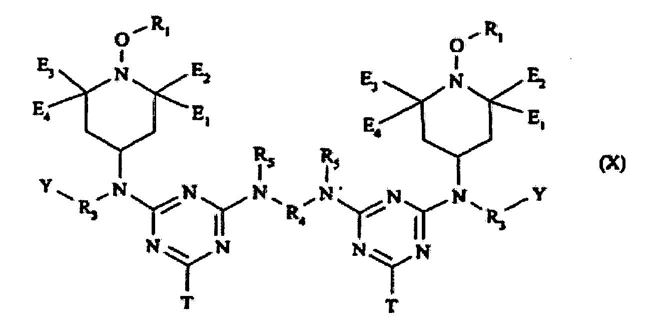 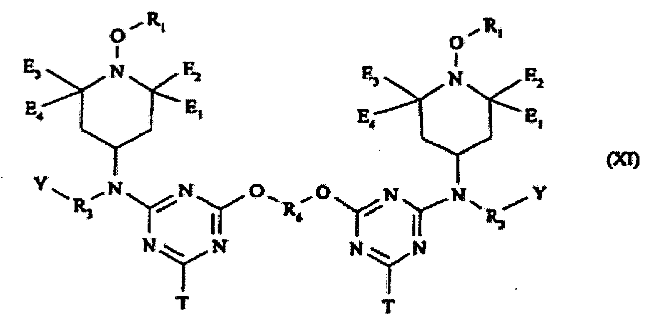 où
E₁, E₂, E₃ et E₄ sont indépendamment l'un de l'autre un groupe alkyle de 1 à 4 atomes de carbone, ou E₁ et E₂ sont indépendamment l'un de l'autre un groupe alkyle de 1 à 4 atomes de carbone et E₃ et E₄ pris conjointement forment un groupe pentaméthylène, ou E₁ et E₂ d'une part; et E₃ et E₄ d'autre part, pris conjointement forment un groupe pentaméthylène,
R₁ est un groupe alkyle de 1 à 18 atomes de carbone, un groupe cycloalkyle de 5 à 12 atomes de carbone, un radical hydrocarboné bicyclique ou tricyclique de 7 à 12 atomes de carbone, un groupe phénylalkyle de 7 à 15 atomes de carbone, un groupe aryle de 6 à 10 atomes de carbone ou ledit groupe aryle substitué par un à trois groupes alkyle de 1 à 8 atomes de carbone,
R₂ est un atome d'hydrogène ou un groupe alkyle à chaîne linéaire ou ramifiée de 1 à 12 atomes de carbone,
R₃ est un groupe alkylène de 1 à 8 atomes de carbone, ou R₃ est -CO-, -CO-R₄-, -CONR₂- ou -CO-NR₂-R₄-,
R₄ est un groupe alkylène de 1 à 8 atomes de carbone,
R₅ est un atome d'hydrogène, un groupe alkyle à chaîne linéaire ou ramifiée de 1 à 12 atomes de carbone, ou 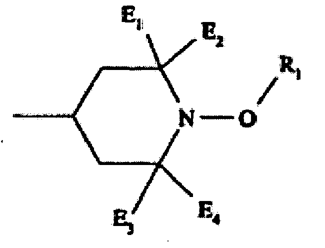 ou lorsque R₄ est un groupe éthylène, deux substituants méthyle R₅ peuvent être liés par une liaison directe de telle sorte que le groupe de pontage triazinique -N(R₅)-R₄-N(R₅)- est un résidu pipérazin-1, 4-diyle,
R₆ est un groupe alkylène de 2 à 8 atomes de carbone ou R₆ est 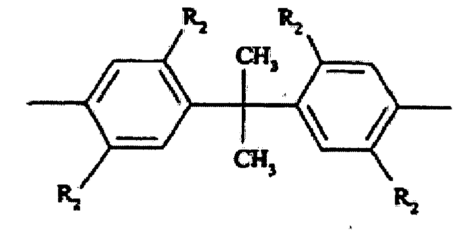 à la condition que Y ne soit pas -OH lorsque R₆ correspond à la formule développée présentée ci-dessus,
A est -O- ou -NR- où R₇ est un atome d'hydrogène, un groupe alkyle à chaîne linéaire ou ramifiée de 1 à 12 atomes de carbone, ou R₇ est 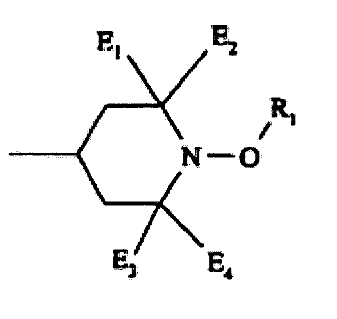 T est un groupe phénoxy, un groupe phénoxy substitué par un ou deux groupes alkyle de 1 à 4 atomes de carbone, un groupe alcoxy de 1 à 18 atomes de carbone ou -N(R₂)₂ dans l'hypothèse ou R₂ n'est un atome d'hydrogène, ou bien T est 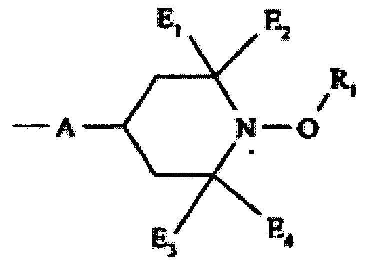 X est -NH₂, -NCO, -OH, -O-glycidyle, ou -NHNH₂, et
Y est -OH, -NH₂, -NHR₂ où R₂ n'est pas un atome d'hydrogène, ou Y est -NCO, -COOH, un groupe oxiranyle, un groupe -O-glycidyle, ou - Si(OR₂)₃; ou l'ensemble R₃-Y- est -CH₂CH(OH)R₂ où R₂ est un groupe alkyle ou ledit groupe alkyle interrompu par un à quatre atomes d'oxygène, ou R₃-Y- est -CH₂OR₂;
ou bien
où l'amine à encombrement stérique est un mélange de N, N', N'''-tris{2, 4-bis[(1-hydrocarbyloxy-2, 2, 6, 6-tétraméthylpipéridin-4-yl) alkylamino]-s-triazin-6-yl}-3, 3'-éthylènediiminodipropylamine; N, N', N"-tris{2, 4-bis[(1-hydrocarbyloxy-2, 2, 6, 6-tétraméthylpipéridin-4-yl)alkylamino]-s-triazin-6-yl}-3, 3'-éthylènediiminodipropylamine, et les dérivés pontés comme décrit par les formules I, II, IIA et III
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-G₁-G₂ (III)
où dans la tétraamine de formule I
R₁ et R₂ sont le résidu s-triazinique E; et l'un des groupes R₃ et R₄ est le résidu s-triazinique E, l'autre groupe R₃ ou R₄ étant un atome d'hydrogène,
E est 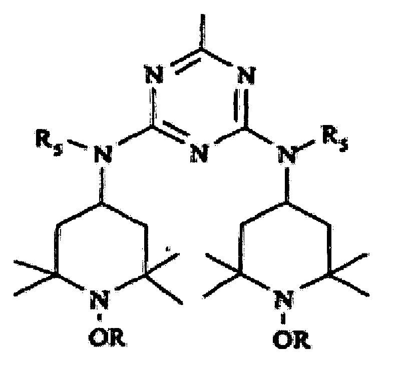 R est un groupe méthyle, propyle, cyclohexyle ou octyle,
R₅ est un groupe alkyle de 1 à 12 atomes de carbone,
où dans le composé de formule II ou IIA lorsque R est un groupe propyle, cyclohexyle ou octyle,
T et T₁ sont chacun une tétraamine substituée par R₁-R₄ tel qu'ils sont définis dans le cas de la formule I, où
(1) l'un des résidus s-triazinique E dans chaque tétraamine est remplacé par le groupe E₁ qui forme un pont entre deux tétraamines T et T₁,
E₁ est 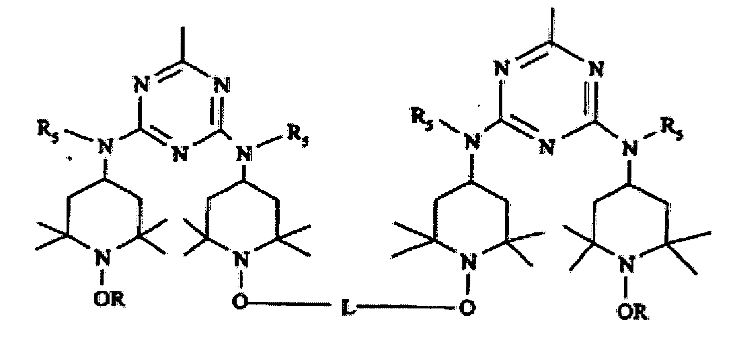 ou
(2) le groupe E peut avoir ses deux extrémités situées dans la même tétraamine T comme dans la formule IIA où deux des résidus E de la tétraamine sont remplacés par un groupe E₁, ou
(3) l'ensemble des trois substituants s-triaziniques de la tétraamine T peuvent être E1 de sorte qu'un groupe E₁ lie T et T₁, et un deuxième groupe E₁ a ses deux extrémités situées dans la tétraamine T,
L est un groupe propanediyle, cyclohexanediyle ou octanediyle;
où dans le composé de formule III
G, G₁ et G₂ sont chacun des tétraamines substituées par R₁-R₄ tels que définis dans la formule I, si ce n'est que G et G₂ ont chacun l'un des résidus s-triaziniques E remplacés par E₁, et G₁ a deux des résidus triaziniques E remplacés par E₁, de sorte qu'il existe un pont entre G et G₁ et un deuxième pont entre G₁ et G₂;
lequel mélange est préparé en faisant réagir deux à quatre équivalents de 2, 4-bis[(1-hydrocarbyloxy-2, 2, 6, 6-tétraméthylpipéridin-4-yl)butylamino]-6-chloro-s-triazine avec un équivalent de N, N'-bis(3-aminopropyl)éthylènediamine;
ou bien l'amine à encombrement stérique est un composé de la formule IIIb 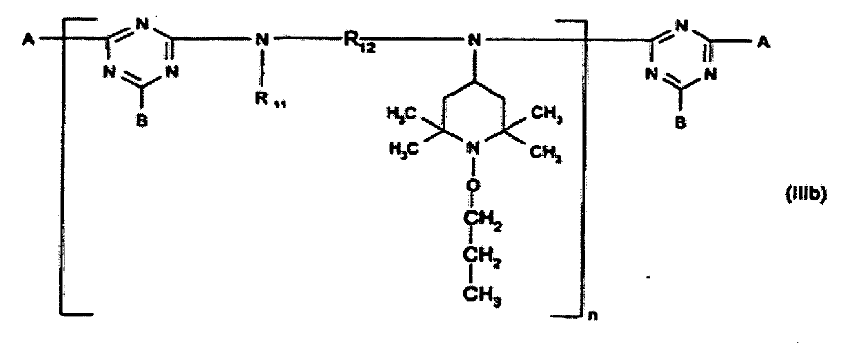 dans laquelle l'indice n varie de 1 à 15;
R₁₂ est un groupe alkylène en C₂ à C₁₂, un groupe alcénylène en C₄ à C₁₂, un groupe cycloalkylène en C₅ à C₇, un groupe cycloalkylène(en C₅ à C₇)-di(alkylène en C₁ à C₄), un groupe alkylène(en C₁ à C₄)di(cycloalkylène en C₅ à C₇), un groupe phénylènedi(alkylène en C₁ à C₄) ou un groupe alkylène en C₄ à C₁₂ interrompu par un groupe 1, 4-pipérazinediyle, -O- ou >N-X₁, X₁ étant un groupe acyle en C₁ à C₁₂ ou un groupe (alcoxy en C₁ à C₁₂)carbonyle ou correspondant à l'une des définitions de R₁₄ données ci-dessous à l'exception de l'atome d'hydrogène, ou R₁₂ est un groupe de la formule (Ib') ou (Ic'); 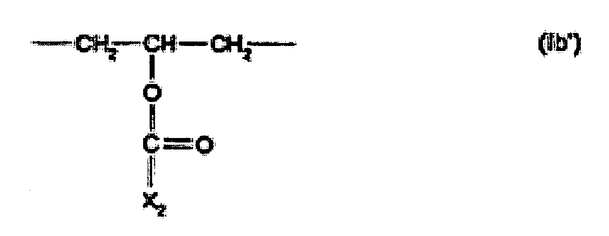 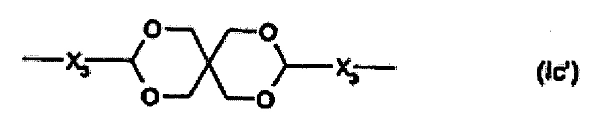 m étant égal à 2 ou 3,
X₂ étant un groupe alkyle en C₁ à C₁₈, un groupe cycloalkyle en C₅ à C₁₂ qui est non substitué ou substitué par 1, 2 ou 3 groupes alkyle en C₁ à C₄; un groupe phényle qui est non substitué ou substitué par 1, 2 ou 3 groupes alkyle en C₁ à C₄ ou groupes alcoxy en C₁ à C₄; un groupe phénylalkyle en C₇ à C₉ qui est éventuellement substitué sur le cycle phényle par 1, 2 ou 3 groupes alkyle en C₁ à C₄; et
les radicaux X₃ étant indépendamment l'un de l'autre un groupe alkylène en C₂ à C₁₂;
R₁₃, R₁₄et R₁₅, qui sont identiques ou différents l'un de l'autre, sont un atome d'hydrogène, un groupe alkyle en C₁ à C₁₈, un groupe cycloalkyle en C₅ à C₁₂ qui est non substitué ou substitué par 1, 2 ou 3 groupes alkyle en C₁ à C₄; un groupe alcényle en C₃ à C₁₈, un groupe phényle qui est non substitué ou substitué par 1, 2 ou 3 groupes alkyle en C₁ à C₄ ou alcoxy en C₁ à C₄; un groupe phénylalkyle(en C₇ à C₉) qui est non substitué ou substitué sur le cycle phényle par 1, 2 ou 3 groupes alkyle en C₁ à C₄; un groupe tétrahydrofurfuryle ou
un groupe alkyle en C₂ à C₄ qui est substitué en position 2, 3 ou 4 par -OH, un groupe alcoxy en C₁ à C₈, un groupe di(alkyl en C₁ à C₄)amino ou un groupe de formule (le'). 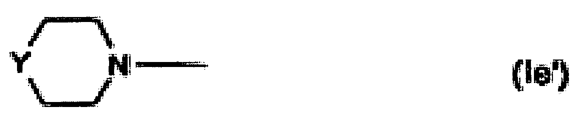 Y étant -O-, -CH₂-, -CH₂CH₂- ou >N-CH₃,
ou -N(R₁₄)(R₁₅) est en outre un groupe de la formule (le');
les radicaux A sont indépendamment l'un de l'autre -OR₁₃, - N(R₁₄)(R₁₅) ou un groupe de la formule (IIId); 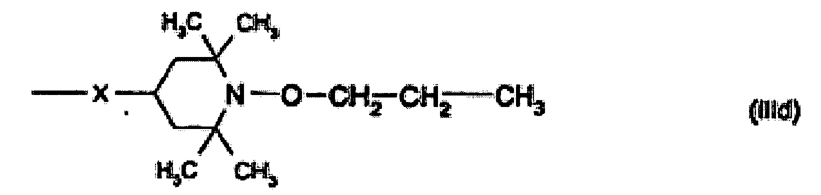 X est -O- ou >N-R₁₆;
R₁₆ est un atome d'hydrogène, un groupe alkyle en C₁ à C₁₈, un groupe alcényle en C₃ à C₁₈, un groupe cycloalkyle en C₅ à C₁₂ qui est éventuellement substitué par 1, 2 ou 3 groupes alkyle en C₁ à C₄, un groupe phénylalkyle en C₇ à C₉ qui est non substitué ou substitué sur le cycle phényle par 1, 2 ou 3 groupes alkyle en C₁ à C₄; un groupe tétrahydrofurfuryle, un groupe de la formule (IIIf), 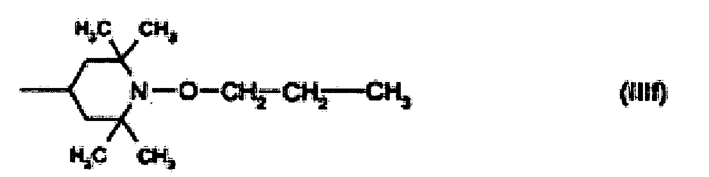 ou bien un groupe alkyle en C₂ à C₄ qui est substitué en position 2, 3 ou 4 par -OH, un groupe alcoxy en C₁ à C₈, un groupe di(alkyl en C₁ à C₄)amino ou encore un groupe de la formule (le');
R₁₁ correspond à l'une des définitions données pour R₁₆; et
les radicaux B correspondent indépendamment l'un de l'autre à l'une des définitions données pour A.

4. Composition selon la revendication 1 dans laquelle les stabilisants de type amine à encombrement stérique du composant (i) sont choisis dans le groupe constitué par
la 1-cyclohexyloxy-2, 2, 6, 6-tétraméthyl-4-octadécyl-amino-pipéridine;
le sébaçate de bis(1-octyloxy-2, 2, 6, 6-tétraméthylpipéridin-4-yle);
la 2, 4-bis[(1-cyclohexyloxy-2, 2, 6, 6-tétraméthylpipéridin-4-yl)butylamino]-6-(2-hydroxyéthylamino)-s-triazine;
l'adipate de bis(1-cyclohexyloxy-2, 2, 6, 6-tétraméthylpipéridin-4-yle);
la 2, 4-bis[(1-cyclohexyloxy-2, 2, 6, 6-tétraméthylpipéridin-4-yl) butylamino]-6-chloro-s-triazine;
la 1-(2-hydroxy-2-méthylpropoxy)-4-hydroxy-2, 2, 6, 6-tétraméthylpipéridine;
la 1-(2-hydroxy-2-méthylpropoxy)-4-oxo-2, 2, 6, 6-tétraméthylpipéridine;
la 1-(2-hydroxy-2-méthylpropoxy)-4-octadécanoyloxy-2, 2, 6, 6-tétraméthylpipéridine;
le sébaçate de bis(1-(2-hydroxy-2-méthylpropoxy)-2, 2, 6, 6-tétraméthylpipéridin-4-yle);
l'adipate de bis(1-(2-hydroxy-2-méthylpropoxy)-2, 2, 6, 6-tétraméthylpipéridin-4-yle);
la 2, 4-bis{N-[1-(2-hydroxy-2-méthylpropoxy)-2, 2, 6, 6-tétraméthylpipéridin-4-yl]-N-butylamino}-6-(2-hydroxyéthylamino)-s-triazine;
le produit issu de la réaction de la 2, 4-bis[(1-cyclohexyloxy-2, 2, 6, 6-tétraméthylpipéridin-4-yl)-butylamino]-6-chloro-s-triazine sur la N, N'-bis(3-aminopropyl) éthylènediamine) et le composé de formule 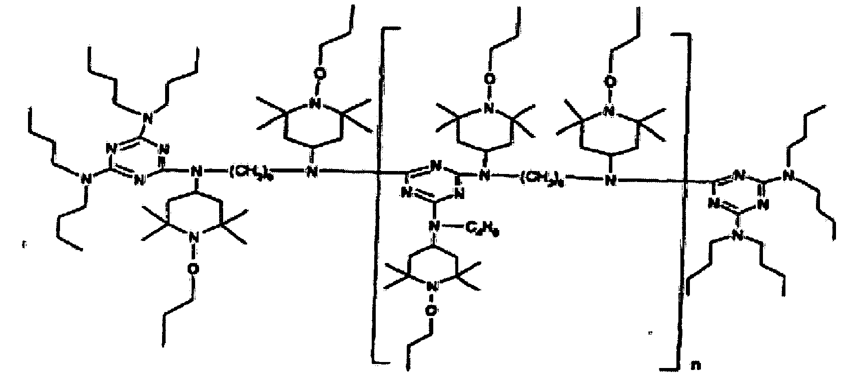 dans laquelle n varie de 1 à 15.

5. Composition selon la revendication 1, dans laquelle les stabilisants de type amine à encombrement stérique du composant (i) sont présents à raison de 0,05 % à 20 % en poids par rapport au poids du substrat en polymère d'acide polylactique.

6. Composition selon la revendication 1, dans laquelle les agents retardateurs de flamme conventionnels du composant (ii) sont choisis dans le groupe constitué par
l'oxyde de diphényle polybrominé,
l'oxyde de décabromodiphényle,
le phosphate de tris[3-bromo-2, 2-bis(bromométhyl)propyle],
le phosphate de tris(2, 3-dibromopropyle),
le phosphate de tris(2, 3-dichloropropyle),
l'acide chlorendique,
l'acide tétrachlorophtalique,
l'acide tétrabromophtalique,
la bis-(N, N'-hydroxyéthyl)tétrachlorphénylènediamine,
un mélange de triphosphonates de poly-β-chloroéthyle,
le tétrabromobisphenol A bis(éther 2, 3-dibromopropylique),
une résine époxy bromurée,
l'éthylène-bis(tétrabromophtalimide),
le bis(hexachlorocyclopentadiéno)cyclooctane,
les paraffines chlorées,
l'éther octabromodiphénylique,
les dérivés d'hexachlorocyclopentadiène
le 1, 2-bis(tribromophénoxy)éthane,
le tétrabromo-bisphénol A,
l'éthylène bis-(dibromo-norbornanedicarboximide),
le bis-(hexachlorocyclopentadiéno)cyclooctane,
le polytétrafluoroéthylène
le tris-(2, 3-dibromopropyl)-isocyanurate, et
l'éthylène-bis-tétrabromophtalimide,
la diphosphite de tétraphénylrésorcinol,
le sulfure de tétrakis(hydroxyméthyl)phosphonium,
le phosphonate de diéthyl-N, N-bis(2-hydroxyéthyl)-aminométhyle,
les esters hydroxyalkyliques des dérivés d'acide phosphorique,
le polyphosphate d'ammonium,
un oligomère de diphosphate de résorcinol,
les agents retardateurs de flamme phosphazéniques,
le diphosphate d'éthylènediamine,
le polyisocyanurate,
les esters d'acide isocyanurique,
les isocyanurates,
les hydroxyalkylisocyanurates,
le cyanurate de mélamine,
le borate de mélamine,
les phosphates de mélamine,
les polyphosphates de mélamine,
les pyrophosphates de mélamine,
l'ammonium polyphosphate de mélamine,
l'ammoniumpyrophosphate de mélamine,
les phosphonates et leurs sels métalliques
les phosphinates et leurs sels métalliques.

7. Composition selon la revendication 1 dans laquelle les agents retardateurs de flamme conventionnels du composant (ii) sont présents en quantité allant de 0,5 % à 45 % en poids par rapport au poids du substrat polymère en acide polylactique.

8. Composition selon la revendication 1 comprenant en outre des capteurs d'acide choisis dans le groupe constitué par les hydrotalcites et les carbonates d'aluminium et de magnésium basiques amorphes.

9. Composition selon la revendication 8 dans laquelle les capteurs d'acide sont présents à raison de 0,1 % à 1,0 % en poids par rapport au poids du substrat polymère en acide polylactique.

10. Composition selon la revendication 1 comprenant un composant supplémentaire choisi dans le groupe constitué par les pigments, les colorants, les agents plastifiants, les agents antioxydants, les agents thixotropes, les agents lissants, les costabilisants basiques, les stabilisants de type nitrone, les stabilisants de type oxyde d'amine, les stabilisants de type benzofuranone, les absorbants UV, les amines à encombrement stérique, les agents passivants de métaux, les oxydes métalliques, les composés organophosphorés, les hydroxylamines, et les mélanges de ceux-ci.

11. Composition selon la revendication 1 comprenant un composant supplémentaire choisi dans le groupe constitué par les agents antioxydants phénoliques, les stabilisants de type stéarate de calcium, stéarate de zinc, phosphite et phosphonite, les stabilisants de type benzofuranone, les absorbants UV des classes 2-(2'-hydroxyphényl)benzotriazole et 2-(2-hydroxyphényl)-1, 3, 5-triazine, et les amines à encombrement stérique.

12. Utilisation d'un mélange synergique
(i) d'au moins un stabilisant de type amine à encombrement stérique et
(ii) d'au moins un agent retardateur de flamme choisi dans le groupe constitué par les agents retardateurs de flamme conventionnels à base de composés organohalogénés, phosphorés, d'isocyanurate et de mélamine pour conférer une photostabilité et un pouvoir retardateur de flamme à un substrat en polymère d'acide polylactique.

13. Procédé pour conférer une photostabilité et un pouvoir retardateur de flamme à un substrat en polymère d'acide polylactique, lequel procédé comprend l'adjonction audit substrat en polymère
(i) d'au moins un stabilisant de type amine à encombrement stérique
(ii) d'au moins un agent retardateur de flamme conventionnel choisi dans le groupe constitué par les agents retardateurs de flamme à base de composés organohalogénés, phosphorés, d'isocyanurate et de mélamine.

14. Article en polymère d'acide polylactique moulé comprenant un substrat en polymère d'acide polylactique et un mélange synergique
(i) d'au moins un stabilisant de type amine à encombrement stérique et
(ii) d'au moins un agent retardateur de flamme conventionnel choisi dans le groupe constitué par les agents retardateurs de flamme à base de composés organohalogénés, phosphorés, d'isocyanurate et de mélamine.
